# EUROPEAN PATENT APPLICATION

(11) **EP 4 823 157 A1**
(43) Date of publication of application: **14.10.2026**
(21) Application number: 24899931.0
(22) Date of filing: 05.12.2024
(51) Int. Cl.: H04W 24/08

(54) **COMMUNICATION METHOD AND RELATED APPARATUS**

(30) Priority: 08.12.2023 CN 202311692570
(71) Applicant: Huawei Technologies Co., Ltd., Shenzhen, Guangdong 518129 (CN)
(72) Inventor: YAN, Mao, Shenzhen, Guangdong 518129 (CN); LIU, Fengwei, Shenzhen, Guangdong 518129 (CN); LI, Gaiyou, Shenzhen, Guangdong 518129 (CN)
(74) Representative: Huawei European IPR
(86) International application number: PCT/CN2024/137251
(87) International publication number: WO 2025/119297

(57) **Abstract**

A communication method and a related apparatus are provided, relating to the field of communication technologies. The method includes: A network device sends P reference signals to a terminal device; the terminal device receives the P reference signals from the network device; the terminal device sends first channel information and/or second channel information to the network device; and the network device receives the first channel information and/or the second channel information from the terminal device. Each of the P reference signals corresponds to N antenna ports, the P reference signals are used to determine the first channel information and/or the second channel information, P is an integer greater than 1, N is an integer greater than 1, the first channel information corresponds to one or more reference signals in the P reference signals, the second channel information corresponds to N×P antenna ports, and the N×P antenna ports correspond to the P reference signals. According to the method, CSI measurement can be performed on CSI-RSs sent in a scenario with a large number of antenna ports, thereby improving CSI measurement performance.

## Description

This application claims priority to Chinese Patent Application No. 202311692570.7, filed with the China National Intellectual Property Administration on December 8, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a communication system of a high frequency band, a base station (and terminals in some frequency bands) usually uses a large-scale array antenna, to counteract a path loss caused by an increase of a frequency band by using a high array gain, and improve a coverage capability. From the perspective of implementation of the base station, for large arrays operating at different frequency bands and having different array scales, array weighting manners (that is, different beamforming manners) are roughly classified based on beamforming implementation solutions into three types: digital beamforming (digital beamforming, DBF), analog beamforming (analog beamforming, ABF), and hybrid beamforming (hybrid beamforming, HBF). A structure of ABF is that each antenna element or each group of antenna elements is directly connected to a digital channel. A basic structure of DBF is that each antenna element or each group of antenna elements is connected to an analog phase shifter, and then a plurality of antenna elements are combined in analog domain and then converted by a digital-to-analog/analog-to-digital converter. A structure of HBF is an intermediate form between ABF and DBF. In HBF, a specific number of digital ports support DBF, and each digital port drives an ABF subarray. In an HBF architecture, there is an analog beam, and signal quality is better only when the beam is aligned with a communication target.

Currently, a base station usually sends channel state information-reference signals (channel state information reference signal, CSI-RS) by using different analog beam weights, and a terminal separately measures the reference signals and feeds back measurement results of channel state information (channel state information reference signal, CSI) of the reference signals, to assist the base station in determining a beam with best quality.

However, in the HBF architecture, due to a limitation of a measurement capability of a terminal device, CSI measurement cannot be performed on CSI-RSs sent in a scenario with a large number of antenna ports. As a result, CSI measurement performance is poor.

### SUMMARY

Embodiments of this application provide a communication method and a related apparatus, to support CSI measurement performed on CSI-RSs sent in a scenario with a large number of antenna ports, thereby improving CSI measurement performance.

According to a first aspect, an embodiment of this application provides a communication method. It may be understood that the method may be performed by a communication apparatus, and the communication apparatus may be a network device, or may be a chip (system) or a circuit used for the network device. This is not limited in this application. The method includes:
sending P reference signals to a terminal device, where each of the P reference signals corresponds to N antenna ports, the P reference signals are used to determine first channel information and/or second channel information, P is an integer greater than 1, N is an integer greater than 1, the first channel information corresponds to one or more reference signals in the P reference signals, the second channel information corresponds to N×P antenna ports, and the N×P antenna ports correspond to the P reference signals; and
receiving the first channel information and/or the second channel information from the terminal device.

In embodiments of this application, a communication method is provided. A network device sends the P reference signals to the terminal device, and correspondingly, the terminal device receives the P reference signals from the network device; and the terminal device sends the first channel information and/or the second channel information to the network device, and correspondingly, the network device receives the first channel information and/or the second channel information from the terminal device. The network device and/or the terminal device herein may alternatively be a processor/chip/circuit that may be configured to execute computer-executable instructions. This is not limited in embodiments of this application.

In embodiments of this application, each of the P reference signals corresponds to the N antenna ports, the P reference signals are used to determine the first channel information and/or the second channel information, the first channel information corresponds to the one or more reference signals in the P reference signals, the second channel information corresponds to the N×P antenna ports, and the N×P antenna ports correspond to the P reference signals.

It may be understood that the P reference signals may be specifically CSI-RSs, the P reference signals are sent on corresponding P time-frequency resources, and there is a constraint relationship between the P time-frequency resources, for example, a constraint relationship based on an orthogonal cover code (orthogonal cover code, OCC). That is, it may be understood that the P reference signals are sent on the corresponding P time-frequency resources in an OCC manner. Because each reference signal corresponds to the N antenna ports, the P reference signals sent on the corresponding P time-frequency resources in the OCC manner may be correspondingly mapped to the N×P antenna ports. It may be understood that the OCC is a possible implementation of the constraint relationship, and another possible constraint relationship also falls within the protection scope of embodiments of this application. For brevity of description, the following uses the OCC constraint relationship as an example for description. This should not be construed as a limitation on embodiments of this application. Correspondingly, the terminal device may obtain, by measuring the one or more reference signals in the corresponding P reference signals on the P time-frequency resources having the constraint relationship, the first channel information corresponding to the one or more reference signals in the P reference signals, or may obtain the second channel information corresponding to the N×P antenna ports corresponding to the P reference signals. Specifically, dynamic CSI measurement may be performed based on the constraint relationship between the P time-frequency resources in different communication scenarios, and different measurement results are selected. This is not limited in this application. For example, in a communication scenario of a single transmission and reception point (transmission and reception point, TRP) (or a plurality of TRPs), if a CSI measurement capability of the terminal device is strong, a requirement of CSI measurement performance can be met only by obtaining the first channel information corresponding to the one or more reference signals in the P reference signals. In a communication scenario of a single TRP, if a CSI measurement capability of the terminal device is poor, a requirement of CSI measurement performance can be met by obtaining the second channel information corresponding to the N×P antenna ports corresponding to the P reference signals.

It may be understood that different numbers of ports have different requirements on a measurement calculation amount, feedback overheads, resource overheads, and the like. Therefore, CSI measurement performed when the number of ports of each resource is fixed and/or the number of reference signal resources is fixed, and a total number of ports is fixed has poor CSI measurement performance.

However, in embodiments of this application, compared with obtaining the first channel information corresponding to the one or more reference signals in the P reference signals, when the terminal device obtains, after performing dynamic CSI measurement, the second channel information corresponding to the N×P antenna ports corresponding to the P reference signals, the terminal device can obtain more channel information. This is equivalent to that the terminal device can support CSI measurement performed on CSI-RSs sent in a scenario with a large number of antenna ports, thereby improving CSI measurement performance.

In a possible implementation, there is a mapping relationship between the N×P antenna ports and the P reference signals, and the mapping relationship is determined by P weight coefficients corresponding to the P reference signals.

In a possible implementation, indexes of the N×P antenna ports are p'=3000+n', where n' is related to at least one of the following:
a first dimension N₁ of the N antenna ports, a second dimension N₂ of the N antenna ports, port indexes p = 3000 + n of the N antenna ports, a first extension factor K₁ of the N×P antenna ports, a second extension factor K₂ of the N×P antenna ports, a first spacing factor Y₁ of the N×P antenna ports, a second spacing factor Y₂ of the N×P antenna ports, a weight coefficient in a j^{th} row of a weight matrix formed by the P weight coefficients, and a j^{th} weight coefficient in the P weight coefficients, where n = 0, 1, ... , 2 × N₁ × N₂ - 1.

It may be understood that the weight matrix formed by the P weight coefficients in this implementation of this application may be a full rank matrix.

In a possible implementation, n' meets the following relationship: $n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+{K}_{2}\times \left(j {modK}_{2}\right)\right) .$

mod represents a remainder obtained by performing a division operation on two numerical expressions, and └ ┘ represents rounding down.

In a possible implementation, n' meets the following relationship: $n ′ = \left(\left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+\left⌊\frac{j}{{K}_{2}}\right⌋\times {Y}_{1}\right)\times {K}_{2}\times {N}_{2}\right) + \left(\left(n {modN}_{2}\right)+\left(j {modK}_{2}\right)\times {Y}_{2}\right) .$

mod represents a remainder obtained by performing a division operation on two numerical expressions, and └ ┘ represents rounding down.

In a possible implementation, n' meets the following relationship: $n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+{Y}_{2}\times \left(j {modK}_{2}\right)\right) .$

mod represents a remainder obtained by performing a division operation on two numerical expressions, and └ ┘ represents rounding down.

In a possible implementation, n' meets the following relationship: $n ′ = \left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+{Y}_{1}\times \left⌊\frac{j}{{K}_{2}}\right⌋\right) \times {K}_{2} \times {N}_{2} + \left(\left(n {modN}_{2}\right)\times {K}_{2}+\left(j {modK}_{2}\right)\right) .$

mod represents a remainder obtained by performing a division operation on two numerical expressions, and └ ┘ represents rounding down.

In a possible implementation, a first dimension of the N antenna ports is N₁, and a second dimension of the N antenna ports is N₂, where N=2×N₁×N₂.

A first dimension of the N×P antenna ports is K₁×N₁, and a second dimension of the N×P antenna ports is K₂×N₂, where K₁=P, and K₂=1.

Alternatively, a first dimension of the N×P antenna ports is K₁×N₁, and a second dimension of the N×P antenna ports is K₂×N₂, where K₁=1, and K₂=P.

Alternatively, a first dimension of the N×P antenna ports is K₁×N₁, and a second dimension of the N×P antenna ports is K₂×N₂, where K₁×K₂=P.

In an implementation of this application, a possible specific implementation of the N×P antenna ports is provided. Specifically, the first dimension of the N antenna ports corresponding to each of the P reference signals is N₁, and the second dimension of the N antenna ports corresponding to each of the P reference signals is N₂, where N₁ represents the number of logical antenna ports in a direction of same polarization, and is usually in a horizontal direction, and N₂ represents the number of logical antenna ports in the other direction of the same polarization, and is usually in a vertical direction. It may be understood that N₁ and N₂ are two mutually perpendicular dimensions and meet the following relationship: N=2×N₁×N₂. However, the P reference signals sent on the corresponding P time-frequency resources in a constraint manner (for example, an OCC) may result in a plurality of different arrangement manners for the mapped N×P antenna ports. For example, an original arrangement of the N antenna ports is extended by K₁ times in the first dimension (that is, a horizontal direction). In this case, a first dimension of the N×P antenna ports is K₁×N₁, and a second dimension of the N×P antenna ports is K₂×N₂, where K₁=P, and K₂=1. For another example, an original arrangement of the N antenna ports is extended by K₂ times in the second dimension (that is, a vertical direction). In this case, a first dimension of the N×P antenna ports is K₁×N₁, and a second dimension of the N×P antenna ports is K₂×N₂, where K₁=1, and K₂=P. For another example, an original arrangement of the N antenna ports is extended by K₁ times in the first dimension (that is, a horizontal direction) and K₂ times in the second dimension (that is, a vertical direction). In this case, a first dimension of the N×P antenna ports is K₁×N₁, and a second dimension of the N×P antenna ports is K₂×N₂, where K₁×K₂=P. In embodiments of this application, the P reference signals are sent on the P time-frequency resources in the constraint manner (for example, the OCC), so that dynamic extension of the N×P antenna ports, and dynamic CSI measurement and channel information feedback of the terminal device can be implemented.

In a possible implementation, K₁=2, and K₂=1.

Alternatively, K₁=1, and K₂=2.

Alternatively, K₁=4, and K₂=1.

Alternatively, K₁=2, and K₂=2.

Alternatively, K₁=1, and K₂=4.

Alternatively, K₁=8, and K₂=1.

Alternatively, K₁=4, and K₂=2.

Alternatively, K₁=2, and K₂=4.

Alternatively, K₁=1, and K₂=8.

In an implementation of this application, a possible specific implementation of the N×P antenna ports is provided. Specifically, when two reference signals are sent on two time-frequency resources in a constraint manner (for example, an OCC) and are correspondingly mapped to 2N antenna ports, the 2N antenna ports may be obtained by extending an original arrangement of the N antenna ports by K₁=2 times in the first dimension (that is, a horizontal direction), or may be obtained by extending an original arrangement of the N antenna ports by K₂=2 times in the second dimension (that is, a vertical direction). When four reference signals are sent on four time-frequency resources in a constraint manner (for example, an OCC) and are mapped to 4N antenna ports, the 4N antenna ports may be obtained by extending an original arrangement of the N antenna ports by K₁=4 times in the first dimension (that is, a horizontal direction), may be obtained by extending an original arrangement of the N antenna ports by K₂=4 times in the second dimension (that is, a vertical direction), or may be obtained by extending an original arrangement of the N antenna ports by K₁=2 times in the first dimension (that is, a horizontal direction) and K₂=2 times in the second dimension (that is, a vertical direction). When eight reference signals are sent on eight time-frequency resources in a constraint manner (for example, an OCC) and are mapped to 8N antenna ports, the 8N antenna ports may be obtained by extending an original arrangement of the N antenna ports by K₁=8 times in the first dimension (that is, a horizontal direction), may be obtained by extending an original arrangement of the N antenna ports by K₂=8 times in the second dimension (that is, a vertical direction), may be obtained by extending an original arrangement of the N antenna ports by K₁=2 times in the first dimension (that is, a horizontal direction) and K₂=4 times in the second dimension (that is, a vertical direction), or may be obtained by extending an original arrangement of the N antenna ports by K₁=4 times in the first dimension (that is, a horizontal direction) and K₂=2 times in the second dimension (that is, a vertical direction). In embodiments of this application, the P reference signals are sent on the P time-frequency resources in the constraint manner (for example, the OCC), so that dynamic extension of the N×P antenna ports, and dynamic CSI measurement and channel information feedback of the terminal device can be implemented.

In a possible implementation, the second channel information is determined by using the following parameters: ${u}_{m} = \left\{\begin{matrix}\left[1 {e}^{\frac{j 2 πm}{{N}_{2} {O}_{2} {K}_{2}}} … {e}^{\frac{j 2 π \left({N}_{2}-1\right) m}{{N}_{2} {O}_{2} {K}_{2}}}\right] ; {N}_{2} > 1 ; \\ 1 ; {N}_{2} = 1\end{matrix}\right.$ and ${v}_{l , m} = \left[{u}_{m} {u}_{m}{e}^{\frac{j 2 πl}{{N}_{1} {O}_{1} {K}_{1}}} ⋯ {u}_{m}{e}^{\frac{j 2 π \left({N}_{1}-1\right) l}{{N}_{1} {O}_{1} {K}_{1}}}\right] .$

l ∈ [0, N₁O₁K₁ - 1], m ∈ [0, N₁O₁K₁ - 1], uₘ represents a beam weight corresponding to a beam whose second dimension is m, v_{l,m} represents a beam weight corresponding to a beam whose first dimension is l and second dimension is m, O₁ represents an oversampling multiple in the first dimension, O₂ represents an oversampling multiple in the second dimension, and e is a natural constant.

In an implementation of this application, a possible specific implementation of determining the second channel information is provided. Specifically, based on a weight vector of a beam whose first dimension is l and second dimension is m and that corresponds to the N antenna ports and that is defined in an original protocol, an extension multiple K₁ of the N×P antenna ports in the first dimension (that is, the horizontal direction) and an extension multiple K₂ of the N×P antenna ports in the second dimension (that is, the vertical direction) are introduced, so that a weight vector (that is, a beam weight) of a beam whose first dimension is l and second dimension is m and that corresponds to the N×P antenna ports can be obtained, thereby improving CSI measurement performance.

In a possible implementation, there is a coupling relationship between P weight coefficients corresponding to the P reference signals.

In an implementation of this application, a possible specific implementation of the P weight coefficients corresponding to the P reference signals is provided. Specifically, there is a coupling relationship between the P weight coefficients corresponding to the P reference signals. Optionally, the coupling relationship may also be considered as an OCC constraint relationship, so that the P reference signals are sent on the corresponding P time-frequency resources in the OCC manner. In this way, the terminal device may perform dynamic CSI measurement based on the coupling relationship between the P weight coefficients in different communication scenarios, to obtain more channel information, and support CSI measurement performed on CSI-RSs sent in a scenario with a large number of antenna ports, thereby improving CSI measurement performance.

In a possible implementation, when P=2, a first weight coefficient in the P weight coefficients is (+1, +1), and a second weight coefficient in the P weight coefficients is (+1, -1).

Alternatively, the first weight coefficient is (1, 0), and the second weight coefficient is (0, 1).

Alternatively, the first weight coefficient is (1, i), and the second weight coefficient is (1, -i), where i is an imaginary unit.

In an implementation of this application, a possible specific implementation of the coupling relationship between the P weight coefficients is provided. Specifically, the coupling relationship between the P weight coefficients may be limited in a form of +1 and -1, to implement orthogonality between the P weight coefficients. For example, when P=2, the first weight coefficient in the P weight coefficients is (+1, +1), indicating that a reference signal is sent on a transceiver channel on a first time-frequency resource in a form of (+1, +1), and the second weight coefficient in the P weight coefficients is (+1, -1), indicating that a reference signal is sent on a transceiver channel on a second time-frequency resource in a form of (+1, -1). In this case, there is an orthogonal relationship between the first weight coefficient and the second weight coefficient. Similarly, an orthogonal relationship may also be implemented between other weight coefficients in the P weight coefficients in the form of +1 and -1. Alternatively, the coupling relationship between the P weight coefficients may be limited in a form of 1 and 0. For example, when P=2, the first weight coefficient in the P weight coefficients is (1, 0), indicating that a reference signal is sent on a transceiver channel on a first time-frequency resource in a form of (1, 0), and the second weight coefficient in the P weight coefficients is (0, 1), indicating that a reference signal is sent on a transceiver channel on a second time-frequency resource in a form of (0, 1). Similarly, a coupling relationship may also be implemented between other weight coefficients in the P weight coefficients in the form of 1 and 0. Alternatively, the coupling relationship between the P weight coefficients may be limited in a form of 1 and i. For example, when P=2, the first weight coefficient in the P weight coefficients is (1, i), indicating that a reference signal is sent on a transceiver channel on a first time-frequency resource in a form of (1, i), and the second weight coefficient in the P weight coefficients is (1, -i), indicating that a reference signal is sent on a transceiver channel on a second time-frequency resource in a form of (1, -i). In this case, the weight coefficients are full rank but not orthogonal. Similarly, a coupling relationship may also be implemented between other weight coefficients in the P weight coefficients in the form of 1 and i. According to the coupling relationship between the P weight coefficients in embodiments of this application, the terminal device can perform dynamic CSI measurement based on the coupling relationship between the P weight coefficients in different communication scenarios, to obtain more channel information, and support CSI measurement performed on CSI-RSs sent in a scenario with a large number of antenna ports, thereby improving CSI measurement performance.

In a possible implementation, the first channel information is carried in first information, and the first information further includes one or more first channel state information-reference signal resource indicators (CSI-RS resource indicator, CRI) corresponding to the one or more reference signals in the P reference signals.

In an implementation of this application, a possible specific implementation of the first information is provided. Specifically, the first channel information is carried in the first information, and the first information further includes the first CRIs corresponding to the one or more reference signals in the P reference signals. In this case, the first information includes channel information corresponding to the first CRIs, that is, channel information corresponding to the one or more reference signals in the P reference signals. According to embodiments of this application, the terminal device may perform dynamic CSI measurement, and select to report a first CRI and channel information corresponding to the first CRI, thereby improving CSI measurement performance.

In a possible implementation, the second channel information is carried in second information, the second information further includes a second CRI, and there is a mapping relationship between the second CRI and P first CRIs corresponding to the P reference signals.

In an implementation of this application, a possible specific implementation of the second information is provided. Specifically, the second channel information is carried in the second information, the second information further includes the second CRI, and there is a mapping relationship between the second CRI and a plurality of first CRIs corresponding to the P reference signals. It may be understood that the plurality of first CRIs are mapped to the second CRI. In other words, the second CRI may be understood as a joint identifier of the plurality of first CRIs. In this case, the second information includes channel information corresponding to the second CRI, that is, channel information corresponding to the N×P antenna ports corresponding to the P reference signals. According to embodiments of this application, the terminal device may perform dynamic CSI measurement, and select to report a second CRI and channel information corresponding to the second CRI, to obtain more channel information. This is equivalent to that the terminal device can support CSI measurement performed on CSI-RSs sent in a scenario with a large number of antenna ports, thereby improving CSI measurement performance.

In a possible implementation, the second CRI is preconfigured by a network device.

Alternatively, the second CRI is determined by the terminal device, and the second information further includes the plurality of first CRIs corresponding to the second CRI.

In an implementation of this application, a possible specific implementation of configuring the second CRI is provided. Specifically, the second CRI may be preconfigured by the network device. In this case, the network device further configures the plurality of first CRIs corresponding to the second CRI. Correspondingly, the terminal device reports the second CRI and the channel information corresponding to the second CRI. Alternatively, the second CRI may be determined by the terminal device. In this case, the terminal device needs to report the second CRI and the channel information corresponding to the second CRI, and the plurality of first CRIs corresponding to the second CRI. According to embodiments of this application, the terminal device may perform dynamic CSI measurement, and select to report a second CRI and channel information corresponding to the second CRI, to obtain more channel information. This is equivalent to that the terminal device can support CSI measurement performed on CSI-RSs sent in a scenario with a large number of antenna ports, thereby improving CSI measurement performance.

In a possible implementation, the first extension factor K₁ and/or the second extension factor K₂ are/is indicated by using first indication information sent by the network device to the terminal device.

Optionally, the method further includes:
sending the first indication information to the terminal device, where the first indication information indicates K₁ and/or K₂, and K₁ and/or K₂ are/is related to P.

In an implementation of this application, a possible specific implementation of indicating K₁ and/or K₂ is provided. Specifically, the network device sends the first indication information to the terminal device, and correspondingly, the terminal device receives the first indication information from the network device, where the first indication information indicates K₁ and/or K₂, and K₁ and/or K₂ are/is related to a number P of sent reference signals. According to embodiments of this application, the network device may configure K₁ and/or K₂, and indicate K₁ and/or K₂ to the terminal device, to implement dynamic extension of the N×P antenna ports, and dynamic CSI measurement and channel information feedback of the terminal device.

In a possible implementation, the first extension factor K₁ and/or the second extension factor K₂ are/is determined based on a reference signal measurement result of the terminal device, K₁ is less than or equal to a first value, K₂ is less than or equal to a second value, and the first value and/or the second value are/is indicated by using second indication information sent by the network device to the terminal device.

Optionally, the method further includes:
sending the second indication information to the terminal device, where the second indication information indicates the first value and/or the second value; and
receiving K₁ and/or K₂ from the terminal device, where K₁ is less than or equal to the first value, K₂ is less than or equal to the second value, and K₁ and/or K₂ are/is determined based on the reference signal measurement result of the terminal device.

In an implementation of this application, a possible specific implementation of indicating K₁ and/or K₂ is provided. Specifically, the network device sends the second indication information to the terminal device, and correspondingly, the terminal device receives the second indication information from the network device; and the terminal device sends K₁ and/or K₂ to the network device, and correspondingly, the network device receives K₁ and/or K₂ from the terminal device. The second indication information indicates the first value and/or the second value. The first value may be understood as a maximum value allowed by K₁, and the second value may be understood as a maximum value allowed by K₂. K₁ is less than or equal to the first value, K₂ is less than or equal to the second value, and K₁ and/or K₂ are/is determined based on the reference signal measurement result of the terminal device. It may be understood that the network device configures the first value and/or the second value, and indicates the first value and/or the second value to the terminal device; and the terminal device determines, based on the reference signal measurement result, K₁ that is less than or equal to the first value and K₂ that is less than or equal to the second value, and indicates the configured K₁ and/or the configured K₂ to the network device, to implement dynamic extension of the N×P antenna ports, and dynamic CSI measurement and channel information feedback of the terminal device.

In a possible implementation, the indexes of the N×P antenna ports are indicated by using third indication information sent by the network device to the terminal device in an arrangement order of first the second dimension and then the first dimension.

Optionally, the method further includes:
sending the third indication information to the terminal device, where the third indication information indicates that the indexes of the N×P antenna ports are arranged in the order of first the second dimension and then the first dimension.

In an implementation of this application, a possible specific implementation of the N×P antenna ports is provided. Specifically, the network device sends the third indication information to the terminal device, and correspondingly, the terminal device receives the third indication information from the network device. The third indication information indicates the arrangement order of the indexes of the N×P antenna ports, and specifically, the indexes are arranged in an ascending order of first the second dimension (that is, the vertical direction) and then the first dimension (that is, the horizontal direction). According to embodiments of this application, the indexes of the N×P antenna ports obtained through extension may be arranged, to establish a mapping relationship between the N×P antenna ports and corresponding beams.

According to a second aspect, an embodiment of this application provides a communication method. It may be understood that the method may be performed by a communication apparatus, and the communication apparatus may be a terminal device, or may be a chip (system) or a circuit used for the terminal device. This is not limited in this application. The method includes:
receiving P reference signals from a network device, where each of the P reference signals corresponds to N antenna ports, P is an integer greater than 1, and N is an integer greater than 1;
measuring one or more reference signals in the P reference signals, to obtain first channel information and/or second channel information, where the first channel information corresponds to the one or more reference signals in the P reference signals, the second channel information corresponds to N×P antenna ports, and the N×P antenna ports correspond to the P reference signals; and
sending the first channel information and/or the second channel information to the network device.

In embodiments of this application, a communication method is provided. In the method, the network device sends the P reference signals to a terminal device, and correspondingly, the terminal device receives the P reference signals from the network device; and the terminal device measures the one or more reference signals in the P reference signals, to obtain the first channel information and/or the second channel information, and sends the first channel information and/or the second channel information to the network device, and correspondingly, the network device receives the first channel information and/or the second channel information from the terminal device. The network device and/or the terminal device herein may alternatively be a processor/chip/circuit that may be configured to execute computer-executable instructions. This is not limited in embodiments of this application.

In embodiments of this application, each of the P reference signals corresponds to the N antenna ports, the P reference signals are used to determine the first channel information and/or the second channel information, the first channel information corresponds to the one or more reference signals in the P reference signals, the second channel information corresponds to the N×P antenna ports, and the N×P antenna ports correspond to the P reference signals.

It may be understood that the P reference signals may be specifically CSI-RSs, the P reference signals are sent on corresponding P time-frequency resources, and there is a constraint relationship between the P time-frequency resources, for example, a constraint relationship based on an orthogonal cover code (orthogonal cover code, OCC). That is, it may be understood that the P reference signals are sent on the corresponding P time-frequency resources in an OCC manner. Because each reference signal corresponds to the N antenna ports, the P reference signals sent on the corresponding P time-frequency resources in the OCC manner may be correspondingly mapped to the N×P antenna ports. It may be understood that the OCC is a possible implementation of the constraint relationship, and another possible constraint relationship also falls within the protection scope of embodiments of this application. For brevity of description, the following uses the OCC constraint relationship as an example for description. This should not be construed as a limitation on embodiments of this application. Correspondingly, the terminal device may obtain, by measuring the one or more reference signals in the corresponding P reference signals on the P time-frequency resources having the constraint relationship, the first channel information corresponding to the one or more reference signals in the P reference signals, or may obtain the second channel information corresponding to the N×P antenna ports corresponding to the P reference signals. Specifically, dynamic CSI measurement may be performed based on the constraint relationship between the P time-frequency resources in different communication scenarios, and different measurement results are selected. This is not limited in this application. For example, in a communication scenario of a single transmission and reception point (transmission and reception point, TRP) (or a plurality of TRPs), if a CSI measurement capability of the terminal device is strong, a requirement of CSI measurement performance can be met only by obtaining the first channel information corresponding to the one or more reference signals in the P reference signals. In a communication scenario of a single TRP, if a CSI measurement capability of the terminal device is poor, a requirement of CSI measurement performance can be met by obtaining the second channel information corresponding to the N×P antenna ports corresponding to the P reference signals.

It may be understood that different numbers of ports have different requirements on a measurement calculation amount, feedback overheads, resource overheads, and the like. Therefore, CSI measurement performed when the number of ports of each resource is fixed and/or the number of reference signal resources is fixed, and a total number of ports is fixed has poor CSI measurement performance.

However, in embodiments of this application, compared with obtaining the first channel information corresponding to the one or more reference signals in the P reference signals, when the terminal device obtains, after performing dynamic CSI measurement, the second channel information corresponding to the N×P antenna ports corresponding to the P reference signals, the terminal device can obtain more channel information. This is equivalent to that the terminal device can support CSI measurement performed on CSI-RSs sent in a scenario with a large number of antenna ports, thereby improving CSI measurement performance.

In a possible implementation, there is a mapping relationship between the N×P antenna ports and the P reference signals, and the mapping relationship is determined by P weight coefficients corresponding to the P reference signals.

In a possible implementation,
indexes of the N×P antenna ports are p'=3000+n', where n' is related to at least one of the following:
a first dimension N₁ of the N antenna ports, a second dimension N₂ of the N antenna ports, port indexes p = 3000 + n of the N antenna ports, a first extension factor K₁ of the N×P antenna ports, a second extension factor K₂ of the N×P antenna ports, a first spacing factor Y₁ of the N×P antenna ports, a second spacing factor Y₂ of the N×P antenna ports, a weight coefficient in a j^{th} row of a weight matrix formed by the P weight coefficients, and a j^{th} weight coefficient in the P weight coefficients, where n = 0, 1, ... , 2 × N₁ × N₂ - 1.

It may be understood that the weight matrix formed by the P weight coefficients in this implementation of this application may be a full rank matrix.

In a possible implementation, n' meets the following relationship: $n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+{K}_{2}\times \left(j {modK}_{2}\right)\right) .$

mod represents a remainder obtained by performing a division operation on two numerical expressions, and └ ┘ represents rounding down.

In a possible implementation, n' meets the following relationship: $n ′ = \left(\left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+\left⌊\frac{j}{{K}_{2}}\right⌋\times {Y}_{1}\right)\times {K}_{2}\times {N}_{2}\right) + \left(\left(n {modN}_{2}\right)+\left(j {modK}_{2}\right)\times {Y}_{2}\right) .$

mod represents a remainder obtained by performing a division operation on two numerical expressions, and └ ┘ represents rounding down.

In a possible implementation, n' meets the following relationship: $n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+{Y}_{2}\times \left(j {modK}_{2}\right)\right) .$

mod represents a remainder obtained by performing a division operation on two numerical expressions, and └ ┘ represents rounding down.

In a possible implementation, n' meets the following relationship: $n ′ = \left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+{Y}_{1}\times \left⌊\frac{j}{{K}_{2}}\right⌋\right) \times {K}_{2} \times {N}_{2} + \left(\left(n {modN}_{2}\right)\times {K}_{2}+\left(j {modK}_{2}\right)\right) .$

mod represents a remainder obtained by performing a division operation on two numerical expressions, and └ ┘ represents rounding down.

In a possible implementation, a first dimension of the N antenna ports is N₁, and a second dimension of the N antenna ports is N₂, where N=2×N₁×N₂.

A first dimension of the N×P antenna ports is K₁×N₁, and a second dimension of the N×P antenna ports is K₂×N₂, where K₁=P, and K₂=1.

Alternatively, the first dimension of the N×P antenna ports is K₁×N₁, and the second dimension of the N×P antenna ports is K₂×N₂, where K₁=1, and K₂=P.

Alternatively, the first dimension of the N×P antenna ports is K₁×N₁, and the second dimension of the N×P antenna ports is K₂×N₂, where K₁×K₂=P.

In an implementation of this application, a possible specific implementation of the N×P antenna ports is provided. Specifically, the first dimension of the N antenna ports corresponding to each of the P reference signals is N₁, and the second dimension of the N antenna ports corresponding to each of the P reference signals is N₂, where N₁ represents the number of logical antenna ports in a direction of same polarization, and is usually in a horizontal direction, and N₂ represents the number of logical antenna ports in the other direction of the same polarization, and is usually in a vertical direction. It may be understood that N₁ and N₂ are two mutually perpendicular dimensions and meet the following relationship: N=2×N₁×N₂. However, the P reference signals sent on the corresponding P time-frequency resources in a constraint manner (for example, an OCC) may result in a plurality of different arrangement manners for the mapped N×P antenna ports. For example, an original arrangement of the N antenna ports is extended by K₁ times in the first dimension (that is, a horizontal direction). In this case, a first dimension of the N×P antenna ports is K₁×N₁, and a second dimension of the N×P antenna ports is K₂×N₂, where K₁=P, and K₂=1. For another example, an original arrangement of the N antenna ports is extended by K₂ times in the second dimension (that is, a vertical direction). In this case, a first dimension of the N×P antenna ports is K₁×N₁, and a second dimension of the N×P antenna ports is K₂×N₂, where K₁=1, and K₂=P. For another example, an original arrangement of the N antenna ports is extended by K₁ times in the first dimension (that is, a horizontal direction) and K₂ times in the second dimension (that is, a vertical direction). In this case, a first dimension of the N×P antenna ports is K₁×N₁, and a second dimension of the N×P antenna ports is K₂×N₂, where K₁×K₂=P. In embodiments of this application, the P reference signals are sent on the P time-frequency resources in the constraint manner (for example, the OCC), so that dynamic extension of the N×P antenna ports, and dynamic CSI measurement and channel information feedback of the terminal device can be implemented.

In a possible implementation, K₁=2, and K₂=1.

Alternatively, K₁=1, and K₂=2.

Alternatively, K₁=4, and K₂=1.

Alternatively, K₁=2, and K₂=2.

Alternatively, K₁=1, and K₂=4.

Alternatively, K₁=8, and K₂=1.

Alternatively, K₁=4, and K₂=2.

Alternatively, K₁=2, and K₂=4.

Alternatively, K₁=1, and K₂=8.

In an implementation of this application, a possible specific implementation of the N×P antenna ports is provided. Specifically, when two reference signals are sent on two time-frequency resources in a constraint manner (for example, an OCC) and are correspondingly mapped to 2N antenna ports, the 2N antenna ports may be obtained by extending an original arrangement of the N antenna ports by K₁=2 times in the first dimension (that is, a horizontal direction), or may be obtained by extending an original arrangement of the N antenna ports by K₂=2 times in the second dimension (that is, a vertical direction). When four reference signals are sent on four time-frequency resources in a constraint manner (for example, an OCC) and are mapped to 4N antenna ports, the 4N antenna ports may be obtained by extending an original arrangement of the N antenna ports by K₁=4 times in the first dimension (that is, a horizontal direction), may be obtained by extending an original arrangement of the N antenna ports by K₂=4 times in the second dimension (that is, a vertical direction), or may be obtained by extending an original arrangement of the N antenna ports by K₁=2 times in the first dimension (that is, a horizontal direction) and K₂=2 times in the second dimension (that is, a vertical direction). When eight reference signals are sent on eight time-frequency resources in a constraint manner (for example, an OCC) and are mapped to 8N antenna ports, the 8N antenna ports may be obtained by extending an original arrangement of the N antenna ports by K₁=8 times in the first dimension (that is, a horizontal direction), may be obtained by extending an original arrangement of the N antenna ports by K₂=8 times in the second dimension (that is, a vertical direction), may be obtained by extending an original arrangement of the N antenna ports by K₁=2 times in the first dimension (that is, a horizontal direction) and K₂=4 times in the second dimension (that is, a vertical direction), or may be obtained by extending an original arrangement of the N antenna ports by K₁=4 times in the first dimension (that is, a horizontal direction) and K₂=2 times in the second dimension (that is, a vertical direction). In embodiments of this application, the P reference signals are sent on the P time-frequency resources in the constraint manner (for example, the OCC), so that dynamic extension of the N×P antenna ports, and dynamic CSI measurement and channel information feedback of the terminal device can be implemented.

In a possible implementation, the second channel information is determined by using the following parameters: ${u}_{m} = \left\{\begin{matrix}\left[1 {e}^{\frac{j 2 πm}{{N}_{2} {O}_{2} {K}_{2}}} … {e}^{\frac{j 2 π \left({N}_{2}-1\right) m}{{N}_{2} {O}_{2} {K}_{2}}}\right] ; {N}_{2} > 1 ; \\ 1 ; {N}_{2} = 1\end{matrix}\right.$ and ${v}_{l , m} = \left[{u}_{m} {u}_{m}{e}^{\frac{j 2 πl}{{N}_{1} {O}_{1} {K}_{1}}} ⋯ {u}_{m}{e}^{\frac{j 2 π \left({N}_{1}-1\right) l}{{N}_{1} {O}_{1} {K}_{1}}}\right] .$

l ∈ [0, N₁O₁K₁ - 1], m ∈ [0, N₁O₁K₁ - 1], uₘ represents a beam weight corresponding to a beam whose second dimension is m, v_{l,m} represents a beam weight corresponding to a beam whose first dimension is l and second dimension is m, O₁ represents an oversampling multiple in the first dimension, O₂ represents an oversampling multiple in the second dimension, and e is a natural constant.

In an implementation of this application, a possible specific implementation of determining the second channel information is provided. Specifically, based on a weight vector of a beam whose first dimension is l and second dimension is m and that corresponds to the N antenna ports and that is defined in an original protocol, an extension multiple K₁ of the N×P antenna ports in the first dimension (that is, the horizontal direction) and an extension multiple K₂ of the N×P antenna ports in the second dimension (that is, the vertical direction) are introduced, so that a weight vector (that is, a beam weight) of a beam whose first dimension is l and second dimension is m and that corresponds to the N×P antenna ports can be obtained, thereby improving CSI measurement performance.

In a possible implementation, there is a coupling relationship between P weight coefficients corresponding to the P reference signals.

In an implementation of this application, a possible specific implementation of the P weight coefficients corresponding to the P reference signals is provided. Specifically, there is a coupling relationship between the P weight coefficients corresponding to the P reference signals. Optionally, the coupling relationship may also be considered as an OCC constraint relationship, so that the P reference signals are sent on the corresponding P time-frequency resources in the OCC manner. In this way, the terminal device may perform dynamic CSI measurement based on the coupling relationship between the P weight coefficients in different communication scenarios, to obtain more channel information, and support CSI measurement performed on CSI-RSs sent in a scenario with a large number of antenna ports, thereby improving CSI measurement performance.

In a possible implementation,
when P=2, a first weight coefficient in the P weight coefficients is (+1, +1), and a second weight coefficient in the P weight coefficients is (+1, -1).

Alternatively, the first weight coefficient is (1, 0), and the second weight coefficient is (0, 1).

Alternatively, the first weight coefficient is (1, i), and the second weight coefficient is (1, -i), where i is an imaginary unit.

In an implementation of this application, a possible specific implementation of the coupling relationship between the P weight coefficients is provided. Specifically, the coupling relationship between the P weight coefficients may be limited in a form of +1 and -1, to implement orthogonality between the P weight coefficients. For example, when P=2, the first weight coefficient in the P weight coefficients is (+1, +1), indicating that a reference signal is sent on a transceiver channel on a first time-frequency resource in a form of (+1, +1), and the second weight coefficient in the P weight coefficients is (+1, -1), indicating that a reference signal is sent on a transceiver channel on a second time-frequency resource in a form of (+1, -1). In this case, there is an orthogonal relationship between the first weight coefficient and the second weight coefficient. Similarly, an orthogonal relationship may also be implemented between other weight coefficients in the P weight coefficients in the form of +1 and -1. Alternatively, the coupling relationship between the P weight coefficients may be limited in a form of 1 and 0. For example, when P=2, the first weight coefficient in the P weight coefficients is (1, 0), indicating that a reference signal is sent on a transceiver channel on a first time-frequency resource in a form of (1, 0), and the second weight coefficient in the P weight coefficients is (0, 1), indicating that a reference signal is sent on a transceiver channel on a second time-frequency resource in a form of (0, 1). Similarly, a coupling relationship may also be implemented between other weight coefficients in the P weight coefficients in the form of 1 and 0. Alternatively, the coupling relationship between the P weight coefficients may be limited in a form of 1 and i. For example, when P=2, the first weight coefficient in the P weight coefficients is (1, i), indicating that a reference signal is sent on a transceiver channel on a first time-frequency resource in a form of (1, i), and the second weight coefficient in the P weight coefficients is (1, -i), indicating that a reference signal is sent on a transceiver channel on a second time-frequency resource in a form of (1, -i). In this case, the weight coefficients are full rank but not orthogonal. Similarly, a coupling relationship may also be implemented between other weight coefficients in the P weight coefficients in the form of 1 and i. According to the coupling relationship between the P weight coefficients in embodiments of this application, the terminal device can perform dynamic CSI measurement based on the coupling relationship between the P weight coefficients in different communication scenarios, to obtain more channel information, and support CSI measurement performed on CSI-RSs sent in a scenario with a large number of antenna ports, thereby improving CSI measurement performance.

In a possible implementation, the first channel information is carried in first information, and the first information further includes one or more first channel state information-reference signal resource indicators (CSI-RS resource indicator, CRI) corresponding to the one or more reference signals in the P reference signals.

In an implementation of this application, a possible specific implementation of the first information is provided. Specifically, the first channel information is carried in the first information, and the first information further includes the first CRIs corresponding to the one or more reference signals in the P reference signals. In this case, the first information includes channel information corresponding to the first CRIs, that is, channel information corresponding to the one or more reference signals in the P reference signals. According to embodiments of this application, the terminal device may perform dynamic CSI measurement, and select to report a first CRI and channel information corresponding to the first CRI, thereby improving CSI measurement performance.

In a possible implementation, the second channel information is carried in second information, the second information further includes a second CRI, and there is a mapping relationship between the second CRI and P first CRIs corresponding to the P reference signals.

In an implementation of this application, a possible specific implementation of the second information is provided. Specifically, the second channel information is carried in the second information, the second information further includes the second CRI, and there is a mapping relationship between the second CRI and a plurality of first CRIs corresponding to the P reference signals. It may be understood that the plurality of first CRIs are mapped to the second CRI. In other words, the second CRI may be understood as a joint identifier of the plurality of first CRIs. In this case, the second information includes channel information corresponding to the second CRI, that is, channel information corresponding to the N×P antenna ports corresponding to the P reference signals. According to embodiments of this application, the terminal device may perform dynamic CSI measurement, and select to report a second CRI and channel information corresponding to the second CRI, to obtain more channel information. This is equivalent to that the terminal device can support CSI measurement performed on CSI-RSs sent in a scenario with a large number of antenna ports, thereby improving CSI measurement performance.

In a possible implementation, the second CRI is preconfigured by the network device.

Alternatively, the second CRI is determined by the terminal device, and the first information further includes the plurality of first CRIs corresponding to the second CRI.

In an implementation of this application, a possible specific implementation of configuring the second CRI is provided. Specifically, the second CRI may be preconfigured by the network device. In this case, the network device further configures the plurality of first CRIs corresponding to the second CRI. Correspondingly, the terminal device reports the second CRI and the channel information corresponding to the second CRI. Alternatively, the second CRI may be determined by the terminal device. In this case, the terminal device needs to report the second CRI and the channel information corresponding to the second CRI, and the plurality of first CRIs corresponding to the second CRI. According to embodiments of this application, the terminal device may perform dynamic CSI measurement, and select to report a second CRI and channel information corresponding to the second CRI, to obtain more channel information. This is equivalent to that the terminal device can support CSI measurement performed on CSI-RSs sent in a scenario with a large number of antenna ports, thereby improving CSI measurement performance.

In a possible implementation, the first extension factor K1 and/or the second extension factor K2 are/is indicated by using first indication information sent by the network device to the terminal device.

Optionally, the method further includes:
receiving the first indication information from the network device, where the first indication information indicates K₁ and/or K₂, and K₁ and/or K₂ are/is related to P.

In an implementation of this application, a possible specific implementation of indicating K₁ and/or K₂ is provided. Specifically, the network device sends the first indication information to the terminal device, and correspondingly, the terminal device receives the first indication information from the network device, where the first indication information indicates K₁ and/or K₂, and K₁ and/or K₂ are/is related to a number P of sent reference signals. According to embodiments of this application, the network device may configure K₁ and/or K₂, and indicate K₁ and/or K₂ to the terminal device, to implement dynamic extension of the N×P antenna ports, and dynamic CSI measurement and channel information feedback of the terminal device.

In a possible implementation, the first extension factor K₁ and/or the second extension factor K₂ are/is determined based on a reference signal measurement result of the terminal device, K₁ is less than or equal to a first value, K₂ is less than or equal to a second value, and the first value and/or the second value are/is indicated by using second indication information sent by the network device to the terminal device.

Optionally, the method further includes:
receiving the second indication information from the network device, where the second indication information indicates the first value and/or the second value; and
sending fourth information to the network device, where the fourth information indicates K₁ and/or K₂, K₁ is less than or equal to the first value, K₂ is less than or equal to the second value, and K₁ and/or K₂ are/is determined based on the reference signal measurement result of the terminal device.

In an implementation of this application, a possible specific implementation of indicating K₁ and/or K₂ is provided. Specifically, the network device sends the second indication information to the terminal device, and correspondingly, the terminal device receives the second indication information from the network device; and the terminal device sends K₁ and/or K₂ to the network device, and correspondingly, the network device receives K₁ and/or K₂ from the terminal device. The second indication information indicates the first value and/or the second value. The first value may be understood as a maximum value allowed by K₁, and the second value may be understood as a maximum value allowed by K₂. K₁ is less than or equal to the first value, K₂ is less than or equal to the second value, and K₁ and/or K₂ are/is determined based on the reference signal measurement result of the terminal device. It may be understood that the network device configures the first value and/or the second value, and indicates the first value and/or the second value to the terminal device; and the terminal device determines, based on the reference signal measurement result, K₁ that is less than or equal to the first value and K₂ that is less than or equal to the second value, and indicates the configured K₁ and/or the configured K₂ to the network device, to implement dynamic extension of the N×P antenna ports, and dynamic CSI measurement and channel information feedback of the terminal device.

In a possible implementation, the indexes of the N×P antenna ports are indicated by using third indication information sent by the network device to the terminal device in an arrangement order of first the second dimension and then the first dimension.

Optionally, the method further includes:
receiving the third indication information from the network device, where the third indication information indicates that the indexes of the N×P antenna ports are arranged in the order of first the second dimension and then the first dimension.

In an implementation of this application, a possible specific implementation of the N×P antenna ports is provided. Specifically, the network device sends the third indication information to the terminal device, and correspondingly, the terminal device receives the third indication information from the network device. The third indication information indicates the arrangement order of the indexes of the N×P antenna ports, and specifically, the indexes are arranged in an ascending order of first the second dimension (that is, the vertical direction) and then the first dimension (that is, the horizontal direction). According to embodiments of this application, the indexes of the N×P antenna ports obtained through extension may be arranged, to establish a mapping relationship between the N×P antenna ports and corresponding beams.

According to a third aspect, an embodiment of this application provides a communication apparatus. The apparatus includes units configured to perform the method according to any one of the first aspect.

In a possible design, the apparatus includes:
a communication unit, configured to send P reference signals to a terminal device, where each of the P reference signals corresponds to N antenna ports, the P reference signals are used to determine first channel information and/or second channel information, P is an integer greater than 1, N is an integer greater than 1, the first channel information corresponds to one or more reference signals in the P reference signals, the second channel information corresponds to N×P antenna ports, and the N×P antenna ports correspond to the P reference signals.

The communication unit is further configured to receive the first channel information and/or the second channel information from the terminal device.

In a possible implementation, the apparatus further includes:
a processing unit, configured to generate the P reference signals.

For steps performed by the processing unit and the communication unit in the third aspect and any possible implementation, refer to corresponding descriptions in the first aspect and corresponding implementations.

For technical effect brought by the third aspect and any possible implementation, refer to descriptions of technical effect corresponding to the first aspect and corresponding implementations.

According to a fourth aspect, an embodiment of this application provides a communication apparatus. The apparatus includes units configured to perform the method according to any one of the second aspect.

In a possible design, the apparatus includes:
a communication unit, configured to receive P reference signals from a network device, where each of the P reference signals corresponds to N antenna ports, P is an integer greater than 1, and N is an integer greater than 1; and
a processing unit, configured to measure one or more reference signals in the P reference signals, to obtain first channel information and/or second channel information, where the first channel information corresponds to the one or more reference signals in the P reference signals, the second channel information corresponds to N×P antenna ports, and the N×P antenna ports correspond to the P reference signals.

The communication unit is further configured to send the first channel information and/or the second channel information to the network device.

For steps performed by the processing unit and the communication unit in the fourth aspect and any possible implementation, refer to the second aspect and corresponding implementations.

For technical effect brought by the fourth aspect and any possible implementation, refer to descriptions of technical effect corresponding to the second aspect and corresponding implementations.

Optionally, in the communication apparatus according to any one of the third aspect and the fourth aspect and any one of the possible implementations,
in an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit, and the processing unit may be at least one processor, processing circuit, logic circuit, or the like.

According to a fifth aspect, an embodiment of this application provides a communication apparatus. The communication apparatus includes a processor. The processor is coupled to a memory, and may be configured to execute instructions in the memory, to implement the method according to the first aspect or the second aspect and any possible implementation. Optionally, the communication apparatus further includes the memory. Optionally, the communication apparatus further includes a communication interface, and the processor is coupled to the communication interface.

According to a sixth aspect, an embodiment of this application provides a communication apparatus, including a logic circuit and a communication interface. The communication interface is configured to receive information or send information. The logic circuit is configured to receive information or send information through the communication interface, to enable the communication apparatus to perform the method according to the first aspect or the second aspect and any possible implementation.

According to a seventh aspect, an embodiment of this application provides a computer-readable storage medium. The computer-readable storage medium is configured to store a computer program (which may also be referred to as code or instructions). When the computer program is run on a computer, the method according to the first aspect or the second aspect and any possible implementation is implemented.

According to an eighth aspect, an embodiment of this application provides a computer program product. The computer program product includes a computer program (which may also be referred to as code or instructions). When the computer program is run, a computer is enabled to perform the method according to the first aspect or the second aspect and any possible implementation.

According to a ninth aspect, an embodiment of this application provides a chip. The chip includes a processor. The processor is configured to execute instructions. When the processor executes the instructions, the chip is enabled to perform the method according to the first aspect or the second aspect and any possible implementation. Optionally, the chip further includes a communication interface, and the communication interface is configured to: receive a signal or send a signal.

According to a tenth aspect, an embodiment of this application provides a communication system. The communication system includes at least one communication apparatus according to the third aspect, communication apparatus according to the fourth aspect, communication apparatus according to the fifth aspect, communication apparatus according to the sixth aspect, or chip according to the ninth aspect.

According to an eleventh aspect, an embodiment of this application provides a communication system. The communication system includes a network device and a terminal device. The network device is configured to perform the method according to the first aspect and any possible implementation, and the terminal device is configured to perform the method according to the second aspect and any possible implementation.

In addition, in a process of performing the method according to the first aspect or the second aspect and any possible implementation, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmitting, sending, and receiving related to the processor may be more generally understood as operations such as outputting, receiving, and inputting of the processor, unless otherwise specified, or provided that the operations do not contradict actual functions or internal logic of the operations in related descriptions.

Optionally, in a process of performing the method according to the first aspect or the second aspect and any possible implementation, the processor may be a processor specially configured to perform the method, or may be a processor, for example, a general-purpose processor, that performs the method by executing computer instructions in a memory. The memory may be a non-transitory (non-transitory) memory, for example, a read-only memory (Read Only Memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may alternatively be integrated into one device, that is, the processor and the memory may alternatively be integrated.

In embodiments of this application, compared with obtaining the first channel information corresponding to the one or more reference signals in the P reference signals, when the terminal device obtains, after performing dynamic CSI measurement, the second channel information corresponding to the N×P antenna ports corresponding to the P reference signals, the terminal device can obtain more channel information. This is equivalent to that the terminal device can support CSI measurement performed on CSI-RSs sent in a scenario with a large number of antenna ports, thereby improving CSI measurement performance.

### BRIEF DESCRIPTION OF DRAWINGS

To describe the technical solutions in embodiments of this application more clearly, the following briefly describes the accompanying drawings used in embodiments of this application. It is clear that, the accompanying drawings described below merely show some embodiments of this application, and a person of ordinary skill in the art may still derive other drawings from these accompanying drawings without creative efforts.
FIG. 1A is a diagram of a signal transmission manner according to an embodiment of this application;
FIG. 1B is a diagram of another signal transmission manner according to an embodiment of this application;
FIG. 1C is a diagram of still another signal transmission manner according to an embodiment of this application;
FIG. 2 is a diagram of a communication system according to an embodiment of this application;
FIG. 3 is a diagram of a process of sending and receiving a reference signal according to an embodiment of this application;
FIG. 4 is a diagram of another process of sending and receiving a reference signal according to an embodiment of this application;
FIG. 5 is a schematic flowchart of a communication method according to an embodiment of this application;
FIG. 6 is a diagram of channel state information-reference signal (channel state information-reference signal, CSI-RS) resources according to an embodiment of this application;
FIG. 7A is a diagram of CSI-RS resource extension according to an embodiment of this application;
FIG. 7B is a diagram of CSI-RS resource extension according to an embodiment of this application;
FIG. 8A is a diagram of an OCC code corresponding to a CRI according to an embodiment of this application;
FIG. 8B is a diagram of an OCC code corresponding to a CRI according to an embodiment of this application;
FIG. 9A is a diagram of CSI-RS resource extension according to an embodiment of this application;
FIG. 9B is a diagram of CSI-RS resource extension according to an embodiment of this application;
FIG. 9C is a diagram of CSI-RS resource extension according to an embodiment of this application;
FIG. 10A is a diagram of an OCC code corresponding to a CRI according to an embodiment of this application;
FIG. 10B is a diagram of an OCC code corresponding to a CRI according to an embodiment of this application;
FIG. 10C is a diagram of an OCC code corresponding to a CRI according to an embodiment of this application;
FIG. 10D is a diagram of an OCC code corresponding to a CRI according to an embodiment of this application;
FIG. 11A is a diagram of beam mapping according to an embodiment of this application;
FIG. 11B is a diagram of beam mapping according to an embodiment of this application;
FIG. 12A is a diagram of CSI-RS resource extension according to an embodiment of this application;
FIG. 12B is a diagram of CSI-RS resource extension according to an embodiment of this application;
FIG. 13 is a diagram of dynamic port extension according to an embodiment of this application;
FIG. 14A is a diagram of dynamic port index extension according to an embodiment of this application;
FIG. 14B is a diagram of dynamic port index extension according to an embodiment of this application;
FIG. 15A is a diagram of dynamic port mapping according to an embodiment of this application;
FIG. 15B is a diagram of dynamic port mapping according to an embodiment of this application;
FIG. 15C is a diagram of dynamic port mapping according to an embodiment of this application;
FIG. 15D is a diagram of dynamic port mapping according to an embodiment of this application;
FIG. 15E is a diagram of arrangement of transceiver channels according to an embodiment of this application;
FIG. 15F is a diagram of dynamic port mapping according to an embodiment of this application;
FIG. 16 is a diagram of a structure of a communication apparatus according to an embodiment of this application;
FIG. 17 is a diagram of a structure of a communication apparatus according to an embodiment of this application;
FIG. 18 is a diagram of a structure of a chip according to an embodiment of this application; and
FIG. 19 is a diagram of a structure of a communication apparatus according to an embodiment of this application.

### DESCRIPTION OF EMBODIMENTS

First, some terms in embodiments of this application are described for ease of understanding by a person skilled in the art.
(1) Configuration and preconfiguration: In this application, both configuration and preconfiguration are used. Configuration means that a network device such as a base station or a server sends configuration information of some parameters or values of the parameters to a terminal through a message or signaling, so that the terminal determines a communication parameter or a transmission resource based on the values or the information. Similar to configuration, preconfiguration may be a manner in which a network device such as a base station or a server sends parameter information or a value to a terminal through a communication link or a carrier, or may be a manner in which a corresponding parameter or parameter value is defined in a standard, or a related parameter or value is set in a terminal device in advance. This is not limited in this application. Further, these values and parameters may change or may be updated.
(2) In this application, "indicating" may include "directly indicating" and "indirectly indicating". When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information may be indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periods and/or sending occasions of these pieces of sub-information may be the same or different. A specific sending method is not limited in this application. The sending periods and/or the sending occasions of these pieces of sub-information may be predefined, for example, predefined according to a protocol, or may be configured by a transmitter device by sending configuration information to a receiver device. The configuration information may include, for example but not limited to, one or a combination of at least two of radio resource control (radio resource control, RRC) signaling, media/medium access control (media/medium access control, MAC) layer signaling, and physical layer signaling. The MAC layer signaling includes, for example, a MAC control element (control element, CE), and the physical layer signaling includes, for example, downlink control information (downlink control information, DCI).

(3) A reference signal (reference signal, RS) is also referred to as a pilot signal. In a communication system, to send and receive data, obtain system synchronization, and feedback channel information, it is necessary to estimate an uplink channel or a downlink channel. Channel estimation is a process of reconstructing or restoring a received signal to compensate for signal distortion caused by channel fading and noise-induced fading. In channel estimation, changes of a channel in time domain and frequency domain are tracked by using standard signals predicted by a transmitter and a receiver. The standard signals are also referred to as reference signals, are distributed on different resource elements (resource element, RE) in time-frequency two-dimensional space in an orthogonal frequency division multiplexing (orthogonal frequency division multiplexing, OFDM) symbol, and have known amplitudes and phases.

At a physical layer, uplink communication may include transmission of an uplink physical channel and an uplink signal. The uplink physical channel includes a random access channel (random access channel, PRACH), an uplink control channel (physical uplink control channel, PUCCH), an uplink data channel (physical uplink shared channel, PUSCH), and the like. The uplink signal includes a channel sounding signal (sounding reference signal, SRS), an uplink control channel demodulation reference signal (PUCCH demodulation reference signal, PUCCH-DMRS), an uplink data channel-demodulation reference signal (physical uplink shared channel-demodulation reference signal, PUSCH-DMRS), an uplink phase noise tracking signal (phase noise tracking reference signal, PTRS), an uplink positioning signal (uplink positioning RS), and the like.

At the physical layer, downlink communication may include transmission of a downlink physical channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel-demodulation reference signal (physical downlink control channel-demodulation reference signal, PDCCH-DMRS), a downlink data channel-demodulation reference signal (physical downlink shared channel-demodulation reference signal, PDSCH-DMRS), a phase noise tracking signal PTRS, a channel state information-reference signal (channel status information reference signal, CSI-RS), a cell reference signal (Cell reference signal, CRS) (which is not used in NR), a time/frequency tracking reference signal (time/frequency tracking reference signal, TRS) (which is not used in LTE), an LTE/NR positioning reference signal (positioning reference signal, PRS), and the like.

(4) Terms "system" and "network" in embodiments of this application may be used interchangeably. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to a device X" may be understood as that a destination end of the information is the device X, and may include direct sending through an air interface, or include indirect sending through an air interface by another unit or module. "Receiving information from a device Y" may be understood as that a source end of the information is the device Y, and may include direct receiving from the device Y through an air interface, or may include indirect receiving from the device Y via another unit or module through an air interface. "Sending" may be understood as "outputting" of a chip interface, and "receiving" may be understood as "inputting" of the chip interface.

A communication process between an entity A and an entity B is used as an example. In this application, that the entity A sends information to the entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entity A and the entity B herein may be radio access network (radio access network, RAN) nodes or terminals, or may be modules inside the RAN nodes or terminals. Information sending and receiving may be information exchange between a RAN node and a terminal, for example, information exchange between a base station and a terminal. Information sending and receiving may also be information exchange between two RAN nodes, for example, information exchange between a central unit (central unit, CU) and a distributed unit (distributed unit, DU). Information sending and receiving may also be information exchange between different modules in an apparatus, for example, information exchange between a chip of a terminal and another module of the terminal, or information exchange between a chip of a base station and another module of the base station.

(6) Precoding technology: A transmitter processes a to-be-sent signal by using a precoding matrix that aligns with a channel, and then sends the processed signal, so that the precoded to-be-sent signal is adapted to the channel. Therefore, quality of a received signal (for example, interference is eliminated, and a signal to interference plus noise ratio (signal to interference plus noise ratio, SINR) is improved) can be improved by performing precoding processing on the to-be-sent signal. Transmission between a transmitter and a plurality of receivers can be further performed on a same time-frequency resource by using the precoding technology. That is, multi-user multiple-input multiple-output (multiple user multiple input multiple output, MU-MIMO) is implemented.

Optionally, the transmitter may be a network device, and the receivers may be terminal devices; or the transmitter may be a terminal device, and the receivers may be terminal devices.

In an implementation, a multiple-input multiple-output (Multiple Input Multiple Output, MIMO) technology is used to increase a system capacity and improve a throughput. A mathematical expression is y = Hx + n, where y is a received signal, H is channel information of a MIMO channel, x is a sent signal, and n is noise. In a communication system with a plurality of antennas, signals of a plurality of transmit antennas are superimposed on any receive antenna. Therefore, a method for sending a signal by a transmitter affects system performance, and it is usually complex to restore the sent signal by a receiver. In this context, precoding (Precoding) is used not only to reduce system overheads and maximize a MIMO system capacity, but also to reduce complexity of a receiver in eliminating inter-channel interference. In this case, a mathematical expression is y = HPx + n, where P is a precoding matrix (or vector). To reduce implementation complexity, P may be selected from a predefined matrix (or vector) set, where the set is referred to as a codebook (Codebook). This method is also referred to as a codebook-based sending method. If the transmitter can learn of all information of H, P may be obtained by the transmitter itself. This method is also referred to as a non-codebook (Non-codebook, NCB) sending method.

It should be understood that related descriptions of the precoding technology are merely an example for ease of understanding, and are not intended to limit the protection scope of embodiments of this application. In a specific implementation process, the transmitter may alternatively perform precoding in another manner. For example, when channel information (for example, but not limited to a channel matrix) cannot be obtained, precoding is performed by using a preset precoding matrix or by using weighted processing. For brevity, specific content thereof is not described in this specification.

(7) A precoding matrix indicator (precoding matrix indicator, PMI) may indicate a precoding matrix. The precoding matrix may be, for example, a precoding matrix determined by a terminal device based on a channel matrix of a frequency domain unit. The channel matrix may be determined by the terminal device in a manner such as channel estimation or based on channel reciprocity. However, it should be understood that a specific method of determining the precoding matrix by the terminal device is not limited to the foregoing descriptions. For specific implementations, refer to a protocol. For brevity, examples are not enumerated herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application.

It should be noted that, according to the method provided in embodiments of this application, a network device may determine, based on a feedback of a terminal device, a CSI-RS port, a frequency domain discrete fourier transform (discrete fourier transform, DFT) vector, and a combination coefficient of a spatial-frequency vector that are used to construct a precoding vector, to determine a precoding matrix corresponding to each frequency domain unit. The precoding matrix may be directly used for downlink data transmission. Alternatively, some beamforming methods, including, for example, zero forcing (zero forcing, ZF), regularized zero forcing (regularized zero-forcing, RZF), a minimum mean-square error (minimum mean-squared error, MMSE), a maximum signal-to-leakage-plus-noise ratio (signal-to-leakage-and-noise, SLNR), and the like may be performed on the precoding matrix, to obtain a precoding matrix that is finally used for downlink data transmission. This is not limited in this application. Unless specifically described, all precoding matrices below may be precoding matrices determined according to the method provided in this application.

It may be understood that the precoding matrix determined by the terminal device may be understood as a to-be-fed-back precoding matrix. The terminal device may indicate the to-be-fed-back precoding matrix through a PMI, so that the network device restores the precoding matrix based on the PMI. It may be understood that the precoding matrix restored by the network device based on the PMI may be the same as or similar to the to-be-fed-back precoding matrix.

In downlink channel measurement, higher approximation between the precoding matrix determined by the network device based on the PMI and the precoding matrix determined by the terminal device indicates that the precoding matrix determined by the network device for data transmission is more adaptable to a channel status. Therefore, signal received quality can be improved.

(8) An antenna port may be referred to as a port for short, and may be understood as a transmit antenna identified by a receiver, or a transmit antenna that can be spatially distinguished. One antenna port may be preconfigured for each virtual antenna, each virtual antenna may be a weighted combination of a plurality of physical antennas, and each antenna port may correspond to one reference signal. Therefore, each antenna port may be referred to as a reference signal port, for example, a CSI-RS port, a demodulation reference signal (demodulation deference signal, DMRS), or an SRS port.

The antenna port is a logical concept, and generally, there is no direct correspondence between an antenna port and a physical antenna. The antenna port is usually associated with a reference signal, and may be understood as a transceiver interface on a channel through which the reference signal passes. For a low frequency, one antenna port may correspond to one or more antenna array elements. The array elements jointly send a reference signal. A receiver may consider the array elements as a whole, and does not need to distinguish between the array elements. For a high-frequency system, an antenna port may correspond to one beam. Similarly, a receiver only needs to consider the beam as an interface, and does not need to distinguish between array elements.

In addition, a port group may be a set corresponding to a plurality of antenna ports. In a manner, a plurality of digital ports of a network device are grouped, to form a plurality of port groups. In another manner (especially in a hybrid digital analog beam architecture), a port group may be a plurality of digital ports corresponding to a same analog beam, and is also referred to as a port group or a digital analog port group. Alternatively, a port group may be a digital port set corresponding to a plurality of analog beams, and is also referred to as a port group or a digital analog port group. Alternatively, a plurality of digital ports of a same analog beam are grouped into a plurality of subsets, and each subset is referred to as a port group or a digital analog port group.

(9) A channel state information (CSI) report (report) is information that is reported by a receiver (for example, a terminal device) to a transmitter (for example, a network device) in a wireless communication system and that is used to describe a channel attribute of a communication link. The CSI report may include, for example but not limited to, a precoding matrix indicator (PMI), a rank indicator (RI), a channel quality indicator (channel quality indicator, CQI), a channel state information-reference signal (channel state information reference signal, CSI-RS), a CSI-RS resource indicator (CSI-RS resource indicator, CRI), a layer indicator (layer indicator, LI), and the like. It should be understood that the foregoing listed specific content of CSI is merely an example for description, and shall not constitute any limitation on this application. The CSI may include one or more of the foregoing listed content, or may include information that represents the CSI other than the foregoing listed content. This is not limited in this application.

(10) Beam: A beam (beam) and a beam pair (beam pair link, BPL) are introduced into a communication system. The beam is a communication resource. Beams may be classified into transmit beams and receive beams. A technology for forming the beam may be a beamforming technology or another technical means. Beamforming includes transmit beamforming and receive beamforming.

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent through different beams. Optionally, a plurality of beams having a same or similar communication feature may be considered as one beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength of a radio signal received from an antenna in different directions in space. It may be understood that one or more antenna ports forming one beam may also be considered as one antenna port set. In a protocol, the beam may also be represented as a spatial filter (spatial filter).

Transmit beam: A beam that has spatial directivity and that is formed by a signal sent by a transmitter device by using a specific beamforming weight. In an uplink direction, the transmitter device may be a terminal. In a downlink direction, the transmitter device may be a network device.

Receive beam: A beam that has spatial directivity and that is formed by a signal received by a receiver device by using a specific beamforming weight. In an uplink direction, the receiver device may be a network device. In a downlink direction, the receiver device may be a terminal.

Transmit beamforming: When a transmitter device with an antenna array sends a signal, a specific amplitude and phase are set on each antenna element of the antenna array, so that the sent signal has specific spatial directivity, that is, the signal has high signal power in some directions and has low signal power in some other directions. A direction in which signal power is the highest is a direction of a transmit beam. The antenna array includes a plurality of antenna elements, and the specific amplitude and phase applied to the antenna elements are beamforming weights.

Receive beamforming: When a receiver device with an antenna array receives a signal, a specific amplitude and phase are set on each antenna element of the antenna array, so that a power gain of the received signal is directional, that is, a power gain is high when signals in some directions are received, and a power gain is low when signals in some other directions are received. A direction of a highest power gain when a signal is received is a direction of a receive beam. The antenna array includes a plurality of antenna elements, and the specific amplitude and phase applied to the antenna elements are beamforming weights.

Optionally, sending a signal by using a transmit beam may be understood as sending the signal by using a beamforming weight.

Optionally, receiving a signal by using a receive beam may be understood as receiving the signal by using a beamforming weight.

Generally, different beams may be considered as different resources. Same information or different information may be sent by using (through) different beams. A beam pair is established based on the concept of a beam. One beam pair usually includes one transmit beam of a transmitter device and one receive beam of a receiver device.

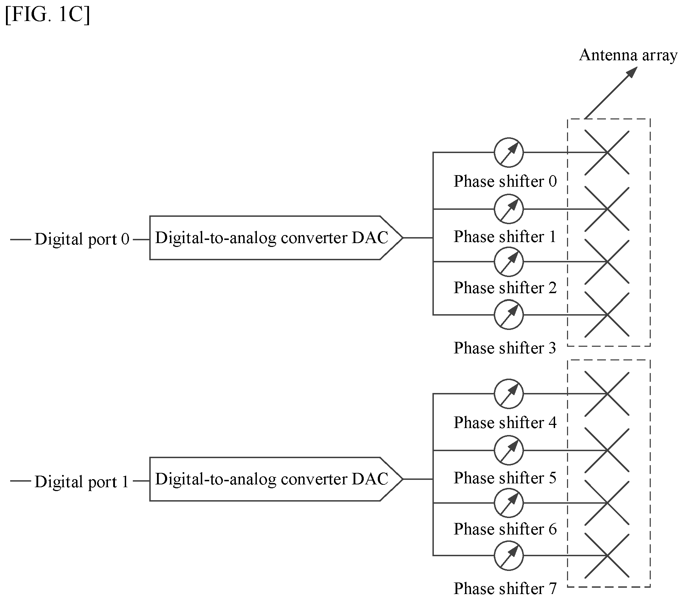

(11) Transceiver channel: As shown in FIG. 1C, each digital port has two transceiver channels/transceiver units (or Transmission Receiver Unit, TRU or TRX for short). It should be noted that the number of transceiver channels corresponding to each digital port does not necessarily directly correspond to the number of phase shifters implemented by a base station, and the base station may perform virtualization. For example, in a scenario in which one digital port drives four phase shifters, the base station may virtualize two phase shifters into one transceiver channel, and only notify the terminal that the number of transceiver channels corresponding to each digital port is 2.

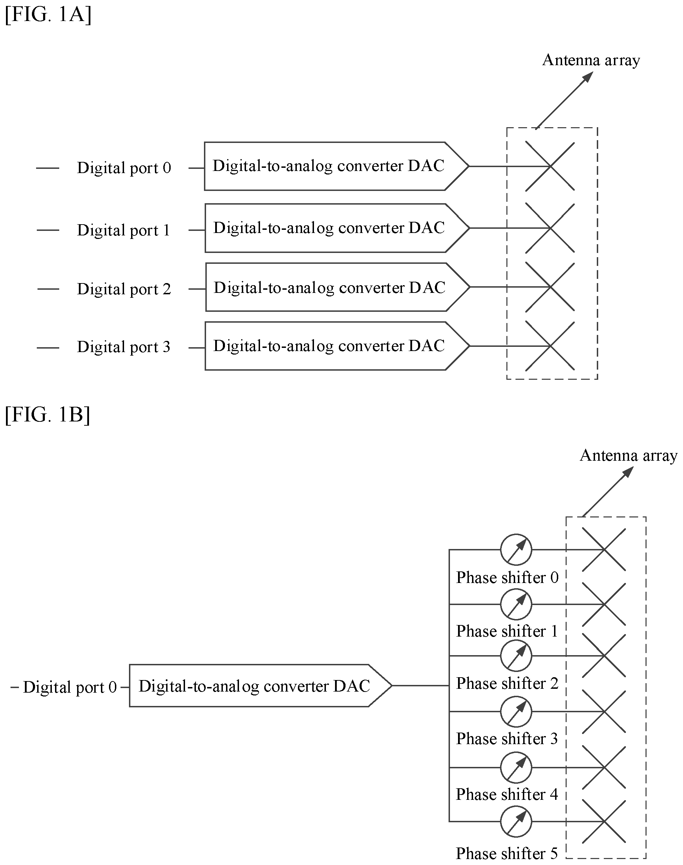

The following describes, with reference to implementation content shown in FIG. 1A to FIG. 1C, an example of a beam implementation process by using an example in which a network device is a base station. In a communication system of a high frequency band, the base station (and terminals in some frequency bands) usually uses a large-scale array antenna (for example, 500 to more than 1000 antenna elements), to counteract a path loss caused by an increase of a frequency band by using a high array gain, and improve a coverage capability. From the perspective of implementation of the base station, for large arrays operating at different frequency bands and having different array scales, array weighting manners (that is, different beamforming manners) are roughly classified based on beamforming implementation solutions into the following three types.

An implementation is digital beamforming (digital beamforming, DBF). A basic structure of digital beamforming is shown in FIG. 1A. Each antenna unit or a group of antenna units is directly connected to one digital channel. This structure is a typical low-frequency massive multiple-input multiple-output (massive MIMO) structure. Each antenna signal is directly converted to digital domain, and subsequent array weighting is performed in digital domain. Therefore, this is referred to as digital beamforming. On one hand, signal processing in digital domain has the highest degree of freedom and supports a complex signal processing manner. Therefore, the DBF architecture has the best performance under a same array scale. On the other hand, because power consumption and costs of a digital-to-analog converter (digital to analog converter, DAC)/analog-to-digital converter (analog to digital converter, ADC) are high (especially in a case of a high bandwidth), generally, DBF has the highest costs under the same array scale.

Another implementation is analog beamforming (analog beamforming, ABF). A structure of ABF is shown in FIG. 1B. Each antenna unit or a group of antenna units is connected to one analog phase shifter, and then a plurality of antenna units are combined in analog domain and then pass through one digital-to-analog/analog-to-digital converter. Compared with DBF, the entire array of ABF corresponds to only one digital-to-analog/analog-to-digital converter. Therefore, the ABF architecture has the greatest advantage of low costs and power consumption. A bottleneck of ABF is also obvious. A setting of the phase shifter in analog domain determines a beam direction after beamforming. Because electrical signals are directly combined in analog domain, and cannot be weighted through digital signal processing like in DBF, ABF needs to preconfigure the setting of the phase shifter (that is, steer an analog beam toward a target terminal) during receiving and sending. This process needs to be completed through beam sweeping in a link establishment phase, causing an extra delay. Generally, once the analog beam is blocked or moves, causing misalignment, system link quality is rapidly reduced, or even a terminal cannot receive a reference signal. Therefore, communication reliability of ABF is not as good as that of DBF.

Another implementation is hybrid beamforming (hybrid beamforming, HBF). A structure of HBF is shown in FIG. 1C. HBF is an intermediate form between ABF and DBF. FIG. 1C shows an HBF architecture in which there are three channels, and each channel corresponds to two analog phase shifters. HBF has a specific number of digital ports to support digital beamforming, and each digital port drives one ABF subarray. Compared with ABF, HBF has a smaller analog subarray scale (four in FIG. 1C vs. six in FIG. 1B) driven by each digital channel under a same array scale. Therefore, HBF has a wider beam, better reliability, and lower beam sweeping overheads. Generally, a ratio of digital ports to analog phase shifters in HBF varies with different frequencies and system design requirements, resulting in inconsistent configurations. For example, in a high frequency band, the number of digital ports is small (4 to 16), and a single digital channel corresponds to a large number of analog phase shifters (16 to 32), which is closer to ABF; while in a low frequency band, a system has a large number of digital ports (32 to 128), and a single digital channel corresponds to fewer analog phase shifters (for example, 2 to 10).

Generally, both the HBF architecture and the ABF architecture have analog beams. When beams are aligned with a communication target, signal quality is improved. A direction (determined by a beam weight) of an analog beam needs to be configured before a signal is sent/received. For a terminal, a process in which a base station selects an analog beam is referred to as beam training or beam sweeping. In beam sweeping, the base station usually sends reference signals by using different analog beam weights, and the terminal separately measures the reference signals, and feeds back measurement results of the reference signals, to assist the base station in determining a beam with best quality.

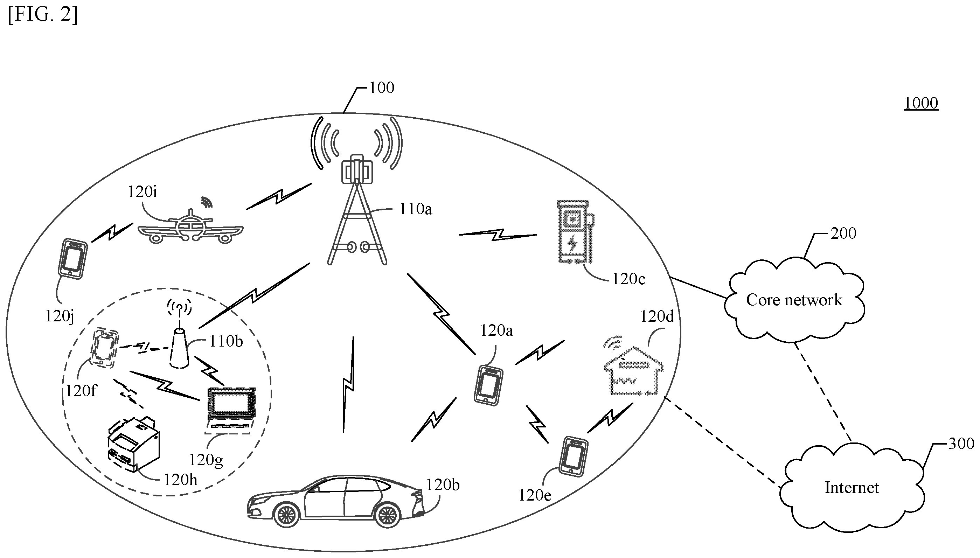

FIG. 2 is a diagram of an architecture of a communication system 1000 to which embodiments of this application are applied.

As shown in FIG. 2, the communication system includes a radio access network (radio access network, RAN) 100 and a core network 200. Optionally, the communication system 1000 may further include an internet 300.

The RAN 100 includes at least one RAN node (for example, 110a and 110b in FIG. 2, which are collectively referred to as 110), and may further include at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to assist the terminal in accessing a communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation base station in a 6th generation (6th generation, 6G) mobile communication system, or a base station in a future mobile communication system. The RAN node may be a macro base station (for example, 110a in FIG. 2), a micro base station or an indoor base station (for example, 110b in FIG. 2), or a relay node or a donor node.

In another application scenario, a plurality of RAN nodes may cooperate to assist a terminal in implementing radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) layer of the base station, and may further complete functions of a service data adaptation protocol (service data adaptation protocol, SDAP). The DU completes functions of a radio link control layer and a media/medium access control (media/medium access control, MAC) layer of the base station, and may further complete some or all functions of a physical layer. For specific descriptions of the foregoing protocol layers, refer to related technical specifications in 3GPP. The RU may be configured to implement a sending/receiving function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: CU-control plane and CU-user plane (user plane, UP).

In different systems, the RAN node may have different names. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between an access network device and a terminal device complies with a specific protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media/medium access control (media/medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

For ease of description, the following uses a base station as an example of a RAN node for description.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IOT), virtual reality, augmented reality, industrial control, autonomous driving, telemedicine, a smart grid, smart furniture, a smart office, smart wearable, a smart transportation, a smart city, and the like. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including being deployed indoor or outdoor, handheld, or vehicle-mounted, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 2 may be configured as a mobile base station. For a terminal 120j accessing the radio access network 100 through 120i, the terminal 120i is a base station. However, for the base station 110a, 120i is a terminal. In other words, 110a and 120i may communicate with each other according to a radio air interface protocol. Certainly, 110a and 120i may alternatively communicate with each other according to an interface protocol between base stations. In this case, for 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between the base station and the terminal, between the base stations, or between the terminals may be performed by using a licensed spectrum, an unlicensed spectrum, or both a licensed spectrum and an unlicensed spectrum. Communication may be performed by using a spectrum below 6 gigahertzes (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

In a wireless communication system (for example, the communication system shown in FIG. 2), as a key technology in wireless communication, a MIMO technology may be used to meet a requirement for high-rate transmission. A communication process between a network device and a terminal device is used as an example. The network device performs channel measurement by using a reference signal, to obtain channel state information (channel state information, CSI) (or referred to as channel information). Then, the network device may calculate precoding information between the network device and the terminal device by using the channel information, and subsequently, MIMO communication may be implemented between the network device and the terminal device based on the precoding information.

In an implementation example, to send data to the terminal device, the network device may perform precoding on a digital port, and select a proper encoding scheme and a proper modulation order. For example, precoding is used to make an antenna (or a beam) better align with a channel, to ensure better signal quality and less interference when sent data arrives at a terminal side. A good modulation order and a good code rate can ensure a maximum channel transmission capacity under a reliable data transmission condition. Settings of precoding and a modulation and coding scheme (modulation and coding scheme, MCS) need to be determined based on channel quality and a channel response. In a common method, the network device sends a downlink reference signal, and the terminal device determines a channel based on the downlink reference signal, and then feeds back corresponding channel state information, including precoding information, the number of transport layers (namely, RIs) supported by the channel, and a channel quality indicator (channel quality indicator, CQI) (used to feed back an MCS recommended by the terminal in current channel quality). This process is referred to as channel state information feedback (CSI feedback). In another method, uplink channel information is obtained through measurement by using an uplink reference signal, and then downlink channel information is further obtained based on channel reciprocity.

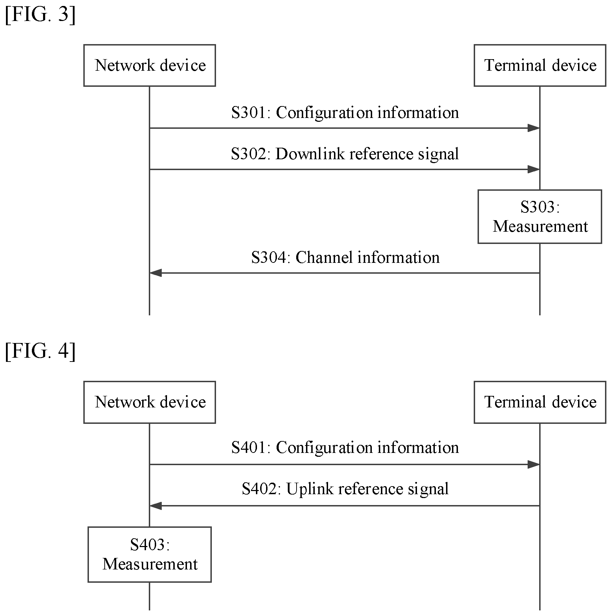

The following separately describes, by using examples with reference to implementation examples shown in FIG. 3 and FIG. 4, implementation processes of a downlink reference signal and an uplink reference signal.

FIG. 3 is a diagram of a process of sending and receiving a reference signal according to an embodiment of this application.

As shown in FIG. 3, an implementation process of a downlink reference signal includes but is not limited to the following steps:
S301: A network device sends configuration information to a terminal device, and correspondingly, the terminal device receives the configuration information from the network device.

The configuration information includes channel information reporting (or measurement) configuration information.

Specifically, the channel information reporting configuration information may be sent by the network device to the terminal device through RRC signaling, and mainly includes two parts: resource configuration information and reporting configuration information.

The resource configuration information is information related to a measurement resource, and may be configured by using a three-level structure (resource configuration (resourceConfig)-resource set (resourceSet)-resource (resource)). In other words, the network device may configure one or more resource configurations for the terminal device. Each resource configuration includes one or more resource sets, and each resource set may include one or more resources. Each resource configuration/resource set/resource includes an index of the resource configuration/resource set/resource. Optionally, the channel information reporting configuration information may further include some other parameters, for example, a period of a resource and a signal type corresponding to the resource.

In addition, the reporting configuration information is information related to measurement result reporting, and is configured by using a reporting configuration (ReportConfig) in a protocol. The network device may configure one or more reporting configurations (ReportConfig) for the terminal device. Each reporting configuration includes information related to reporting, such as a reporting indicator, reporting time, a reporting period, and a reporting format. In addition, the reporting configuration further includes an index of a resource configuration, indicating a measurement configuration based on which a reporting result is obtained through measurement.

Optionally, the channel information reporting configuration information includes codebook configuration information (CodebookConfig), used to configure a Type I or Type II codebook. For example, fields included in the channel information reporting configuration information may be content shown in Table 2 below.

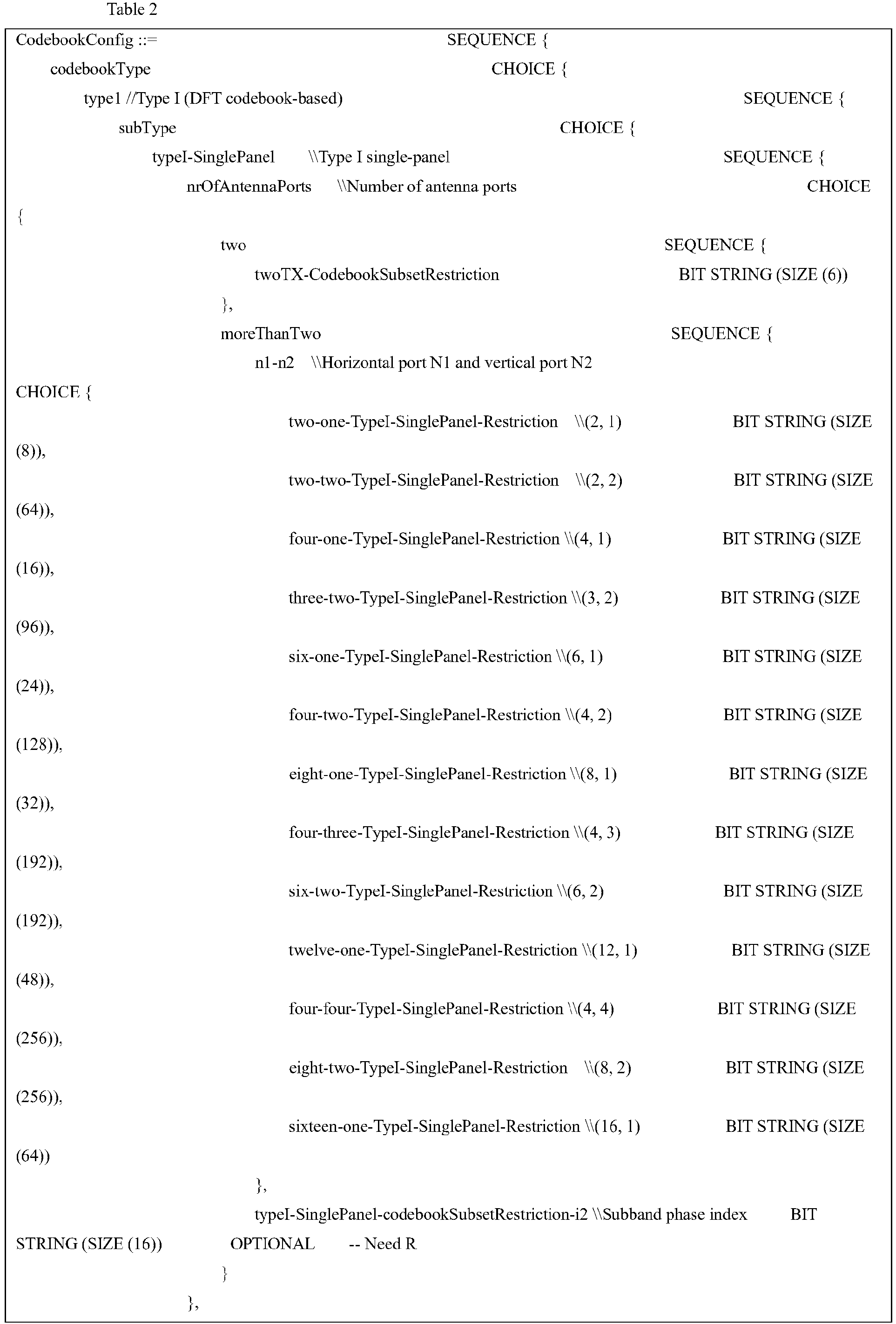

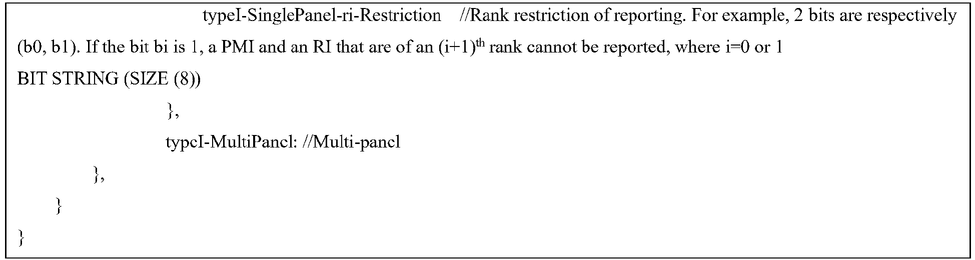

S302: The network device sends a downlink reference signal, and correspondingly, the terminal device receives the downlink reference signal.

For example, the network device sends a downlink signal (generally a downlink reference signal) on a resource configured by using the resource configuration information, so that the terminal device can measure the downlink signal to determine quality of each resource (that is, quality of a beam corresponding to the resource).

S303: The terminal device measures the downlink reference signal based on the channel information reporting configuration information.

The downlink reference signal mainly includes a synchronization signal block (synchronization signal block, SSB), a CSI-RS, a tracking reference signal (tracking reference signal, TRS), and the like. A PBCH may carry a master system information block (master information block, MIB), used to configure master system information of a cell.

S304: The terminal device sends channel information to the network device, and correspondingly, the network device receives the channel information from the terminal device.

For example, the channel information may include a beam measurement report, and the report includes channel state information (channel state information, CSI). The channel state information may include one or more of the following: an index/indexes of one or more resources, a CQI, reference signal received signal quality (reference signal received power, RSRP), a precoding matrix indicator (precoding matrix indicator, PMI), a rank indicator (rank indicator, RI), a layer indicator (layer indicator, LI), a channel state information-reference signal resource indicator (CSI-RS Resource Indicator, CRI) field, a synchronization/broadcast signal block resource indicator (Synchronization Signal/Physical broadcast channel Block Resource Indicator, SSBRI), and the like.

Optionally, for a codebook in Release 15 (Release 15, R15), a PMI matrix of each layer may be equivalent to W = W₁W₂, where a dimension of W is P_{CSI-RS} × N₃, a dimension of W₁ is P_{CSI-RS} × 2L (or is a wideband precoding matrix), a dimension of W₂ is 2L × N₃ (or is a precoding matrix of each subband), P_{CSI-RS} is the number of CSI-RS ports, and N₃ is the number of subbands in PMI feedback (or the number of PMIs).

A codebook generation process may be described in the following steps:
(1) Determine a spatial beam set, that is, a set of all weights in a codebook.
(2) Select a wideband beam group, that is, generate W₁.
(3) Perform beam selection and phase quantization adjustment, that is, generate W₂.

Determining of the spatial beam set is mainly determined by a group or a plurality of groups of parameters in the following Table 3:

**Table 3**

| Number of CSI-RS antenna ports, *P_{CSI-RS}* | (*N₁, N₂*) | (*O₁, O₂*) |
|---|---|---|
| 4 | (2, 1) | (4, 1) |
| 8 | (2, 2) | (4, 4) |
| | (4, 1) | (4, 1) |
| 12 | (3, 2) | (4, 4) |
| | (6, 1) | (4, 1) |
| 16 | (4, 2) | (4, 4) |
| | (8, 1) | (4, 1) |
| 24 | (4, 3) | (4, 4) |
| | (6, 2) | (4, 4) |
| | (12, 1) | (4, 1) |
| 32 | (4, 4) | (4, 4) |
| | (8, 2) | (4, 4) |
| | (16, 1) | (4, 1) |
| 48 | (6, 4) | (4, 4) |
| | (12, 2) | (4, 4) |
| | (24, 1) | (4, 1) |
| 64 | (8, 4) | (4, 4) |
| | (16, 2) | (4, 4) |
| | (32, 1) | (4, 1) |
| 96 | (8, 6) | (4, 4) |
| | (16, 3) | (4, 4) |
| | (24, 2) | (4, 4) |
| | (48, 1) | (4, 1) |
| 128 | (8, 8) | (4, 4) |
| | (16, 4) | (4, 4) |
| | (32, 2) | (4, 4) |
| | (64, 1) | (4, 1) |

It should be understood that Table 3 is merely used as an example for description, and should not constitute a limitation on embodiments of this application. New table content obtained by properly transforming or supplementing the content in Table 3 falls within the protection scope of embodiments of this application.

N₁ represents the number of logical antenna ports in a direction of same polarization, for example, a horizontal direction. N₂ represents the number of logical antenna ports in the other direction of the same polarization, for example, a vertical direction. O₁ represents a DFT oversampling multiple in a direction of N₁ (for example, the horizontal direction). O₂ represents a DFT oversampling multiple in a direction of N₂ (for example, the horizontal direction).

16 CSI-RS ports are used as an example. There may be only two combination forms (4, 2) and (8, 1) shown in the foregoing Table 3 in the horizontal direction and the vertical direction. For example, a value of N₁ is 4, and a value of N₂ is 2. Physical meanings corresponding to N₁ and N₂ are as follows: During beamforming, a total of N₁ × N₂ weight vectors whose horizontal dimension is N₁ and vertical dimension is N₂ may be formed. These weight vectors are orthogonal to each other, that is, there is no interference between beams formed by weighting these weight vectors. Physical meanings of O₁ and O₂ are as follows: The number of weight vectors is increased in the horizontal direction and the vertical direction through DFT oversampling. Therefore, more weight vectors can be generated. In addition, values of O₁ and O₂ also determine beam density in the horizontal direction and beam density in the vertical direction when an antenna form is fixed, that is, when N₁ and N₂ are determined. Larger values of O₁ and O₂ indicate a smaller beam step and higher precision during beam sweeping. However, the weight vectors are no longer orthogonal to each other, that is, interference exists between beams.

The selected wideband beam group W₁ is formed by DFT matrix oversampling, that is, a DFT matrix obtains a beamforming weight with required precision in space through oversampling. Weight vectors of an l^{th} beam and an m^{th} beam corresponding to the horizontal direction and the vertical direction are respectively calculated as follows: ${X}_{1} = {v}_{l} = \left[1 {e}^{\frac{j 2 πl}{{N}_{1} {O}_{1}}} … {e}^{\frac{j 2 π \left({N}_{1}-1\right) l}{{N}_{1} {O}_{1}}}\right]$ ; and ${X}_{2} = {u}_{m} \left\{\begin{matrix}\left[1 {e}^{\frac{j 2 πm}{{N}_{2} {O}_{2}}} … {e}^{\frac{j 2 π \left({N}_{2}-1\right) m}{{N}_{2} {O}_{2}}}\right] {N}_{2} > 1 . \\ 1 {N}_{2} = 1\end{matrix}\right.$

Therefore, corresponding W₁ may be represented in a form of Kronecker product of X₁ and X₂ as follows: ${W}_{1} = \left[\begin{matrix}{X}_{1} ⊗ {X}_{2} & 0 \\ 0 & {X}_{1} ⊗ {X}_{2}\end{matrix}\right] .$

Specifically,
(1) X₁ is a weight vector in the horizontal direction, and a length of the vector is N₁. A specific number of vectors is determined by the number of values of 1, that is, 1 also indicates which weight group is selected in the horizontal direction.
(2) X₂ is a weight vector in the vertical direction, and a length of the vector is N₂. A specific number of vectors is determined by the number of values of m, that is, m also indicates which weight group is selected in the vertical direction.

After weight groups in the horizontal direction and the vertical direction are determined, selected weight groups are determined. A result represented by the Kronecker product of X₁ and X₂ is only a weight result of one group of polarized antennas. However, a specific phase deviation usually exists on the other group of polarized antennas, and is determined by W₂. Therefore, a final expression result of W₁ is in a form of a sub-block diagonal matrix after the Kronecker product of X₁ and X₂.

A weight vector of an (1, m)^{th} beam may be obtained by using the foregoing formula, and is expressed as follows: ${v}_{l , m} = \left[{u}_{m} {u}_{m}{e}^{\frac{j 2 πl}{{N}_{1} {O}_{1}}} ⋯ {u}_{m}{e}^{\frac{j 2 π \left({N}_{1}-1\right) l}{{N}_{1} {O}_{1}}}\right] .$

W₁ is actually a beam group formed by beams obtained by calculating all values of 1 and m according to the foregoing formula. An actual beam used by the terminal within a related bandwidth and related time does not exceed this range. Beams included in W₁ may be further classified into two cases:
A. A plurality of oversampled DFT beams, where the beams are not orthogonal to each other, and are collectively represented by v_{l,m}.
B. A plurality of orthogonal DFT beams, where the beams are distinguished from each other by using v_{l,m}, v_{l',m'}, v_{l",m"}, ...

Therefore, a specific expression of W₁ (which needs to be generated according to a protocol) is as follows: ${W}_{1} = \frac{1}{\sqrt{P \times v}} \left[\begin{matrix}{v}_{l , m} & {v}_{l ′ , m ′} & ⋯ & & 0 & \\ & 0 & & {v}_{l , m} & {v}_{l ′ , m ′} & ⋯\end{matrix}\right] .$

P represents the number of CSI-RS ports. v represents the number of streams (the number of layers). $\frac{1}{\sqrt{P \times v}}$ is used as a power normalization coefficient, to ensure that total power on an antenna port remains unchanged before and after beamforming weighting is performed. The number of CSI-RS ports is the number of rows of a matrix, that is, the number of rows of v_{l,m} multiplied by 2. A non-zero sub-diagonal block on the upper left of W₁, that is, each column of a column vector group formed by v_{l,m}, v_{l',m'}, ···, represents a beam in a specific direction of a same polarized antenna.

Beam selection and phase quantization adjustment performed on W₂ are mainly used to quantize and adjust a phase difference of weights on the other group of polarized antennas.

It may be understood that specific forms of W₁ and W₂ may be based on section 5.2.2.2.1 in 3GPP protocol 38.214-h70, and should not constitute a limitation on embodiments of this application.

The foregoing briefly describes a generation process of an R15 Type I codebook. For more details, refer to 3GPP protocol 38.214. Details are not described herein again.

Optionally, a PMI matrix may be equivalently represented as $W = {W}_{1} {{W}^{˜}}_{2} {W}_{f}^{H}$, where a dimension of W is P_{CSI-RS} × N₃, a dimension of W₁ is P_{CSI-RS} × 2L (or is a wideband precoding matrix), a dimension of ${{W}^{˜}}_{2} {W}_{f}^{H}$ is 2L × N₃ (corresponding to W₂ in Release 15, that is, a precoding matrix of each subband), a dimension of *W̃*₂ is 2L × M (or is a compressed matrix), a dimension of ${W}_{f}^{H}$ is M × N₃ (is an M^{th} row in an inverse discrete Fourier transform (inverse discrete Fourier transform, IDFT) matrix whose dimension is N₃ × N₃, that is, a conjugate of an M^{th} column in a DFT matrix W_{f} whose dimension is N₃ × N₃), P_{CSI-RS} is the number of CSI-RS ports, $M = \left⌈{p}_{υ}\frac{{N}_{3}}{R}\right⌉$ is the number of selected IDFT base vectors, and N₃ is the number of subbands in PMI feedback (or the number of PMIs). During final feedback, only a port or DFT codebook information related to W₁, IDFT base selection information related to ${W}_{f}^{H}$, and a non-zero element in *W̃*₂, need to be fed back. For more details, refer to 3GPP protocol 38.214. Details are not described again.

For example, Table 4 shows formats of some fields in beam measurement reporting information in the R15 protocol.

A CRI field and an SSBRI field indicate indexes of to-be-reported resources. Only a CRI or an SSBRI may be reported, or both the CRI and the SSBRI may be reported. $\left⌈{log}_{2}\left({K}_{s}^{CSI - RS}\right)\right⌉$ and $\left⌈{log}_{2}\left({K}_{s}^{SSB}\right)\right⌉$ are lengths of the CRI field and the SSBRI field, where ${K}_{s}^{CSI - RS}$ represents the number of CSI-RS resources in a resource set s, ${K}_{s}^{SSB}$ represents the number of SSB resources in the resource set s, and $\left⌈.\right⌉$ represents rounding up. A differential reporting criterion is used for RSRP reporting. To be specific, RSRP (an RSRP field in Table 4) of a best resource is reported through 7-bit quantization, and other RSRP (a differential RSRP field in Table 4) is reported through 4-bit quantization.

**Table 4**

| Field | Bit width |
|---|---|
| (Field) | (Bit width) |
| CRI | $\left⌈{log}_{2}\left({K}_{s}^{CSI - RS}\right)\right⌉$ |
| SSBRI | $\left⌈{log}_{2}\left({K}_{s}^{SSB}\right)\right⌉$ |
| RSRP | 7 |
| Differential RSRP | 4 |

Optionally, the channel state information may be carried in uplink control information (uplink control information, UCI) and transmitted through a physical uplink control channel (Physical Uplink Control Channel, PUCCH) or a physical uplink shared channel (Physical Uplink Shared Channel, PUSCH).

In addition, after obtaining the channel information in step S304, the network device may determine scheduling information, including one or more of the following: an MCS, resource block (resource block, RB) resource allocation, a transmit beam, and a receive beam, to improve a degree of beam-channel alignment, thereby helping improve a communication rate and efficiency.

FIG. 4 is a diagram of another process of sending and receiving a reference signal according to an embodiment of this application.

As shown in FIG. 4, an implementation process of an uplink reference signal includes but is not limited to the following steps:
S401: A network device sends configuration information to a terminal device, and correspondingly, the terminal device receives the configuration information from the network device.

For example, the configuration information may include configuration information of a reference signal. For example, the reference signal may be a sounding reference signal (sounding reference signal, SRS).

Specifically, the configuration information may be sent by the network device to the terminal device through RRC signaling, and the configuration information mainly includes resource configuration information of the reference signal. The resource configuration information of the reference signal is information related to a measurement resource, and is configured by using a two-level structure (resource set resourceSet-resource resource) in a protocol. The network device may configure one or more resource sets for the terminal device. Each resource set may include one or more resources. Each resource set/resource includes an index of the resource set/resource. In addition, some other parameters may be further included, for example, a period of a resource and a signal type corresponding to the resource.

S402: The terminal device sends one or more uplink reference signals, and correspondingly, the network device receives the one or more uplink reference signals.

S403: The network device measures the uplink reference signals to obtain channel information, and may subsequently perform data scheduling, precoding, and the like based on the channel information.

The foregoing implementation examples may be applied to a MIMO system. The implementation process of the downlink reference signal shown in FIG. 3 is used as an example. A CSI-RS is sent through a port of the network device. In the MIMO system, as a frequency band increases and a requirement for high-speed communication increases, the number of ports of the network device may gradually increase. However, different numbers of ports have different requirements on a measurement calculation amount, feedback overheads, resource overheads, and the like. Therefore, CSI measurement performed when the number of ports of each resource is fixed and/or the number of reference signal resources is fixed, and a total number of ports is fixed has poor CSI measurement performance.

In view of this, embodiments of this application provide a new communication method, to support CSI measurement performed on CSI-RSs sent in a scenario with a large number of antenna ports, thereby improving CSI measurement performance. The following provides detailed descriptions with reference to the accompanying drawings.

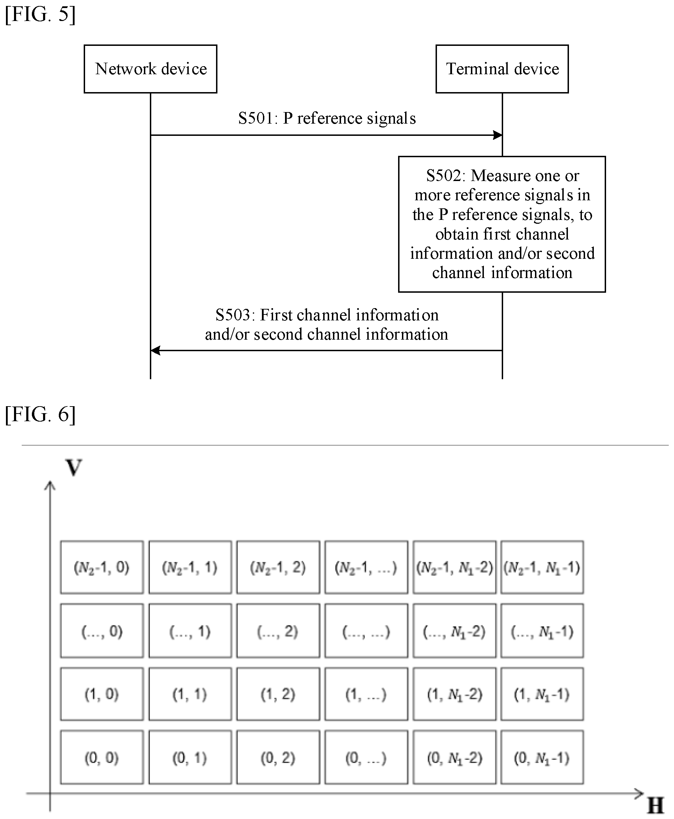

FIG. 5 is a schematic flowchart of a communication method according to an embodiment of this application. The communication method is applied to the field of communication technologies, for example, communication in CSI measurement.

It should be noted that in FIG. 5, the method is illustrated by using an example in which a terminal device and a network device are used as execution bodies of the interaction illustration. However, the execution bodies of the interaction illustration are not limited in this application. For example, the terminal device that performs S501 and S502 in FIG. 5 and corresponding implementations may be the terminal device, may be a chip, a chip system, or a processor that supports the terminal device in implementing the method, or may be a logical module or software that can implement all or some functions of the terminal device. The network device that performs S501 and S502 in FIG. 5 and corresponding implementations may be the network device, may be a chip, a chip system, or a processor that supports the network device in implementing the method, or may be replaced with a logical module or software that can implement all or some functions of the network device.

Optionally, the network device that performs the method shown in FIG. 5 may be an ORAN network element, including but not limited to one or more of an O-CU-CP, an O-CU-UP, an O-DU, and an O-RU.

The communication method includes but is not limited to the following steps:
S501: The network device sends P reference signals to the terminal device, and correspondingly, the terminal device receives the P reference signals from the network device.
S502: The terminal device measures one or more reference signals in the P reference signals, to obtain first channel information and/or second channel information.
S503: The terminal device sends the first channel information and/or the second channel information to the network device, and correspondingly, the network device receives the first channel information and/or the second channel information from the terminal device.

It may be understood that the network device in embodiments of this application is a device that is equipped with a processor that can be configured to execute computer-executable instructions, and may be an access network device, for example, a base station or a transmission point TRP. Specifically, the network device may be the access network device in FIG. 2 (including but not limited to any one of the base station 110a and the base station 110b), and is configured to perform the communication method in embodiments of this application, to support CSI measurement performed on CSI-RSs sent in a scenario with a large number of antenna ports, thereby improving CSI measurement performance.

It may be understood that the terminal device in embodiments of this application is a device that is equipped with a processor/chip that can be configured to execute computer-executable instructions, or may be a processor/chip that can be configured to execute the computer-executable instructions. This is not limited in embodiments of this application. Optionally, the terminal device may be a handheld terminal (for example, a mobile phone or a tablet computer), or may be a vehicle-mounted terminal (for example, a wireless terminal in self-driving), or the like. Specifically, the terminal device may be the terminal device in FIG. 2 (including but not limited to any one of the terminal devices 120a to 120j), and is configured to participate in performing the communication method in embodiments of this application, to support CSI measurement performed on CSI-RSs sent in a scenario with a large number of antenna ports, thereby improving CSI measurement performance.

Each of the P reference signals corresponds to N antenna ports, the P reference signals are used to determine the first channel information and/or the second channel information, the first channel information corresponds to the one or more reference signals in the P reference signals, the second channel information corresponds to N×P antenna ports, and the N×P antenna ports correspond to the P reference signals.

It may be understood that the P reference signals may be specifically CSI-RSs, the P reference signals are sent on corresponding P time-frequency resources, and there is a constraint relationship between the P time-frequency resources, for example, a constraint relationship based on an orthogonal cover code (orthogonal cover code, OCC). That is, it may be understood that the P reference signals are sent on the corresponding P time-frequency resources in an OCC manner. Because each reference signal corresponds to the N antenna ports, the P reference signals sent on the corresponding P time-frequency resources in the OCC manner may be correspondingly mapped to the N×P antenna ports. It may be understood that the OCC is a possible implementation of the constraint relationship, and another possible constraint relationship also falls within the protection scope of embodiments of this application. For brevity of description, the following uses the OCC constraint relationship as an example for description. This should not be construed as a limitation on embodiments of this application.

Correspondingly, the terminal device may obtain, by measuring the one or more reference signals in the corresponding P reference signals on the P time-frequency resources having the constraint relationship, the first channel information corresponding to any one or more of the P reference signals, or may obtain the second channel information corresponding to the N×P antenna ports corresponding to the P reference signals. Specifically, dynamic CSI measurement may be performed based on the constraint relationship between the P time-frequency resources in different communication scenarios, and different measurement results are selected. This is not limited in this application. For example, in a communication scenario of a single transmission and reception point (transmission and reception point, TRP) (or a plurality of TRPs), if a CSI measurement capability of the terminal device is strong, a requirement of CSI measurement performance can be met only by obtaining the first channel information corresponding to the one or more reference signals in the P reference signals. In a communication scenario of a single TRP, if a CSI measurement capability of the terminal device is poor, a requirement of CSI measurement performance can be met by obtaining the second channel information corresponding to the N×P antenna ports corresponding to the P reference signals.

In an implementation, the P time-frequency resources (reference signal resources) correspond to a same reference signal resource set.

It may be understood that different numbers of ports have different requirements on a measurement calculation amount, feedback overheads, resource overheads, and the like. Therefore, CSI measurement performed when the number of ports of each resource is fixed and/or the number of reference signal resources is fixed, and a total number of ports is fixed has poor CSI measurement performance.

However, in embodiments of this application, compared with obtaining the first channel information corresponding to the one or more reference signals in the P reference signals, when the terminal device obtains, after performing dynamic CSI measurement, the second channel information corresponding to the N×P antenna ports corresponding to the P reference signals, the terminal device can obtain more channel information. This is equivalent to that the terminal device can support CSI measurement performed on CSI-RSs sent in a scenario with a large number of antenna ports, thereby improving CSI measurement performance.

It may be understood that the communication method in embodiments of this application is also applicable to a DBF architecture, which is similar to that applied to an HBF architecture. Therefore, details are not described again.

In a possible embodiment, a first dimension of the N antenna ports is N₁, and a second dimension of the N antenna ports is N₂, where N=2×N₁×N₂.

A first dimension of the N×P antenna ports is K₁×N₁, and a second dimension of the N×P antenna ports is K₂×N₂, where K₁=P, and K₂=1.

Alternatively, a first dimension of the N×P antenna ports is K₁×N₁, and a second dimension of the N×P antenna ports is K₂×N₂, where K₁=1, and K₂=P.

Alternatively, a first dimension of the N×P antenna ports is K₁×N₁, and a second dimension of the N×P antenna ports is K₂×N₂, where K₁×K₂=P.

It may be understood that, that the first dimension of the N antenna ports corresponding to each of the P reference signals is N₁ and the second dimension of the N antenna ports corresponding to each of the P reference signals is N₂ may also be understood as that a first dimension of the N antenna ports on a single time-frequency resource is N₁, and a second dimension of the N antenna ports on the single time-frequency resource is N₂. N₁ represents the number of logical antenna ports in a direction of same polarization, and is generally in a horizontal direction. N₂ represents the number of logical antenna ports in the other direction of the same polarization, and is generally in a vertical direction. N₁ and N₂ may be understood as two mutually perpendicular dimensions and meet the following relationship: N=2×N₁×N₂.

However, the P reference signals sent on the corresponding P time-frequency resources in the OCC manner may result in a plurality of different arrangement manners for the mapped N×P antenna ports. Details are as follows:

### Manner 1:

An original arrangement of the N antenna ports is extended by K₁ times in the first dimension (that is, the horizontal direction). In this case, a first dimension of the N×P antenna ports is K₁×N₁, and a second dimension of the N×P antenna ports is K₂×N₂, where K₁=P, and K₂=1. It may also be understood that a first dimension of the original N antenna ports on the P time-frequency resources corresponding to the P reference signals is K₁×N₁, and a second dimension of the original N antenna ports on the P time-frequency resources corresponding to the P reference signals is K₂×N₂.

For example, when P=2, that is, when the number of reference signals is 2, K₁=2, and K₂=1.

It may be understood that, when the two reference signals are sent on two time-frequency resources in the OCC manner and are correspondingly mapped to 2N antenna ports, the 2N antenna ports may be obtained by extending the original arrangement of the N antenna ports by K₁=2 times in the first dimension (that is, the horizontal direction).

For example, when P=4, that is, when the number of reference signals is 4, K₁=4, and K₂=1.

It may be understood that, when the four reference signals are sent on four time-frequency resources in the OCC manner and are correspondingly mapped to 4N antenna ports, the 4N antenna ports may be obtained by extending the original arrangement of the N antenna ports by K₁=4 times in the first dimension (that is, the horizontal direction).

For example, when P=8, that is, when the number of reference signals is 8, K₁=8, and K₂=1.

It may be understood that, when the eight reference signals are sent on eight time-frequency resources in the OCC manner and are correspondingly mapped to 8N antenna ports, the 8N antenna ports may be obtained by extending the original arrangement of the N antenna ports by K₁=8 times in the first dimension (that is, the horizontal direction).

### Manner 2:

An original arrangement of the N antenna ports is extended by K₂ times in the second dimension (that is, the vertical direction). In this case, a first dimension of the N×P antenna ports is K₁×N₁, and a second dimension of the N×P antenna ports is K₂×N₂, where K₁=1, and K₂=P. It may also be understood that a first dimension of the original N antenna ports on the P time-frequency resources corresponding to the P reference signals is K₁×N₁, and a second dimension of the original N antenna ports on the P time-frequency resources corresponding to the P reference signals is K₂×N₂.

For example, when P=2, that is, when the number of reference signals is 2, K₁=1, and K₂=2.

It may be understood that, when the two reference signals are sent on two time-frequency resources in the OCC manner and are correspondingly mapped to 2N antenna ports, the 2N antenna ports may be obtained by extending the original arrangement of the N antenna ports by K₂=2 times in the second dimension (that is, the vertical direction).

For example, when P=4, that is, when the number of reference signals is 4, K₁=1, and K₂=4.

It may be understood that, when the four reference signals are sent on four time-frequency resources in the OCC manner and are correspondingly mapped to 4N antenna ports, the 4N antenna ports may be obtained by extending the original arrangement of the N antenna ports by K₂=4 times in the second dimension (that is, the vertical direction).

For example, when P=8, that is, when the number of reference signals is 8, K₁=1, and K₂=8.

It may be understood that, when the eight reference signals are sent on eight time-frequency resources in the OCC manner and are correspondingly mapped to 8N antenna ports, the 8N antenna ports may be obtained by extending the original arrangement of the N antenna ports by K₂=8 times in the second dimension (that is, the vertical direction).

### Manner 3:

An original arrangement of the N antenna ports is extended by K₁ times in the first dimension (that is, the horizontal direction) and by K₂ times in the second dimension (that is, the vertical direction). In this case, a first dimension of the N×P antenna ports is K₁×N₁, and a second dimension of the N×P antenna ports is K₂×N₂, where K₁×K₂=P. It may also be understood that a first dimension of the original N antenna ports on the P time-frequency resources corresponding to the P reference signals is K₁×N₁, and a second dimension of the original N antenna ports on the P time-frequency resources corresponding to the P reference signals is K₂×N₂.

For example, when P=4, that is, when the number of reference signals is 4, K₁=2, and K₂=2.

It may be understood that, when the four reference signals are sent on four time-frequency resources in the OCC manner and are correspondingly mapped to 4N antenna ports, the 4N antenna ports may be obtained by extending the original arrangement of the N antenna ports by K₁=2 times in the first dimension (that is, the horizontal direction) and by K₂=2 times in the second dimension (that is, the vertical direction).

For example, when P=8, that is, when the number of reference signals is 8, K₁=2, and K₂=4.

It may be understood that, when the eight reference signals are sent on eight time-frequency resources in the OCC manner and are correspondingly mapped to 8N antenna ports, the 8N antenna ports may be obtained by extending the original arrangement of the N antenna ports by K₁=2 times in the first dimension (that is, the horizontal direction) and by K₂=4 times in the second dimension (that is, the vertical direction).

For example, when P=8, that is, when the number of reference signals is 8, K₁=4, and K₂=2.

It may be understood that, when the eight reference signals are sent on eight time-frequency resources in the OCC manner and are correspondingly mapped to 8N antenna ports, the 8N antenna ports may be obtained by extending the original arrangement of the N antenna ports by K₁=4 times in the first dimension (that is, the horizontal direction) and by K₂=2 times in the second dimension (that is, the vertical direction).

In embodiments of this application, the P reference signals are sent on the P time-frequency resources in the OCC manner, so that dynamic extension of the N×P antenna ports, and dynamic CSI measurement and channel information feedback of the terminal device can be implemented.

In a possible embodiment, a first dimension of the N antenna ports is N₁, and a second dimension of the N antenna ports is N₂, where N=2×N₁×N_{2.}

A first dimension of the N×P antenna ports is K₁×N₁, and a second dimension of the N×P antenna ports is N₂, where 1<K₁≤P.

Alternatively, a first dimension of the N×P antenna ports is N₁, and a second dimension of the N×P antenna ports is K₂×N₂, where 1<K₂≤P.

Alternatively, a first dimension of the N×P antenna ports is K₁×N₁, and a second dimension of the N×P antenna ports is K₂×N₂, where 1<K₁×K₂≤P.

It may be understood that, that the first dimension of the N antenna ports corresponding to each of the P reference signals is N₁ and the second dimension of the N antenna ports corresponding to each of the P reference signals is N₂ may also be understood as that a first dimension of the N antenna ports on a single time-frequency resource is N₁, and a second dimension of the N antenna ports on the single time-frequency resource is N₂. N₁ represents the number of logical antenna ports in a direction of same polarization, and is generally in a horizontal direction. N₂ represents the number of logical antenna ports in the other direction of the same polarization, and is generally in a vertical direction. N₁ and N₂ may be understood as two mutually perpendicular dimensions and meet the following relationship: N=2×N₁×N₂.

However, the P reference signals sent on the corresponding P time-frequency resources in the OCC manner may result in a plurality of different arrangement manners for the mapped N×P antenna ports. Details are as follows:

### Manner 4:

When P=2, that is, when the number of reference signals is 2, K₁=2.

Alternatively, when P=2, that is, when the number of reference signals is 2, K₂=2.

### Manner 5:

When P=4, that is, when the number of reference signals is 4, K₁=2, 3, or 4.

Alternatively, when P=4, that is, when the number of reference signals is 4, K₂=2, 3, or 4.

Alternatively, when P=4, that is, when the number of reference signals is 4, K₁=2, and K₂=2; K₁=1, and K₂=2; or K₁=2, and K₂=1.

### Manner 6:

When P=8, that is, when the number of reference signals is 8, K₁=2, 3, 4, 5, 6, 7, or 8.

Alternatively, when P=8, that is, when the number of reference signals is 8, K₂=2, 3, 4, 5, 6, 7, or 8.

Alternatively, when P=8, that is, when the number of reference signals is 8, K₁=1, and K₂=8; K₁=2, and K₂=4; K₁=4, and K₂=2; or K₁=8, and K₂=1.

It may be understood that examples corresponding to the foregoing manner 4 to manner 6 are similar to the examples corresponding to the foregoing manner 1 to manner 3. Details are not described herein again.

Optionally, the examples corresponding to the foregoing manner 1 to manner 6 may be specifically as follows:
When the number of reference signals is 2, K₁=2, and K₂=1.

Alternatively, when the number of reference signals is 2, K₁=1, and K₂=2.

Alternatively, when the number of reference signals is 4, K₁=4, and K₂=1.

Alternatively, when the number of reference signals is 4, K₁=2, and K₂=2.

Alternatively, when the number of reference signals is 4, K₁=1, and K₂=4.

Alternatively, when the number of reference signals is 8, K₁=8, and K₂=1.

Alternatively, when the number of reference signals is 8, K₁=4, and K₂=2.

Alternatively, when the number of reference signals is 8, K₁=2, and K₂=4.

Alternatively, when the number of reference signals is 8, K₁=1, and K₂=8.

In embodiments of this application, the P reference signals are sent on the P time-frequency resources in the constraint manner (for example, the OCC), so that dynamic extension of the N×P antenna ports, and dynamic CSI measurement and channel information feedback of the terminal device can be implemented.

In an implementation, the N×P antenna ports may be determined based on Table 3 and Table 5. Table 5 is merely an example. In practice, only some rows or some columns may be used.

**Table 5**

| Number of CSI-RS resources *P* | (*K₁*, *K₂*) |
|---|---|
| 2 | (2, 1) |
| | (1, 2) |
| 4 | (2, 2) |
| | (4, 1) |
| | (1, 4) |
| 6 | (3, 2) |
| | (6, 1) |
| | (2, 3) |
| 8 | (4, 2) |
| | {2, 4} |
| | (8, 1) |
| | (1, 8) |
| 12 | (4, 3) |
| | (6, 2) |
| | (3, 4) |
| | (2, 6) |
| | (12, 1) |
| | (1, 12) |
| 16 | (1, 16) |
| | (2, 8) |
| | (4, 4) |
| | (8, 2) |
| | (16, 1) |

In a possible embodiment, the communication method in this application further provides a possible solution for indicating K₁ and/or K₂. Details are as follows:

### Solution 1:

A first extension factor K₁ and/or a second extension factor K₂ are/is indicated by using first indication information sent by the network device to the terminal device.

Optionally, the network device sends the first indication information to the terminal device, and correspondingly, the terminal device receives the first indication information from the network device.

The first indication information indicates K₁ and/or K₂, and K₁ and/or K₂ are/is related to P.

According to Solution 1, the network device may configure K₁ and/or K₂, and indicate K₁ and/or K₂ to the terminal device, to implement dynamic extension of the N×P antenna ports, and dynamic CSI measurement and channel information feedback of the terminal device. For example, refer to Table 5.

### Solution 2:

A first extension factor K₁ and/or a second extension factor K₂ are/is determined based on a reference signal measurement result of the terminal device, K₁ is less than or equal to a first value, K₂ is less than or equal to a second value, and the first value and/or the second value are/is indicated by using second indication information sent by the network device to the terminal device.

Optionally, the network device sends the second indication information to the terminal device, and correspondingly, the terminal device receives the second indication information from the network device.

The terminal device sends K₁ and/or K₂ to the network device, and correspondingly, the network device receives K₁ and/or K₂ from the terminal device.

The second indication information indicates the first value and/or the second value. The first value may be understood as a maximum value allowed by K₁, and the second value may be understood as a maximum value allowed by K₂. K₁ is less than or equal to the first value, K₂ is less than or equal to the second value, and K₁ and/or K₂ are/is determined based on the reference signal measurement result of the terminal device.

It may be understood that the network device configures the first value and/or the second value, and indicates the first value and/or the second value to the terminal device; and the terminal device determines, based on the reference signal measurement result, K₁ that is less than or equal to the first value and K₂ that is less than or equal to the second value, and indicates the configured K₁ and/or the configured K₂ to the network device, to implement dynamic extension of the N×P antenna ports, and dynamic CSI measurement and channel information feedback of the terminal device.

In a possible embodiment, the communication method in this application further provides a possible solution for arranging indexes of the N×P antenna ports. Details are as follows:

The indexes of the N×P antenna ports are indicated by using third indication information sent by the network device to the terminal device in an arrangement order of first the second dimension and then the first dimension.

Optionally, the network device sends the third indication information to the terminal device, and correspondingly, the terminal device receives the third indication information from the network device.

The third indication information indicates the arrangement order of the indexes of the N×P antenna ports, and specifically, the indexes are arranged in an ascending order of first the second dimension (that is, the vertical direction) and then the first dimension (that is, the horizontal direction).

According to embodiments of this application, the indexes of the N×P antenna ports obtained through extension may be arranged, to establish a mapping relationship between the N×P antenna ports and corresponding beams.

Further, the second channel information is determined by using the following parameters: ${u}_{m} = \left\{\begin{matrix}\left[1 {e}^{\frac{j 2 πm}{{N}_{2} {O}_{2} {K}_{2}}} … {e}^{\frac{j 2 π \left({N}_{2}-1\right) m}{{N}_{2} {O}_{2} {K}_{2}}}\right] ; {N}_{2} > 1 ; \\ 1 ; {N}_{2} = 1\end{matrix}\right.$ and ${v}_{l , m} = \left[{u}_{m} {u}_{m}{e}^{\frac{j 2 πl}{{N}_{1} {O}_{1} {K}_{1}}} ⋯ {u}_{m}{e}^{\frac{j 2 π \left({N}_{1}-1\right) l}{{N}_{1} {O}_{1} {K}_{1}}}\right] .$

l ∈ [0, N₁O₁K₁ - 1], m ∈ [0, N₁O₁K₁ - 1], uₘ represents a beam weight corresponding to a beam whose second dimension is m, v_{l,m} represents a beam weight corresponding to a beam whose first dimension is l and second dimension is m, O₁ represents an oversampling multiple in the first dimension, O₂ represents an oversampling multiple in the second dimension, and e is a natural constant.

It may be understood that, based on a weight vector of a beam whose first dimension is l and second dimension is m and that corresponds to the N antenna ports and that is defined in an original protocol, an extension multiple K₁ of the N×P antenna ports in the first dimension (that is, the horizontal direction) and an extension multiple K₂ of the N×P antenna ports in the second dimension (that is, the vertical direction) are introduced, so that a weight vector (that is, a beam weight) of a beam whose first dimension is l and second dimension is m and that corresponds to the N×P antenna ports can be obtained, thereby improving CSI measurement performance.

In a possible embodiment, the communication method in this application further provides a coupling relationship between P weight coefficients corresponding to the P reference signals.

It may be understood that the coupling relationship may also be considered as an OCC constraint relationship, so that the P reference signals are sent on the corresponding P time-frequency resources in the OCC manner. In this way, the terminal device may perform dynamic CSI measurement based on the coupling relationship between the P weight coefficients in different communication scenarios, to obtain more channel information. This can support CSI measurement performed on CSI-RSs sent in a scenario with a large number of antenna ports, thereby improving CSI measurement performance.

Specifically, the coupling relationship between the P weight coefficients corresponding to the P reference signals may be implemented in the following forms:

### Form 1:

The coupling relationship between the P weight coefficients is limited in a form of +1 and -1.

For example, when P=2, a first weight coefficient in the P weight coefficients is (+1, +1), indicating that a reference signal is sent on a transceiver channel on a first time-frequency resource in a form of (+1, +1), and a second weight coefficient in the P weight coefficients is (+1, -1), indicating that a reference signal is sent on a transceiver channel on a second time-frequency resource in a form of (+1, -1). In this case, there is an orthogonal relationship between the first weight coefficient and the second weight coefficient. Similarly, an orthogonal relationship may also be implemented between other weight coefficients in the P weight coefficients in the form of +1 and -1.

### Form 2:

The coupling relationship between the P weight coefficients is limited in a form of 1 and 0.

For example, when P=2, a first weight coefficient in the P weight coefficients is (1, 0), indicating that a reference signal is sent on a transceiver channel on a first time-frequency resource in a form of (1, 0), and a second weight coefficient in the P weight coefficients is (0, 1), indicating that a reference signal is sent on a transceiver channel on a second time-frequency resource in a form of (0, 1). Similarly, a coupling relationship may also be implemented between other weight coefficients in the P weight coefficients in the form of 1 and 0.

### Form 3:

The coupling relationship between the P weight coefficients is limited in a form of 1 and i, where i is an imaginary unit.

For example, when P=2, a first weight coefficient in the P weight coefficients is (1, i), indicating that a reference signal is sent on a transceiver channel on a first time-frequency resource in a form of (1, i), and a second weight coefficient in the P weight coefficients is (1, -i), indicating that a reference signal is sent on a transceiver channel on a second time-frequency resource in a form of (1, -i). In this case, the first weight coefficient and the second weight coefficient are full rank but not orthogonal. Similarly, a coupling relationship may also be implemented between other weight coefficients in the P weight coefficients in the form of 1 and i.

According to the coupling relationship between the P weight coefficients in embodiments of this application, the terminal device can perform dynamic CSI measurement based on the coupling relationship between the P weight coefficients in different communication scenarios, to obtain more channel information, and support CSI measurement performed on CSI-RSs sent in a scenario with a large number of antenna ports, thereby improving CSI measurement performance.

In a possible embodiment, information carried in the first channel information and/or the second channel information further includes a channel state information-reference signal resource indicator (CSI-RS resource indicator, CRI). Details are as follows:

### Case 1:

The first channel information is carried in first information, and the first information further includes one or more first channel state information-reference signal resource indicators (CSI-RS resource indicator, CRI) corresponding to the one or more reference signals in the P reference signals.

In this case, the first information includes channel information corresponding to the first CRIs, that is, channel information corresponding to the one or more reference signals in the P reference signals.

In Case 1, the terminal device may perform dynamic CSI measurement, and select to report a first CRI (or a first reference signal) and channel information corresponding to the first CRI, thereby improving CSI measurement performance.

### Case 2:

The second channel information is carried in second information, the second information further includes a second CRI, and there is a mapping relationship between the second CRI and P first CRIs corresponding to the P reference signals.

That there is a mapping relationship between the second CRI and the plurality of first CRIs (or the plurality of first reference signals) corresponding to the P reference signals may be understood as that the plurality of first CRIs are mapped to the second CRI. In other words, the second CRI may be understood as a joint identifier of the plurality of first CRIs (or the plurality of first reference signals). Details are shown in Table 6:

**Table 6**

| CRI index | Corresponding reference signal or reference signal combination |
|---|---|
| CRI #0 | CSI-RS #0 |
| CRI #1 | CSI-RS #1 |
| ... | ... |
| CRI #P-1 | CSI-RS #P-1 |
| CRI #P | (CSI-RS #0, CSI-RS #1) |
| CRI #P+1 | (CSI-RS #2, CSI-RS #3) |
| ... | ... |
| CRI #Y | (CSI-RS #0, CSI-RS #1, ..., CSI-RS #P-1) |

It may be understood that the CRI #P to the CRI #Y correspond to the second CRI. A larger number of ports (that is, N×K) may be determined based on a plurality of first reference signals (for example, K) and a corresponding constraint relationship. Channel information corresponding to the CRI #Y is channel information corresponding to the N×P antenna ports corresponding to the P reference signals.

It should be understood that Table 6 is merely used as an example for description, and should not constitute a limitation on embodiments of this application. New table content obtained by properly transforming or supplementing the content in Table 6 falls within the protection scope of embodiments of this application.

In Case 2, the terminal device may perform dynamic CSI measurement, and select to report a second CRI and channel information corresponding to the second CRI, to obtain more channel information. This is equivalent to that the terminal device can support CSI measurement performed on CSI-RSs sent in a scenario with a large number of antenna ports, thereby improving CSI measurement performance.

Optionally, the second CRI (or corresponding to a combination of a plurality of first reference signals and a combination manner) may be preconfigured by the network device, or may be determined by the terminal device. This is not limited in embodiments of this application.

When the second CRI is preconfigured by the network device, the network device further configures a plurality of first CRIs corresponding to the second CRI. Correspondingly, the terminal device reports the second CRI and the channel information corresponding to the second CRI.

When the second CRI is determined by the terminal device, the terminal device needs to report the second CRI and channel information corresponding to the second CRI, and a plurality of first CRIs corresponding to the second CRI.

According to embodiments of this application, the terminal device may perform dynamic CSI measurement, and select to report a second CRI and channel information corresponding to the second CRI, to obtain more channel information. This is equivalent to that the terminal device can support CSI measurement performed on CSI-RSs sent in a scenario with a large number of antenna ports, thereby improving CSI measurement performance.

The following further describes dynamic port extension between CSI-RS resources in the communication method shown in FIG. 5 with reference to FIG. 6 to FIG. 11B.

FIG. 6 is a diagram of CSI-RS resources according to an embodiment of this application.

As shown in FIG. 6, patterns of a plurality of CSI-RS resources are fixed, and the CSI-RS resources are independent of each other. It is assumed that the number of horizontal ports is N₁, the number of vertical ports is N₂, and N₁ and N₂ are configured by a base station. A CSI measurement reporting manner is fixed, and 3I (an RI, a PMI, and a CQI) is independently calculated based on (N₁, N₂) and a corresponding CSI-RS resource indicator.

The base station configures a pilot (a CSI-RS is used as an example for description, and no limitation is imposed) for a terminal, where the pilot includes the number of CSI-RS resources, a pilot pattern, the number of digital ports, and an OCC manner of digital ports between different CSI-RS resources. A core of embodiments of this application is to notify the terminal of a CSI-RS resource indicated by the base station and an OCC manner between CSI-RS resources, to facilitate subsequent CSI measurement, weighted calculation, and 3I feedback of the terminal. The base station may notify the terminal of the OCC manner between the CSI-RS resources, and the OCC manner may specifically include a horizontal/vertical manner, a CSI-RS resource group, and the like.

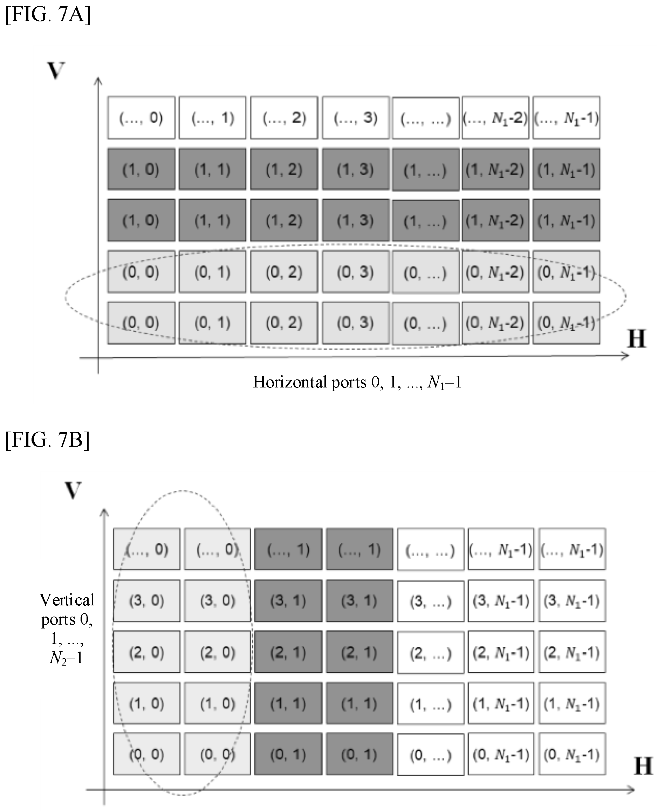

FIG. 7A and FIG. 7B are diagrams of CSI-RS resource extension according to embodiments of this application.

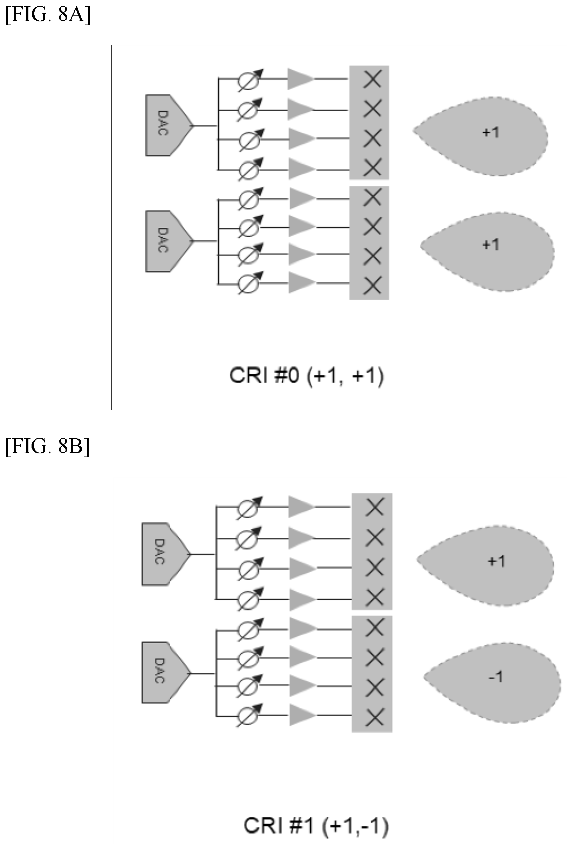

FIG. 8A and FIG. 8B are diagrams of an OCC code corresponding to a CRI according to embodiments of this application.

The base station may notify, through configuration, the terminal that an arrangement or a mapping relationship of ports is horizontal N₁ ports and vertical N₂ ports, and each digital port has two transceiver channels/transceiver units (or Transmission Receiver Unit, TRU or TRX for short). It should be noted that the number of transceiver channels corresponding to each digital port does not necessarily directly correspond to the number of phase shifters implemented by the base station, and the base station may perform virtualization. For example, in a scenario in which one digital port drives four phase shifters, the base station may virtualize two phase shifters into one transceiver channel, and only notify the terminal that the number of transceiver channels corresponding to each digital port is 2. A specific mapping manner is not limited in this application.

The base station may notify the terminal of an OCC manner by using configuration information (for example, an RRC message), and there may be a plurality of corresponding indication manners.

For example, in a vertical direction OCC (as shown in FIG. 7A), each block represents a digital port. It is assumed that an OCC is formed between rows 0 and 1 in a dashed-line box of a CRI #0 resource and rows corresponding to a CRI #1 resource. Therefore, the vertical direction OCC can be implemented. A specific form of the OCC code is not limited in embodiments of this application. FIG. 8A and FIG. 8B are used as examples. It is assumed that an OCC code sent in the rows 0 and 1 in the dashed-line box of the CRI #0 resource is (+1, +1), and an OCC code sent in rows 0 and 1 in a dashed-line box of the CRI #1 resource is (+1, -1).

For another example, in a horizontal direction OCC (as shown in FIG. 7B), each block represents a digital port. It is assumed that an OCC is formed between columns 0 and 1 in a dashed-line box of a CRI #0 resource and columns corresponding to a CRI #1 resource. Therefore, the horizontal direction OCC can be implemented. A specific form of the OCC code is not limited in embodiments of this application. FIG. 8A and FIG. 8B are used as examples. It is assumed that an OCC code sent in the columns 0 and 1 in the dashed-line box of the CRI #0 resource is (+1, +1), and an OCC code sent in columns 0 and 1 in a dashed-line box of the CRI #1 resource is (+1, -1).

Optionally, the foregoing 2-bit OCC code may be extended to a 4-bit OCC code, and a corresponding pattern may be shown in Table 7.

**Table 7**

| Index | [*w*(0) *w*(1) *w*(2) *w*(3)] |
|---|---|
| 0 | [+1 +1 + 1 + 1] |
| 1 | [+1 -1 + 1 - 1] |
| 2 | [+1 + 1 - 1 -1] |
| 3 | [+1 - 1 -1 + 1] |

The index corresponds to a weight coefficient w = [w(0) w(1) w(2) w(3)]. It may be understood that the weight coefficient (or vector) corresponds to a port sending manner (or a port mapping manner. For example, the P reference signals are mapped from the N × P ports, and each reference signal is mapped from N ports). Weights are applied to different antenna ports (or transceiver channels, or transceiver channel groups) to send the reference signals. Further, different weight vectors (that is, weight coefficients or indexes corresponding to the weight vectors) correspond to different reference signal resources. That is, the weight index index is associated with a CRI (or a reference signal resource, or a reference signal). For example, when the index is 0, a CRI corresponding to the index is 0. Other indexes are similar. Details are not described herein again.

It should be understood that the foregoing describes the weight coefficient by using the OCC as an example.

In another implementation, weight coefficients (or vectors) may also be used to determine port mapping, that is, map the P reference signals to the N × P ports. Further, channel coefficients corresponding to the N × P ports may be obtained by using the weight coefficients and a channel coefficient corresponding to at least one reference signal.

Similarly, meanings represented by weight coefficients in Table 8, Table 9, Table 10, and Table 11 in the following are the same as those in Table 7. Details are not described herein again.

It should be understood that Table 7 is merely used as an example for description, and should not constitute a limitation on embodiments of this application. New table content obtained by properly transforming or supplementing the content in Table 7 falls within the protection scope of embodiments of this application.

Similarly, other tables in this application are used as examples for description, and should not constitute a limitation on embodiments of this application. New table content obtained by properly transforming or supplementing content in the tables falls within the protection scope of embodiments of this application. Details are not described in the following.

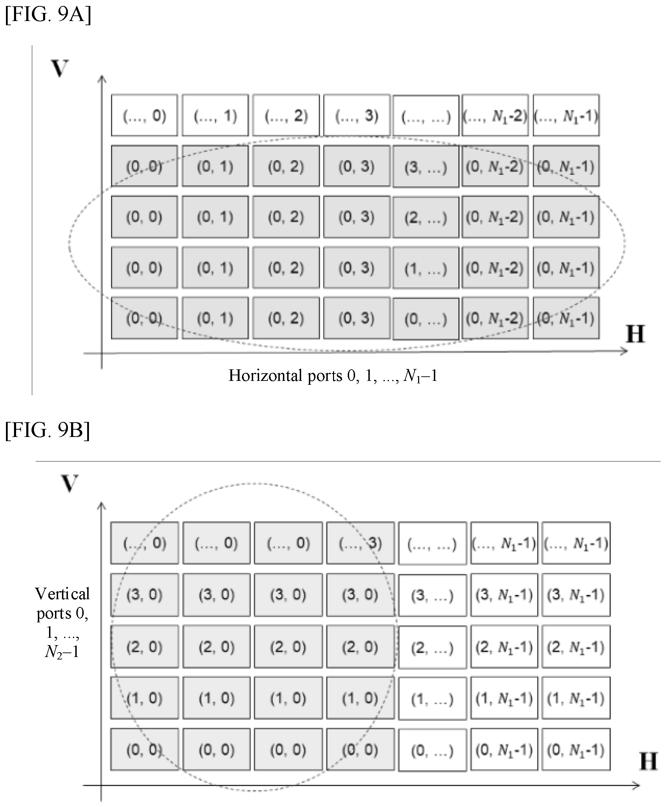

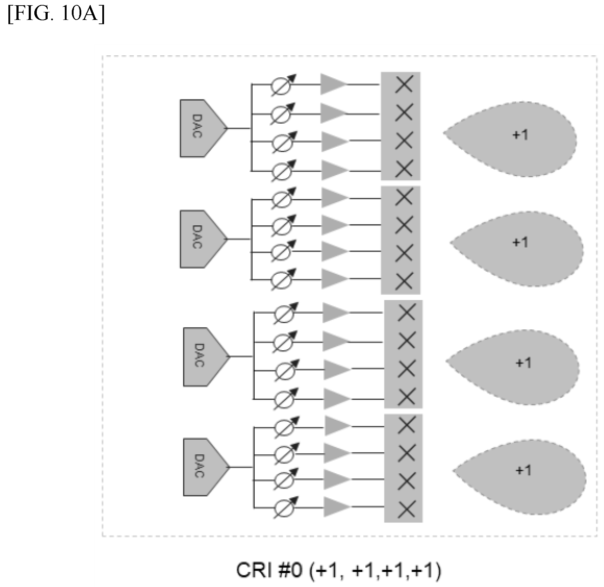

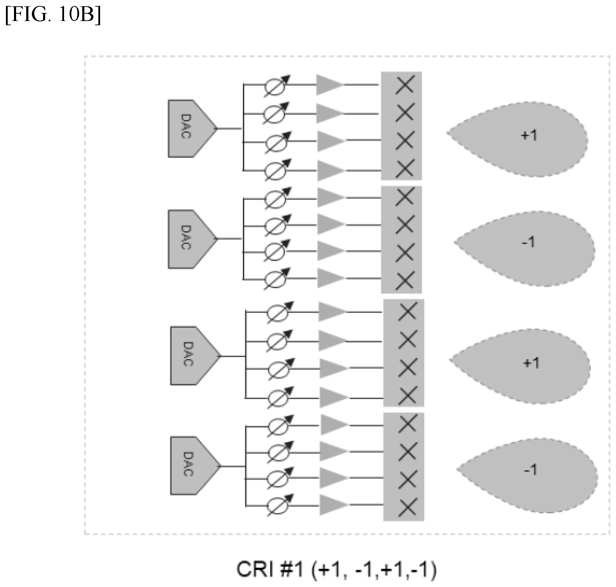

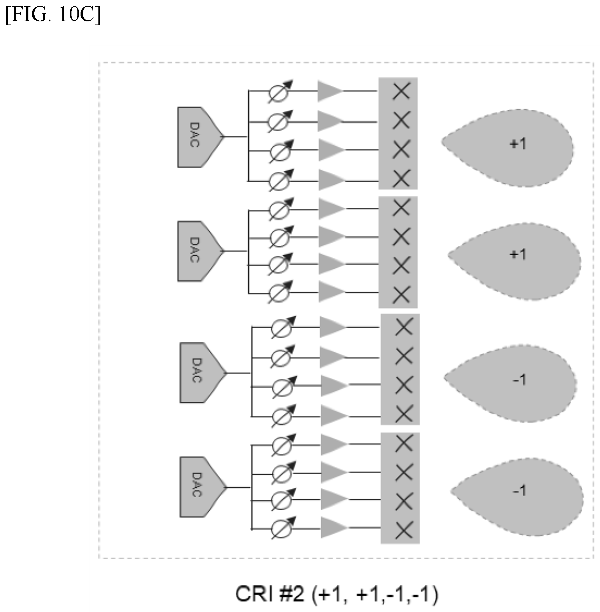

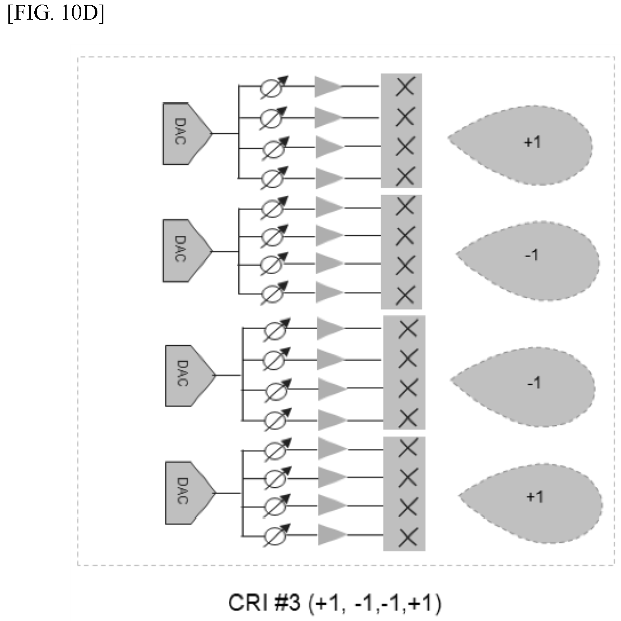

Specifically, refer to FIG. 9A to FIG. 9C, FIG. 10A, FIG. 10B, FIG. 10C, and FIG. 10D. FIG. 9A to FIG. 9C are diagrams of CSI-RS resource extension according to embodiments of this application. FIG. 10A, FIG. 10B, FIG. 10C, and FIG. 10D are diagrams of an OCC code corresponding to a CRI according to embodiments of this application.

The base station may notify the terminal of the OCC manner by using configuration information (for example, an RRC message), and there may be a plurality of corresponding indication manners.

For example, in a vertical direction OCC (as shown in FIG. 9A), each block represents a digital port. It is assumed that an OCC is formed between rows 0, 1, 2, and 3 in a dashed-line box of a CRI #0 resource, rows corresponding to a CRI #1 resource, rows corresponding to a CRI #2 resource, and rows corresponding to a CRI #3 resource. Therefore, the vertical direction OCC can be implemented. A specific form of the OCC code is not limited in embodiments of this application. FIG. 10A, FIG. 10B, FIG. 10C, and FIG. 10D are used as an example. It is assumed that an OCC code sent in the rows 0, 1, 2, and 3 in the dashed-line box of the CRI #0 resource is (+1, +1, +1, +1), an OCC code sent in rows 0, 1, 2, and 3 in a dashed-line box of the CRI #1 resource is (+1, -1, +1, -1), an OCC code sent in rows 0, 1, 2, and 3 in a dashed-line box of the CRI #2 resource is (+1, +1, -1, -1), and an OCC code sent in rows 0, 1, 2, and 3 in a dashed-line box of the CRI #3 resource is (+1, -1, -1, +1).

For another example, in a horizontal direction OCC (as shown in FIG. 9B), each block represents a digital port. It is assumed that an OCC is formed between columns 0, 1, 2, and 3 in a dashed-line box of a CRI #0 resource, columns corresponding to a CRI #1 resource, columns corresponding to a CRI #2 resource, and columns corresponding to a CRI #3 resource. Therefore, the horizontal direction OCC can be implemented. A specific form of the OCC code is not limited in embodiments of this application. FIG. 10A, FIG. 10B, FIG. 10C, and FIG. 10D are used as an example. It is assumed that an OCC code sent in the columns 0, 1, 2, and 3 in the dashed-line box of the CRI #0 resource is (+1, +1, +1, +1), an OCC code sent in columns 0, 1, 2, and 3 in a dashed-line box of the CRI #1 resource is (+1, -1, +1, -1), an OCC code sent in columns 0, 1, 2, and 3 in a dashed-line box of the CRI #2 resource is (+1, +1, -1, -1), and an OCC code sent in columns 0, 1, 2, and 3 in a dashed-line box of the CRI #3 resource is (+1, -1, -1, +1).

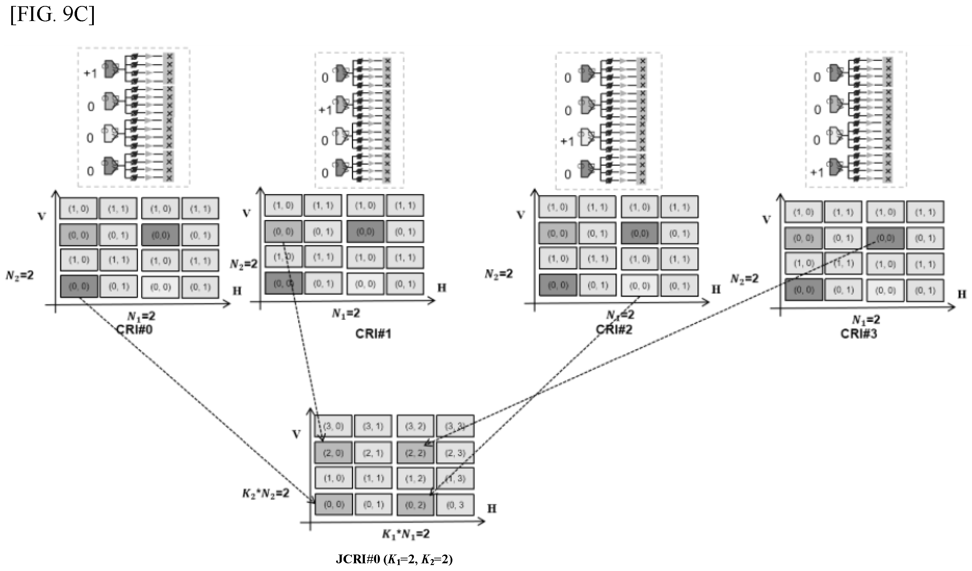

It may be understood that extended ports may be adjacently arranged as shown in FIG. 7A and FIG. 7B, and FIG. 9A and FIG. 9B, or may be arranged at intervals as shown in FIG. 9C. This is not limited in embodiments of this application. For example, the vertical dimension of a TRX is 8. It is assumed that ports are extended by 8 times in the vertical direction, and an original one row of ports is extended to obtain eight rows of ports, which are respectively denoted as rows 0, 1, 2, 3, 4, 5, 6, and 7. In this case, the extended ports may be arranged according to numbers of the following rows: (0, 1, 2, 3, 4, 5, 6, 7). Alternatively, original two rows of ports are extended to obtain eight rows of ports, and are extended by 4 times in the vertical direction with a four-row interval. In this case, numbers of the extended ports are arranged as (0, 4, 1, 5, 2, 6, 3, 7). Alternatively, original four rows of ports are extended to obtain eight rows of ports, and are extended by 2 times in the vertical direction with a two-row interval. In this case, numbers of the extended ports are arranged as (0, 2, 4, 6, 1, 3, 5, 7). This is not limited in embodiments of this application.

Optionally, the base station may send a CSI-RS based on a configuration (periodic sending, semi-persistent sending, or aperiodic single sending). This is not limited in embodiments of this application. In terms of implementation, the base station may perform weighted sending on a CSI-RS port. For an HBF architecture, in terms of implementation, the base station may use different digital and/or analog weights to perform weighting on different ports. A CSI-RS resource allocation scheme for UE is divided into periodic transmission, aperiodic transmission, or semi-persistent transmission of CSI-RSs. For a DBF architecture, in terms of implementation, the base station may use different digital weights to perform weighting on different ports. A CSI-RS resource allocation scheme for UE is divided into periodic transmission, aperiodic transmission, or semi-persistent transmission of CSI-RSs.

Periodic transmission: The base station configures a sending period and time-frequency resource positions of CSI-RSs, and sends the CSI-RSs based on the configured period.

Aperiodic transmission: DCI signaling is used to notify the UE of each CSI-RS transmission.

Semi-persistent transmission: The base station configures a sending period and time-frequency resource positions of CSI-RSs and notifies the UE of the configuration. However, whether to send the CSI-RSs is determined by a MAC CE (MAC Control Element). The MAC CE activates or deactivates the CSI-RSs and notifies the UE of activation or deactivation.

In the foregoing solution, it can be learned from the protocol definition that a weight vector of an (l, m)^{th} beam corresponding to a port is represented as follows: ${v}_{l , m} = \left[{u}_{m} {u}_{m}{e}^{\frac{j 2 πl}{{N}_{1} {O}_{1}}} ⋯ {u}_{m}{e}^{\frac{j 2 π \left({N}_{1}-1\right) l}{{N}_{1} {O}_{1}}}\right] .$

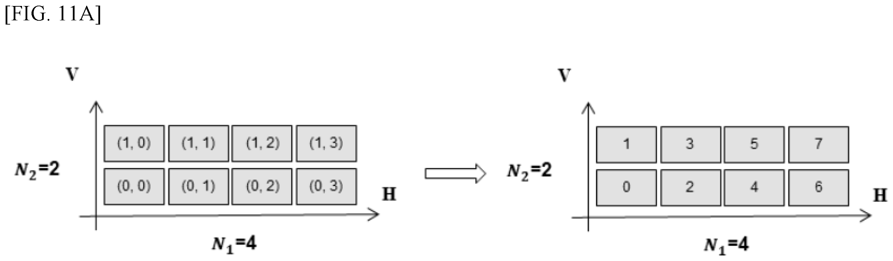

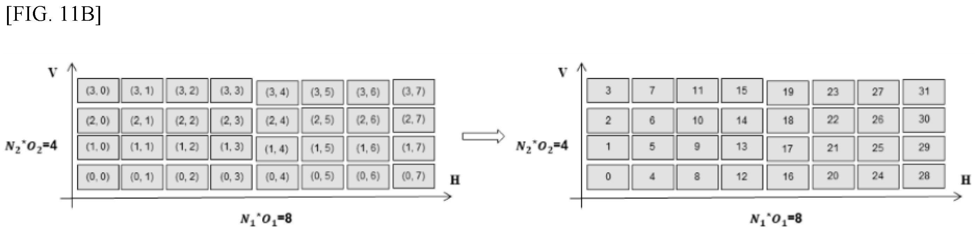

Therefore, it can be learned that beams are arranged in a column-first and row-second manner. It is assumed that given N₁=4, N₂=2, O₁=1, and O₂=1 correspond to 16 ports (port). Eight DFT beams corresponding to 8 ports in single polarization may be shown in FIG. 11A. It is assumed that given N₁=4, N₂=2, O₁=2, and O₂=2 correspond to 16 ports, and 32 DFT beams corresponding to 8 ports in a single polarization direction may be shown in FIG. 11B. It should be noted that, in actual implementation, oversampling needs to be performed based on parameter configuration in Table 3. Because there are too many ports herein, for brevity and clarity of description, an example is used for description, and should not constitute a limitation on embodiments of this application.

Port number extension is similar. Details are not described herein again. In addition, a CSI-RS antenna port p is numbered according to the following formula Eq1: [Eq 1] $p = 3000 + s + jLj = 0 , 1 ⋯ , \frac{N}{L} - 1$ s = 0,1,···, L - 1.

s represents an index number in an orthogonal code table, L ∈ {1,2,4,8} is a size of a code division multiplexing (code division multiplexing, CDM) group, and N is the number of CSI-RS antenna ports.

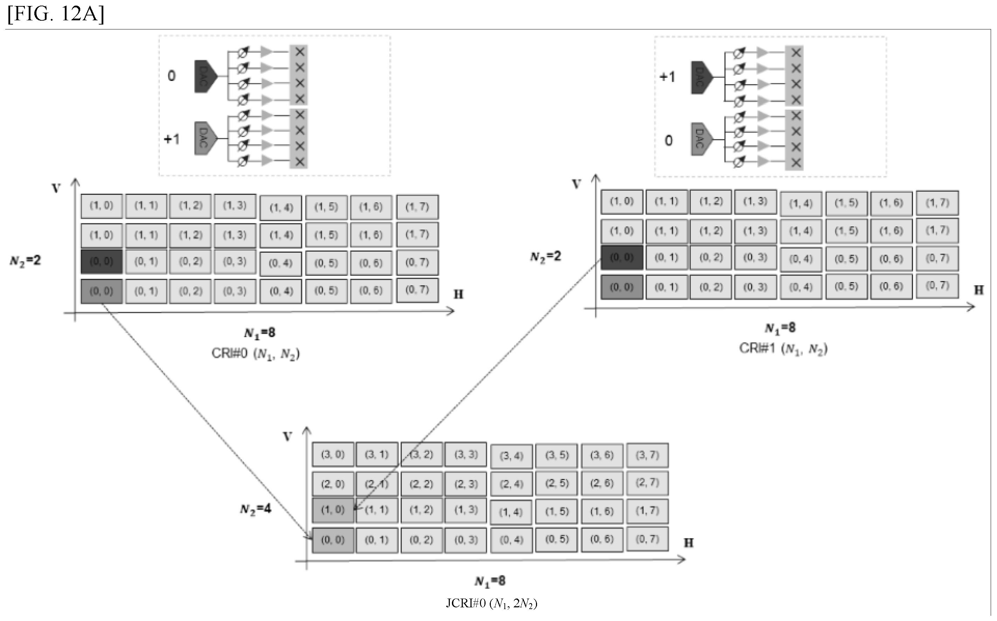

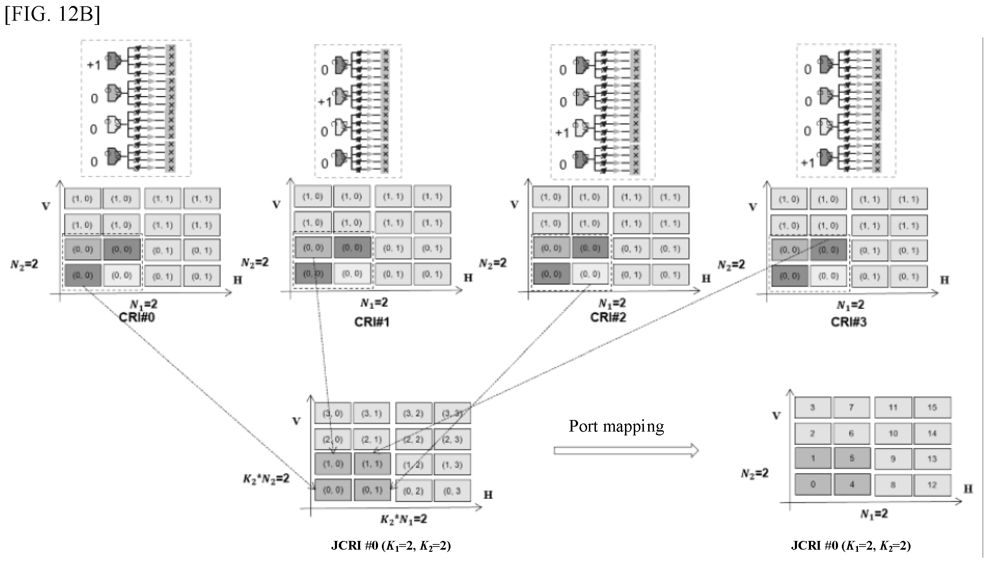

With reference to FIG. 12A and FIG. 12B, the following further describes a coupling relationship between weights on the P time-frequency resources in the communication method shown in FIG. 5.

### Form 1:

A coupling relationship between the P time-frequency resources is limited in a form of +1 and -1.

It is assumed that the base station has channel coefficients B₀,B₁,B₂,B₃ generated by four actual CSI-RS resources, and performs time division OCC sending based on time division OCC codes in Table 8 and/or Table 9. Channel coefficients D₀, D₁, D₂, D₃ received by the UE may be expressed as follows: ${\left[{D}_{0}, {D}_{1}, {D}_{2}, {D}_{3}\right]}^{T} = α \left[\begin{matrix}+ 1 & + 1 & + 1 & + 1 \\ + 1 & - 1 & + 1 & - 1 \\ + 1 & + 1 & - 1 & - 1 \\ + 1 & - 1 & - 1 & + 1\end{matrix}\right] {\left[{B}_{0}, {B}_{1}, {B}_{2}, {B}_{3}\right]}^{T} .$

α represents a normalization coefficient, and may be $\sqrt{\frac{1}{4}}$ herein.

**Table 8**

| Index | [*w*(0) *w*(1) *w*(2) *w*(3)] |
|---|---|
| 0 | [+1 +1 + 1 + 1] |
| 1 | [+1 -1 + 1 - 1] |
| 2 | [+1 + 1 - 1 -1] |
| 3 | [+1 - 1 -1 + 1] |

**Table 9**

| Index | [*w_{H}*(0) *w_{H}*(1)] | [*w_{V}*(0) *w_{V}*(1)] |
|---|---|---|
| 0 | [+1 +1] | [+1 +1 ] |
| 1 | [+1 -1] | [+1 +1 ] |
| 2 | [+1 +1] | [+1 -1 ] |
| 3 | [+1 -1] | [+1 -1 ] |

In Table 9, a subscript H in w_{H}(0) represents the horizontal direction, and a subscript V in w_{V}(0) represents the vertical direction.

Meanings represented by weight coefficients in Table 8 and Table 9 are the same as those of the weight coefficients in Table 7. For details, refer to related descriptions in Table 7. Details are not described herein again.

It should be noted that, if a manner in Table 9 is used, extension is performed in the horizontal direction or the vertical direction. For example, when index=0 or 2, extension is performed in the vertical direction, when index=1 or 3, extension is performed in the vertical direction, when index=0 or 1, extension is performed in the horizontal direction, when index=2 or 3, extension is performed in the horizontal direction, and the like. Details are not listed herein.

It should be understood that Table 8 and Table 9 are merely used as examples for description, and should not constitute a limitation on embodiments of this application. New table content obtained by properly transforming or supplementing the content in Table 8 and Table 9 falls within the protection scope of embodiments of this application.

A base station side configures an orthogonal code for the UE, and a UE side performs the following operations to de-orthogonalize the orthogonal code: ${\left[{B}_{0}, {B}_{1}, {B}_{2}, {B}_{3}\right]}^{T} = {α}^{- 1} {\left[\begin{matrix}+ 1 & + 1 & + 1 & + 1 \\ + 1 & - 1 & + 1 & - 1 \\ + 1 & + 1 & - 1 & - 1 \\ + 1 & - 1 & - 1 & + 1\end{matrix}\right]}^{- 1} {\left[{D}_{0}, {D}_{1}, {D}_{2}, {D}_{3}\right]}^{T} .$

### Form 2:

A coupling relationship between the P time-frequency resources is limited in a form of 1 and 0.

Refer to FIG. 12A. Specifically, the coupling relationship between the P time-frequency resources is limited in a form of [1, 0] and [0, 1].

Alternatively, refer to FIG. 12B. Specifically, the coupling relationship between the P time-frequency resources is limited in a form of [1, 0, 0, 0], [0, 1, 0, 0], [0, 0, 1, 0], and [0, 0, 0, 1].

[1, 0] and [0, 1] indicate that a reference signal is sent on a transceiver channel of a CRI #0 in a form of [1, 0], and a reference signal is sent on a transceiver channel of a CRI #1 in the form of [0, 1]. [1, 0, 0, 0], [0, 1, 0, 0], [0, 0, 1, 0], and [0, 0, 0, 1] indicate that a reference signal is sent on a transceiver channel of a CRI #0 in a form of [1, 0, 0, 0], a reference signal is sent on a transceiver channel of a CRI #1 in a form of [0, 1, 0, 0], a reference signal is sent on a transceiver channel of a CRI #2 in a form of [0, 0, 1, 0], and a reference signal is sent on a transceiver channel of the CRI #1 in a form of [0, 0, 0, 1].

### Form 3:

A coupling relationship between the P time-frequency resources is limited in a form of 1 and i, where i is an imaginary number.

Specifically, the coupling relationship between the P time-frequency resources may be limited in a form of [1, -i] and [1, i].

[1, -i] and [1, i] are full rank weights, but are not orthogonal.

Channel coefficients corresponding to CSI-RS resources sent by a CRI #1 and a CRI #2 are B₀, B₁, a weight of the CRI #1 is [1, -i], and a weight of the CRI #2 is [1, i]. After receiving channel coefficients D₀,D₁, the terminal performs calculation as follows: D₀ = B₀ - iB₁D₁ = B₀ + iB₁,
and obtains corresponding ${B}_{0} = \frac{1}{2} \left({D}_{0}+{D}_{1}\right) , {B}_{1} = \frac{1}{2 i} \left({D}_{1}-{D}_{0}\right)$ through solving.

When the number of actually sent resources is 4, weight coefficients corresponding to the resources may be shown in Table 10 and Table 11.

**Table 10**

| Index | [*w*(0) *w*(1) *w*(2) *w*(3)] |
|---|---|
| 0 | [+1 +1 + 1 + 1] |
| 1 | [+1 -i -1 i] |
| 2 | [+1 - 1 1 -1] |
| 3 | [+1 i -1 - i] |

**Table 11**

| Index | [*w_{H}*(0) *w_{H}*(1)] | [*w_{V}*(0) *w_{V}*(1)] |
|---|---|---|
| 0 | [+1 +1 ] | [+1 i] |
| 1 | [+1 +1 ] | [-i 1 ] |
| 2 | [+1 -1] | [+1 i] |
| 3 | [+1 -1] | [-i 1 ] |

In Table 11, a subscript H in w_{H}(0) represents the horizontal direction, and a subscript V in w_{V}(0) represents the vertical direction.

Meanings represented by weight coefficients in Table 10 and Table 11 are the same as those of the weight coefficient in Table 7. For details, refer to related descriptions in Table 7. Details are not described herein again.

It should be noted that, if a manner in Table 11 is used, extension is performed in the horizontal direction or the vertical direction. For example, when index=0 or 2, extension is performed in the horizontal direction, when index=1 or 3, extension is performed in the horizontal direction, when index=0 or 1, extension is performed in the vertical direction, when index=2 or 3, extension is performed in the vertical direction, and the like. Details are not listed herein.

It should be understood that Table 10 and Table 11 are merely used as examples for description, and should not constitute a limitation on embodiments of this application. New table content obtained by properly transforming or supplementing the content in Table 10 and Table 11 falls within the protection scope of embodiments of this application.

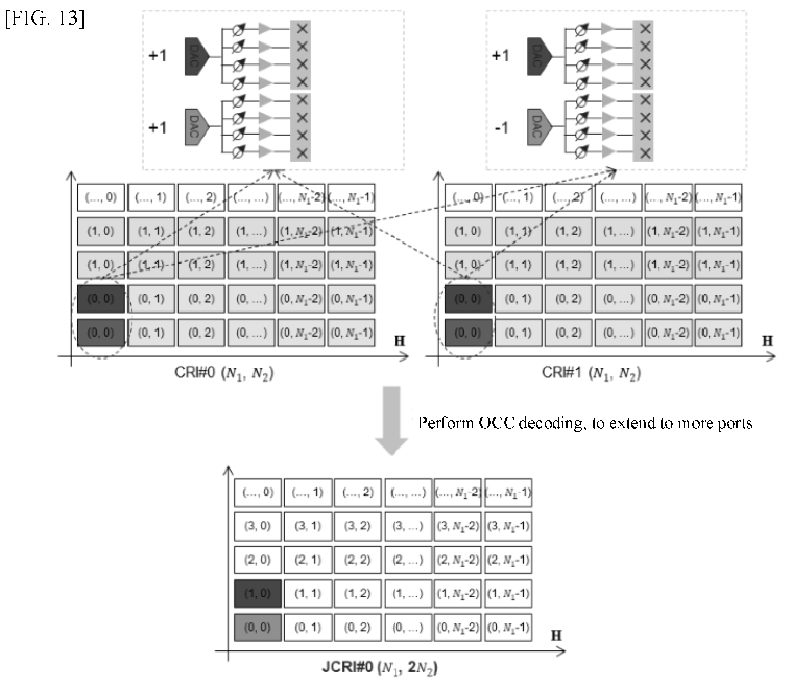

The following further describes channel information reporting in the communication method shown in FIG. 5 with reference to FIG. 13.

As shown in Table 12, field content included in channel information reporting is as follows:

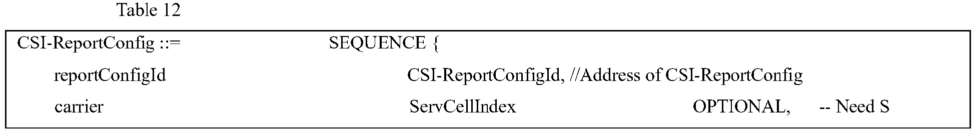

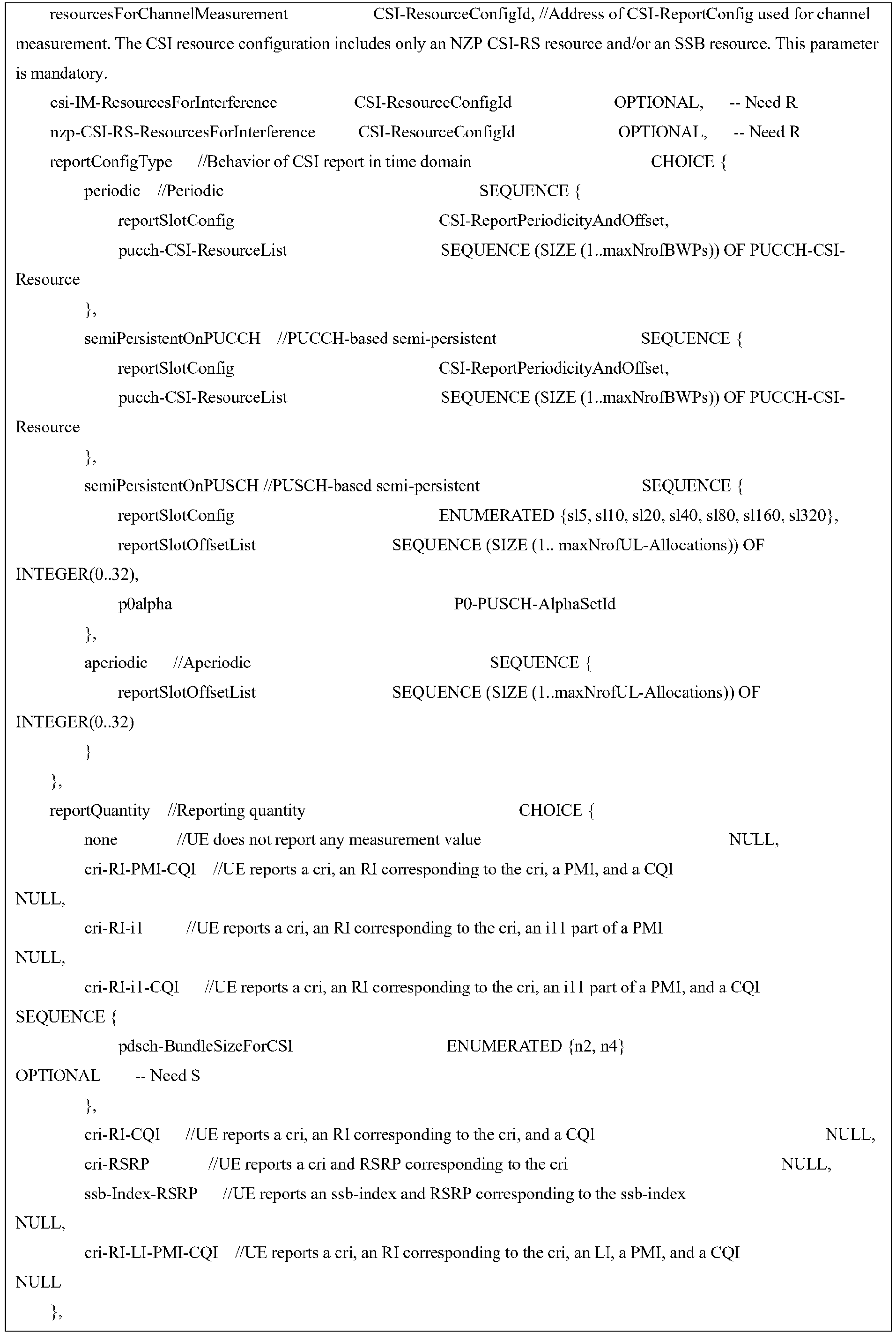

The foregoing protocol indicates CSI reporting configuration information. Each CSI report configuration (CSI-ReportConfig) is associated with one downlink bandwidth part (bandwidth part, BWP) used for measurement. Each CSI report includes a codebook configuration (including a codebook constraint subset), time domain behavior, a frequency domain granularity of a CQI and a PMI, a measurement restriction configuration, and the number of reported CSI-related indicators (such as an LI, an L1-RSRP, a CRI, and an SSBRI). The CRI is an index of the best resource selected by the terminal from currently measured NZP CSI-RS resources.

It is assumed that reportQuantity is configured as "cri-RSRP", "cri-RI-PMI-CQI", "cri-RI-i1", "cri-RI-i1-CQI", "cri-RI-CQI", or "cri-RI-LI-PMI-CQI", and when Kₛ > 1 resources are configured in a resource set used for channel measurement, the UE should obtain, under a condition of reporting a CRI, parameters other than the CRI (the parameters includes but are not limited to a PMI, an RI, a CQI, an LI, and the like). The CRI k(k ≥ 0) corresponds to a (k + 1)^{th} nzp-CSI-RS resource in an nzp-CSI-RS resource set used for channel measurement and a (k + 1)^{th} CSI-IM-resource in a CSI-IM-ResourceSet (if configured). If Kₛ = 2 CSI-RS resources are configured, each resource includes a maximum of 16 CSI-RS ports. If 2 ≤ Kₛ ≤ 8 CSI-RS resources are configured, each resource includes a maximum of eight CSI-RS ports.

It should be noted that reporting manners are as follows:
1. Reporting of one or more resources
   (a) If only one resource is reported, only a CRI corresponding to a best feedback and parameters corresponding to the CRI need to be selected from all resources. The parameters include (an RI, a PMI, a CQI), and the like.
   (b) If a plurality of resources are reported, a plurality of CRIs and parameters corresponding to the CRIs need to be continuously reported. The parameters include (an RI, a PMI, a CQI), and the like.
2. Joint reporting of a part of a plurality of resources

A part of a plurality of resources may be mapped to a joint CRI (Joint CRI, JCRI). Specifically, the plurality of resources may be divided into a plurality of parts of resources, and then the plurality of parts of resources are separately mapped to a plurality of JCRIs. For example, Table 8 is used as an example. There are four CRIs (a CRI #0, a CRI #1, a CRI #2, and a CRI #3). (CRI #0, CRI #1) are mapped to a JCRI #0, and (CRI #2, CRI #3) are mapped to a JCRI #1. Alternatively, (CRI #0, CRI #1) may be mapped to a JCRI #0, and CRIs of (CRI #2, CRI #3) are separately fed back. This is not limited in this application.

In addition, there are the following two reporting manners:
(a) The base station side configures a JCRI, and the terminal feeds back, through measurement, the JCRI and parameters (an RI, a PMI, and a CQI) corresponding to the JCRI. For example, in Table 6, the base station side configures a JCRI #0 and corresponding (CRI #0, CRI #1), and a JCRI #1 and corresponding (CRI #2, CRI #3). The terminal feeds back, through measurement, one or more JCRIs and parameters (RIs, PMIs, and CQIs) corresponding to the one or more JCRIs.
(b) The terminal feeds back a plurality of CRIs and parameters (RIs, PMIs, and CQIs) corresponding to the plurality CRIs after port extension. For example, the terminal feeds back (CRI #0, CRI #1) and parameters (RIs, PMIs, and CQIs) corresponding to (CRI #0, CRI #1) after port extension.

### 3. Joint reporting of a plurality of resources

First, CRIs of a plurality of resources need to be mapped to a JCRI (Joint CRI), where the JCRI is an identifier of a joint resource. For details, refer to FIG. 13. Optionally, joint reporting of the plurality of resources herein may indicate that all resources in one resource set are jointly reported.

In addition, there are the following two reporting manners:
(a) The base station side may configure a JCRI, and the terminal feeds back, through measurement, the JCRI and parameters (an RI, a PMI, and a CQI) corresponding to the JCRI. Alternatively, the base station side may not configure a JCRI, and the terminal directly feeds back parameters (an RI, a PMI, and a CQI) through measurement. For example, in Table 8, the base station side configures a JCRI #0 and corresponding (CRI #0, CRI #1, CRI #2, CRI #3), and the terminal feeds back the JCRI #0 and corresponding parameters (an RI, a PMI, and a CQI) through measurement. Alternatively, the terminal may directly feed back parameters (an RI, a PMI, and a CQI).
(b) The terminal feeds back a plurality of CRIs and parameters (RIs, PMIs, and CQIs) corresponding to the plurality of CRIs after port extension, for example, a CRI #0, a CRI #1, a CRI #2, a CRI #3, and parameters (RIs, PMIs, and CQIs) corresponding to (CRI #0, CRI #1, CRI #2, CRI #3) after port extension; or the terminal may directly report parameters (RIs, PMIs, and CQIs).

### 4. A combination of the reporting manner 1 and the reporting manner 2

It may be understood that, in the reporting manner 4, it indicates that reporting may be performed in a manner selected from the reporting manner 1 and the reporting manner 2 based on requirements of different communication scenarios. The two reporting manners are as follows:
(a) Base station side: The base station side needs to configure a CRI and a JCRI. For example, there are four resources in total, and resource indicators corresponding to the four resources are (CRI #0, CRI #1, CRI #2, CRI #3). A resource indicator of (CRI #0, CRI #1) after port extension is a JCRI #0, and a resource indicator of (CRI #2, CRI #3) after port extension is a JCRI #1. The terminal reports one or more of the resource indicators through measurement. For example, only one or more of CRIs (CRI #0, CRI #1, CRI #2, CRI #3) and corresponding parameters are reported, or only one or more of JCRIs (JCRI #0, JCRI #1) and corresponding parameters are reported. This is not limited in embodiments of this application.
(b) Terminal: The terminal reports a CRI and a corresponding parameter. Optionally, a CRI before combination may be named CRI 1, and a CRI after combination may be named CRI 2. The terminal reports, through measurement, one or more of CRIs before combination (that is, CRIs named CRI 1) and corresponding parameters, or reports one or more of CRIs after combination (that is, CRIs named CRI 2) and corresponding parameters. Optionally, herein, one piece of indication information may further indicate whether a reported CRI is a CRI before combination (that is, a CRI named CRI 1) or a CRI after combination (that is, a CRI named CRI 2). For example, the indication information may be a field. When the field is 0, it indicates that the reported CRI is a CRI before combination. When the field is 1, it indicates that the reported CRI is a CRI after combination.

### 5. A combination of the reporting manner 1 and the reporting manner 3

It may be understood that, in the reporting manner 5, it indicates that reporting may be performed in a manner selected from the reporting manner 1 and the reporting manner 3 based on requirements of different communication scenarios. The two reporting manners are as follows:
(a) Base station side: The base station side needs to configure a CRI and a JCRI. For example, there are four resources in total, and resource indicators corresponding to the four resources are a CRI #0, a CRI #1, a CRI #2, and a CRI #3. A resource indicator of (CRI #0, CRI #1, CRI #2, CRI #3) after port extension is a JCRI #0. The terminal reports one or more of the resource indicators through measurement. For example, only one or more of CRIs (CRI #0, CRI #1, CRI #2, CRI #3) and corresponding parameters are reported, or only a JCRI (JCRI #0) and a corresponding parameter are reported. This is not limited in embodiments of this application.
(b) Terminal: The terminal reports a CRI and a corresponding parameter. Optionally, a CRI before combination may be named CRI 1, and a CRI after combination may be named CRI 2. The terminal reports, through measurement, one or more of CRIs before combination (that is, CRIs named CRI 1) and corresponding parameters, or reports all of CRIs after combination (that is, CRIs named CRI 2) and corresponding parameters. Optionally, herein, one piece of indication information may further indicate whether a reported CRI is a CRI before combination (that is, a CRI named CRI 1) or a CRI after combination (that is, a CRI named CRI 2). For example, the indication information may be a field. When the field is 0, it indicates that the reported CRI is a CRI before combination. When the field is 1, it indicates that the reported CRI is a CRI after combination.

For example, the reporting manner 4 obtained by combining the reporting manner 1 and the reporting manner 2, and the reporting manner 5 obtained by combining the reporting manner 1 and the reporting manner 3 are merely used as examples for description, and should not constitute a limitation on embodiments of this application. Optionally, there may be another combination case. For example, the reporting manner 2 and the reporting manner 3 are combined to obtain a new reporting manner, or the reporting manner 1, the reporting manner 2, and the reporting manner 3 are combined to obtain a new reporting manner. For details about the combination manner, refer to the foregoing descriptions of the reporting manner 4 and the reporting manner 5. Details are not described herein again.

Optionally, with reference to behavior on the terminal side and the base station side, an execution manner may be, for example, as follows:
A. The base station may provide one piece of indication information, and the terminal implicitly or explicitly determines one or more reporting manners based on the indication information. For example, the base station determines a reporting manner in an explicit manner, for example, by using a field to indicate a corresponding reporting manner. When the field is 0, it indicates that the reporting manner in the foregoing combination (1) is used. When the field is 1, it indicates that the reporting manner in the foregoing combination (2) is used. When the field is 2, it indicates that the reporting manner 3 is used. When the field is 3, it indicates that the reporting manner 4 is used. When the field is 4, it indicates that the reporting manner 5 is used. The base station may alternatively determine a reporting manner in an implicit manner, for example, by using a resource configuration parameter of a PUCCH to select the foregoing manner. Other examples are not described herein.
B. One or more reporting manners are predefined in a protocol. For example, the reporting manner 1 is directly predefined in the protocol.
C. The terminal may determine one or more reporting manners to be used, and then report indication information to the base station to indicate the terminal to select a reporting manner. For example, the base station side configures a reporting manner indication field. If the terminal uses the reporting manner 2 based on measurement and has good performance, the terminal reports 3, which corresponds to the reporting manner 2. Other manners are similar. Details are not described herein.

It is assumed that N₁=2 and N₂=2. In this case, both a CRI #0 and a CRI #1 are resources of P_{CSI-RS} =8 ports, and a corresponding JCRI #0 is a resource of 16 ports. Therefore, the terminal feeds back a JCRI, associated CRIs (which are the CRI #0 and the CRI #1 in this case), and parameters corresponding to the JCRI (an RI, a PMI, and a CQI). The PMI corresponds to 16 ports (precoding corresponding to the PMI is [P]_{16×2v}). When information is transmitted, precoding constructed based on the PMI (16 ports) corresponding to the JCRI needs to be dimensionality-reduced to precoding of eight ports ([P']_{8×2v} = [A]_{8×16}[P]_{16×2v}) during resource transmission, where [A]_{8×16} is a weight matrix for dimension reduction, and v represents the number of streams.

With reference to FIG. 13 to FIG. 14B, the following further describes dynamic port extension between CSI-RS resources in the communication method shown in FIG. 5.

FIG. 13 is a diagram of dynamic port extension according to an embodiment of this application.

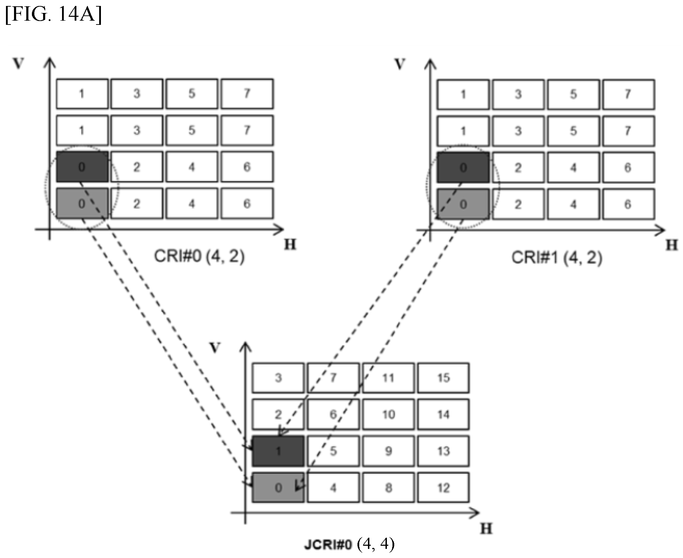

FIG. 14A is a diagram of dynamic port index extension according to an embodiment of this application.

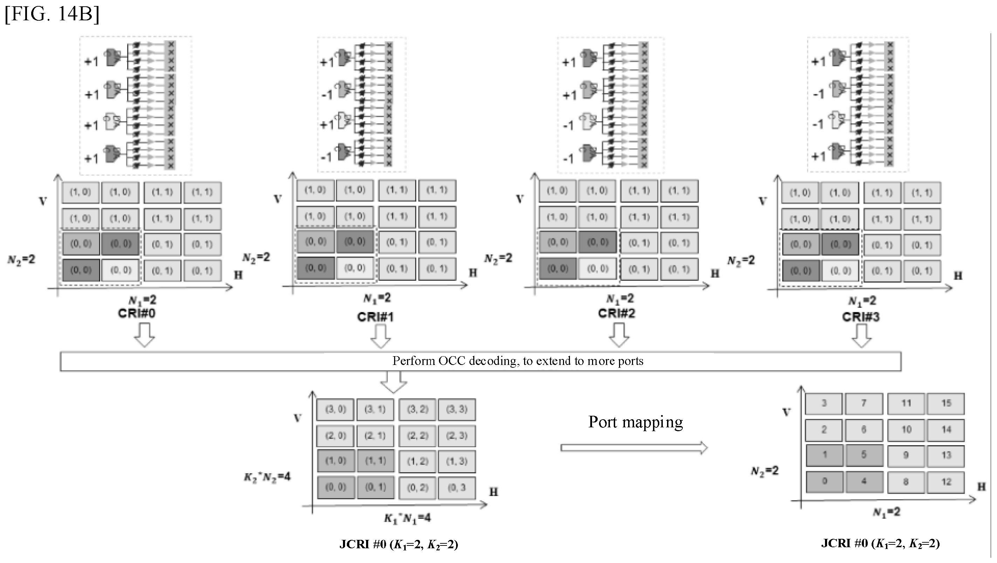

FIG. 14B is a diagram of dynamic port index extension according to an embodiment of this application.

A core of the embodiments is to implement a dynamic number of CSI-RS resource ports and flexible measurement through dynamic port extension between CSI-RS resources. As mentioned in the foregoing embodiments, the number of transceiver channels corresponding to each digital port does not necessarily directly correspond to the number of phase shifters implemented by the base station, and the base station may perform virtualization. For example, in a scenario in which one digital port drives four phase shifters, the base station may virtualize two phase shifters into one transceiver channel, and only notify the terminal that the number of transceiver channels corresponding to each digital port is 2. It is assumed that, as shown in FIG. 13, in this embodiment, one digital port corresponds to two transceiver channels, and a vertical direction OCC is used.

In an implementation, a low-dimensional CSI-RS resource (N₁, N₂) may be obtained through measurement of a single CSI-RS resource. When a plurality of CSI-RS resources are combined, it may be assumed that the CSI-RS resources are extended by K₁ times in the horizontal direction and by K₂ times in the vertical direction, and finally, a port dimension may be extended to (K₁×N₁, K₂×N₂). Specifically, values of K₁ and K₂ are indicated by the base station. This is not limited in this application.

For example, digital ports (0, 0) of a CRI #0 resource (squares in a dashed box of the CRI #0 resource in FIG. 13) and digital ports (0, 0) of a CRI #1 resource (squares in a dashed box of the CRI #1 resource in FIG. 13) are sent on corresponding transceiver channels (TRX) (dashed boxes at the top in FIG. 13) in the OCC manner. Herein, (+1, +1) and (+1, -1) OCC codes are respectively used. This is not specifically limited in this application. The terminal performs an OCC decoding operation, so that the digital ports (0, 0) in the original CRI #0 and CRI #1 resources can be extended to ports (0, 0) and (1, 0) in a CRI #01 resource. A port dimension of the CRI #01 resource changes to (N₁, 2N₂).

Specific impact on a protocol codebook is as follows: ${u}_{m} = \left\{\begin{matrix}\left[1 {e}^{\frac{j 2 πm}{{N}_{2} {O}_{2} {K}_{2}}} … {e}^{\frac{j 2 π \left({N}_{2}-1\right) m}{{N}_{2} {O}_{2} {K}_{2}}}\right] ; {N}_{2} > 1 ; \\ 1 ; {N}_{2} = 1\end{matrix}\right.$ and ${v}_{l , m} = \left[{u}_{m} {u}_{m}{e}^{\frac{j 2 πl}{{N}_{1} {O}_{1} {K}_{1}}} ⋯ {u}_{m}{e}^{\frac{j 2 π \left({N}_{1}-1\right) l}{{N}_{1} {O}_{1} {K}_{1}}}\right] .$

l ∈ [0, N₁O₁K₁ - 1], m ∈ [0, N₁O₁K₁ - 1], uₘ represent a beam weight corresponding to a beam whose second dimension is m, and v_{l,m} represents a beam weight corresponding to a beam whose first dimension is l and second dimension is m.

In another implementation, the base station specifies maximum K₁ and K₂, and the UE reports specific K₁ and K₂ based on a measurement result.

It may be understood that, when port coordinates in the foregoing manner are mapped to port indexes, as shown in FIG. 14A, N₁=4, N₂=2, O₁=1, O₂=1, K₁=1, and K₂=2.

When N₁=4, N₂=2, O₁=2, O₂=2, K₁=2, and K₂=2, corresponding port extension diagrams and corresponding port-to-beam mapping diagrams are shown in FIG. 14B. It may be understood that, ports of a plurality of resources CRI #0, CRI #1, CRI #2, and CRI #3 may be first extended and mapped to a large port, and then a corresponding DFT beam is generated by using an existing protocol.

The base station sends a CSI-RS based on a configuration. The CSI-RS may be periodically sent, or may be sent once aperiodically. This is not limited in this application. In terms of implementation, the base station may perform weighted sending on a CSI-RS port. For the HBF architecture, in terms of implementation, the base station may use different digital and/or analog weights to perform weighting on different ports. For the DBF architecture, in terms of implementation, the base station may use different digital weights to perform weighting on different ports.

It may be understood that a specific manner in which the terminal feeds back 3I is not limited in this application. For example, if CSI-RS performance under a single beam is good, only 3I for the beam is fed back. For example, if performance is the best when CSI-RSs are combined across a plurality of beams, 3I for the plurality of combined CSI-RS resources is fed back.

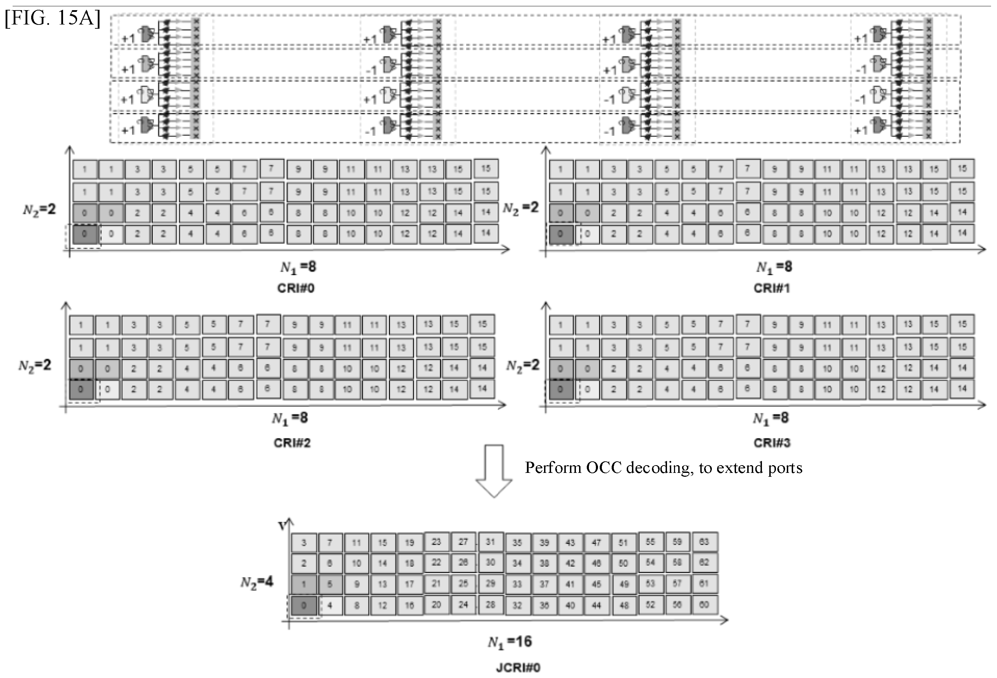

With reference to FIG. 15A to FIG. 15F, the following further describes a mapping relationship between the P reference signals and the channel information corresponding to the N×P antenna ports in the communication method shown in FIG. 5.

FIG. 15A is a diagram of dynamic port mapping according to an embodiment of this application.

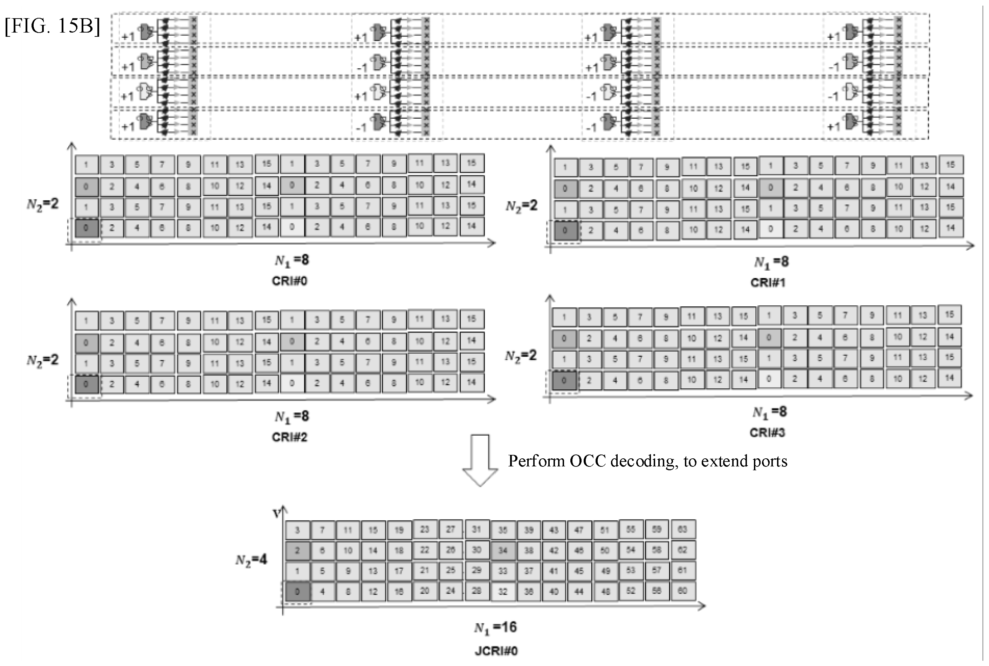

FIG. 15B is a diagram of dynamic port mapping according to an embodiment of this application.

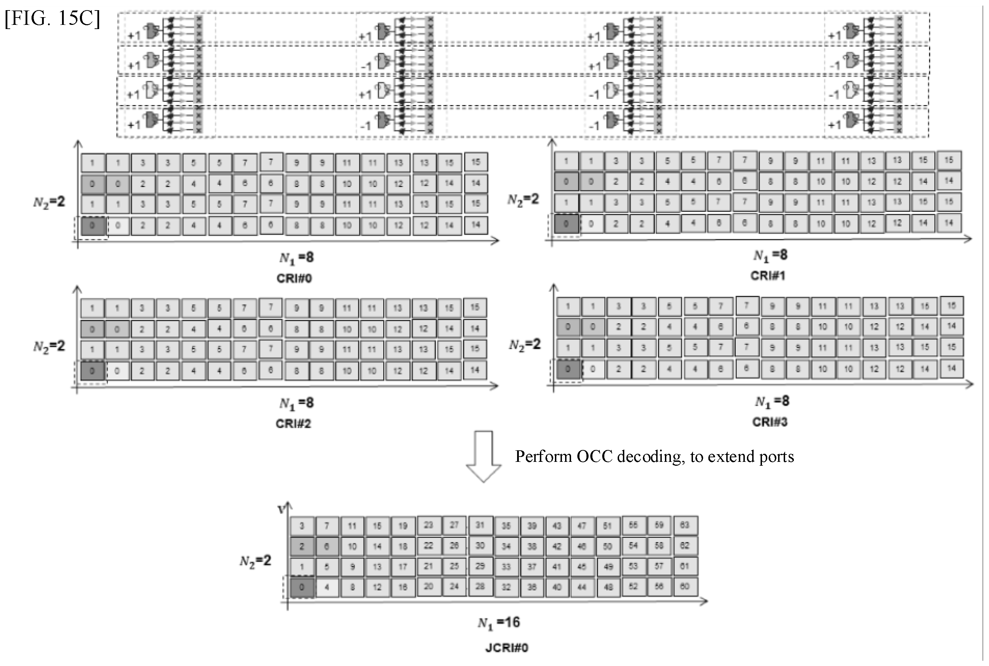

FIG. 15C is a diagram of dynamic port mapping according to an embodiment of this application.

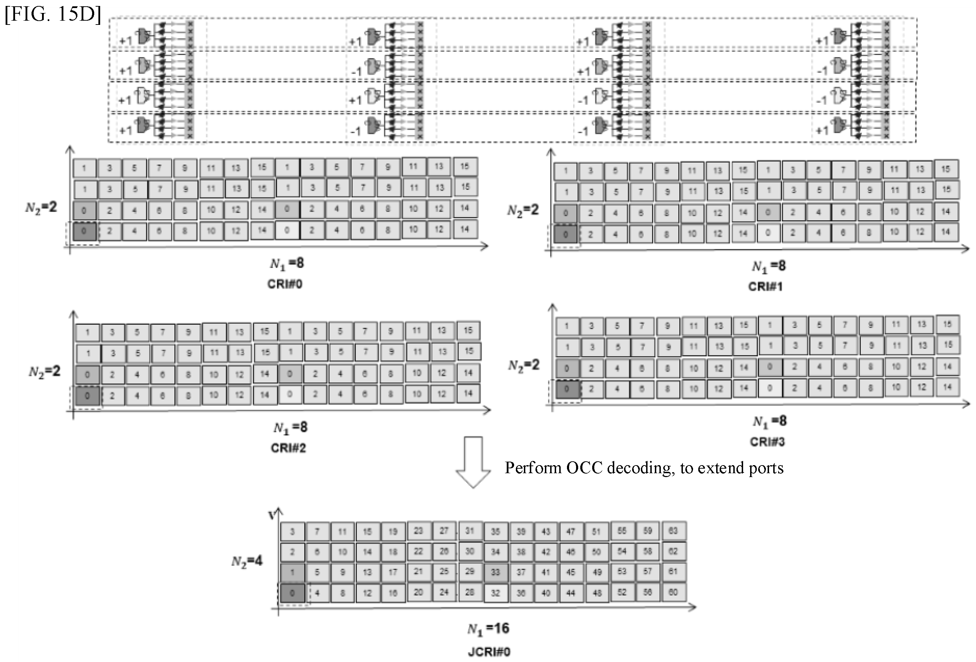

FIG. 15D is a diagram of dynamic port mapping according to an embodiment of this application.

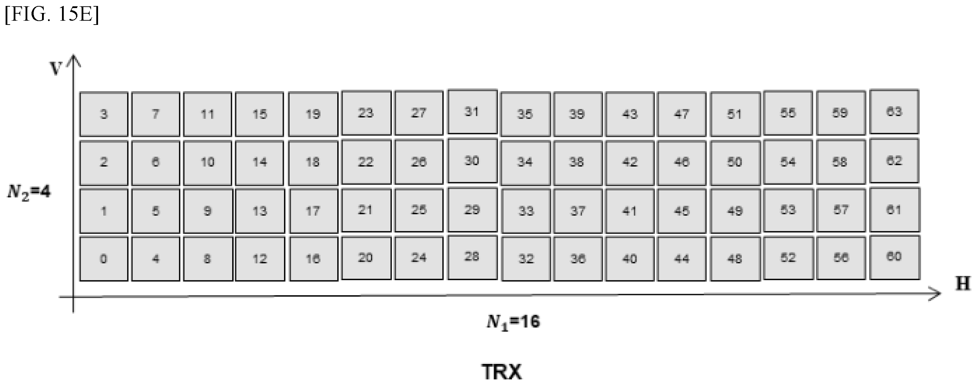

FIG. 15E is a diagram of arrangement of transceiver channels according to an embodiment of this application.

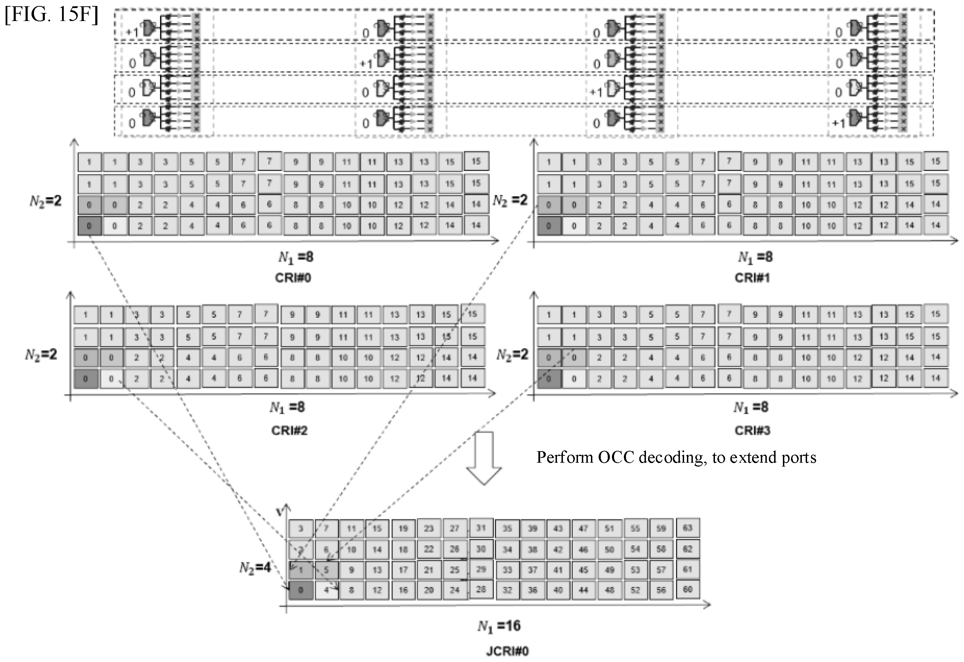

FIG. 15F is a diagram of dynamic port mapping according to an embodiment of this application.

In the communication method shown in FIG. 5, the second channel information corresponding to the N×P antenna ports is related to at least one of the following: the P weight coefficients and at least one piece of first channel information. The P weight coefficients represent a mapping relationship between the second channel information and P pieces of first channel information; or the P weight coefficients represent a mapping relationship between the N×P antenna ports and the P reference signals.

It should be understood that the P weight coefficients herein may be used to determine a port mapping relationship. For example, the P reference signals (each reference signal corresponds to N ports) are mapped to the N × P ports. Further, channel coefficients corresponding to the N × P ports may be obtained by using the weight coefficients and a channel coefficient corresponding to at least one reference signal.

In this application, an example in which the number of ports corresponding to each reference signal is the same is used. In practice, the number of ports may be any value, and this does not constitute any limitation.

It is assumed that port indexes of the N antenna ports are p = n+3000, where n ∈ [0, 2N₁N₂ - 1], n₁ represents port indexes of the N antenna ports in the first dimension, and n₂ represents port indexes of the N antenna ports in the second dimension. n₁ and n₂ may be represented in a two-dimensional representation manner, where ports n₁ in the first dimension in two polarization directions meet n₁ E [0, 2N₁ - 1], and ports in the second dimension meet n₂ E [0, N₂ - 1]. In this case, $n = \left(n {modN}_{2}\right) + \left⌊\frac{n}{{N}_{2}}\right⌋ \times {N}_{2} = {n}_{1} \times {N}_{2} + {n}_{2}$, and $n = f \left({n}_{1}, {n}_{2}\right) , {n}_{2} = \left(n {modN}_{2}\right) , {n}_{1} = \left⌊\frac{n}{{N}_{2}}\right⌋$.

f(n₁, n₂) represents a function that maps n₁, n₂ to n.

Optionally, indexes n₀+n' of the N×P antenna ports are related to at least one of the following, where no is an integer, for example, n₀=3000:

the first dimension N₁ of the N antenna ports, the second dimension N₂ of the N antenna ports, the port indexes p = 3000 + n of the N antenna ports, a first extension factor K₁ of the N×P antenna ports, a second extension factor K₂ of the N×P antenna ports, a first spacing factor Y₁ of the N×P antenna ports, a second spacing factor Y₂ of the N×P antenna ports, and a weight coefficient (or a coefficient index j) in a j^{th} row of a weight matrix formed by the P weight coefficients, where n = 0,1, ..., 2N₁N₂ - 1.

n' = 0, 1, ... , NP - 1.

It may be understood that the weight matrix formed by the P weight coefficients may be a full rank matrix.

Optionally, there may be specifically the following several cases:

### Case 1:

Based on K₁ × K₂ coefficients, each port is extended to K₁ × K₂ ports adjacent to each other in two-dimensional coordinates (for example, as shown in FIG. 15A).

Based on the ports p=3000+n of the plurality of reference signals and the weight coefficient in the j^{th} row, extended ports p'=3000+n' may be obtained, where j = 0, 1, ... , K₁ × K₂ - 1. Two-dimensional port indexes corresponding to the ports p' = 3000 + n' meet the following relationship: $\left(n{′}_{1}, n{′}_{2}\right) = \left({n}_{1}\times {K}_{1}+\left⌊\frac{j}{{K}_{2}}\right⌋, {n}_{2}\times {K}_{2}+j {modK}_{2}\right)$.

It may be understood that, it is assumed herein that the coefficient j first corresponds to the second dimension (the second dimension after extension is K₂ × N₂), and then corresponds to the first dimension (the first dimension after extension is K₁ × N₁).

It may be understood that, in another implementation, the coefficient j may first correspond to the first dimension, and then correspond to the second dimension, and a corresponding manner is correspondingly adjusted to: $\left(n{′}_{1}, n{′}_{2}\right) = \left({n}_{1}\times {K}_{1}+j {modK}_{1}, {n}_{2}\times {K}_{2}+\left⌊\frac{j}{{K}_{1}}\right⌋\right)$ .

Without loss of generality, it is assumed in the following that the coefficient j first corresponds to the second dimension, and then corresponds to the first dimension.

In this case, n' in the extended ports p'=3000+n' may be: $n ′ = g \left(n{′}_{1},n{′}_{2}\right) = n {′}_{1} \times {K}_{2} \times {N}_{2} + n {′}_{2} = \left({n}_{1}\times {K}_{1}+\left⌊\frac{j}{{K}_{2}}\right⌋\right) \times {K}_{2} \times {N}_{2} + \left({n}_{2}\times {K}_{2}+j {modK}_{2}\right) ; and n ′ = \left(\begin{matrix}\left⌊\frac{n}{{N}_{2}}\right⌋ \times \\ {K}_{1} + \left⌊\frac{j}{{K}_{2}}\right⌋\end{matrix}\right) \times {K}_{2} \times {N}_{2} + \left(\left(n {modN}_{2}\right)\times {K}_{2}+j {modK}_{2}\right) .$

g(n'₁, n'₂) represents a function that maps n'₁, n'₂ to n', mod represents a remainder obtained by performing a division operation on two numerical expressions, └ ┘ represents rounding down, n'₁ represents port indexes of the N×P antenna ports in the first dimension, n'₂ represents port indexes of the N×P antenna ports in the second dimension, and mod represents a remainder obtained by performing a division operation on two numerical expressions.

### Case 2:

Based on K₁ × K₂ coefficients, each port is extended to K₁ × K₂ ports that are spaced in two-dimensional coordinates (for example, as shown in FIG. 15B), where a spacing in the first dimension is Y₁, and a spacing in the second dimension is Y₂.

In this case, based on the ports p = 3000 + n of the plurality of reference signals and the weight coefficient in the j^{th} row, extended ports p'=3000+n' may be obtained, where j = 0, 1, ..., K₁ × K₂ - 1. Two-dimensional port indexes corresponding to the ports p' = 3000 + n' meet the following relationship: $\left(n{′}_{1}, n{′}_{2}\right) = \left(\left⌊\frac{{n}_{1}}{{N}_{1}}\right⌋\times \left({N}_{1}\times {K}_{1}\right)+\left({n}_{1}-\left⌊\frac{{n}_{1}}{{N}_{1}}\right⌋\times {N}_{1}\right)+\left⌊\frac{j}{{K}_{2}}\right⌋\times {Y}_{1}, {n}_{2}+\left(j {modK}_{2}\right)\times {Y}_{2}\right)$ .

It may be understood that, it is assumed herein that the coefficient j first corresponds to the second dimension (the second dimension after extension is K₂ × N₂), and then corresponds to the first dimension (the first dimension after extension is K₁ × N₁).

It may be understood that, in another implementation, the coefficient j may first correspond to the first dimension, and then correspond to the second dimension, and a corresponding manner is correspondingly adjusted to: $\left(n{′}_{1},n{′}_{2}\right) = \left(\left⌊\frac{{n}_{1}}{{N}_{1}}\right⌋\times \left({N}_{1}\times {K}_{1}\right)+\left({n}_{1}-\left⌊\frac{{n}_{1}}{{N}_{1}}\right⌋\times {N}_{1}\right)+\left(j {modK}_{1}\right)\times {Y}_{1},{n}_{2}+\left⌊\frac{j}{{K}_{1}}\right⌋\times {Y}_{2}\right)$ .

Without loss of generality, it is assumed in the following that the coefficient j first corresponds to the second dimension, and then corresponds to the first dimension.

In this case, n' in the extended ports p'=3000+n' may be: $n ′ = g \left(n{′}_{1},n{′}_{2}\right) = n {′}_{1} \times {K}_{2} \times {N}_{2} + n {′}_{2} = \left(\left.\left(\left⌊\frac{{n}_{1}}{{N}_{1}}\right⌋\times \left({N}_{1}\times {K}_{1}\right)+\left({n}_{1}-\left⌊\frac{{n}_{1}}{{N}_{1}}\right⌋\times {N}_{1}\right)+\left⌊\frac{j}{{K}_{2}}\right⌋\times {Y}_{1}\right)\times {K}_{2}\times {N}_{2}\right)+\left(\begin{matrix}{n}_{2} + \\ j {modK}_{2}\end{matrix}\right)\times {Y}_{2}\right) ; and$ $n ′ = \left(\left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+\left⌊\frac{j}{{K}_{2}}\right⌋\times {Y}_{1}\right)\times {K}_{2}\times {N}_{2}\right) + \left(\left(n {modN}_{2}\right)+\left(j {modK}_{2}\right)\times {Y}_{2}\right) .$

g(n'₁, n'₂) represents a function that maps n'₁, n'₂ to n', n'₁ represents port indexes of the N×P antenna ports in the first dimension, n'₂ represents port indexes of the N×P antenna ports in the second dimension, mod represents a remainder obtained by performing a division operation on two numerical expressions, and └ ┘ represents rounding down. Y₁ represents the number of spaced columns in the first dimension after the N antenna ports are extended to the N×P antenna ports, Y₂ represents the number of spaced rows in the second dimension after the N antenna ports are extended to the N×P antenna ports, Y₁ ≥ 2, and Y₂ ≥ 2.

### Case 3:

Based on K₁ × K₂ coefficients, in two-dimensional coordinates, each port is extended to K₁ adjacent ports in the first dimension (as shown in FIG. 15C), and each port is extended to K₂ spaced ports in the second dimension (as shown in FIG. 15C), where a spacing in the second dimension is Y₂.

In this case, based on the ports p = 3000 + n of the plurality of reference signals and the weight coefficient in the j^{th} row, extended ports p'=3000+n' may be obtained, where j = 0, 1, ..., K₁ × K₂ - 1. Two-dimensional port indexes corresponding to the ports p' = 3000 + n' meet the following relationship: $\left(n{′}_{1}, n{′}_{2}\right) = \left({n}_{1}\times {K}_{1}+\left⌊\frac{j}{{K}_{2}}\right⌋, {n}_{2}+\left(j {modK}_{2}\right)\times {Y}_{2}\right)$ .

It may be understood that, it is assumed herein that the coefficient j first corresponds to the second dimension (the second dimension after extension is K₂ × N₂), and then corresponds to the first dimension (the first dimension after extension is K₁ × N₁).

It may be understood that, in another implementation, the coefficient j may first correspond to the first dimension, and then correspond to the second dimension, and a corresponding manner is correspondingly adjusted to: $\left(n{′}_{1}, n{′}_{2}\right) = \left({n}_{1}\times {K}_{1}+j {modK}_{1}, {n}_{2}+\left⌊\frac{j}{{K}_{1}}\right⌋\times {Y}_{2}\right)$ .

Without loss of generality, it is assumed in the following that the coefficient j first corresponds to the second dimension, and then corresponds to the first dimension.

In this case, n' in the extended ports p'=3000+n' may be: $n ′ = g \left(n{′}_{1}, n{′}_{2}\right) = n {′}_{1} \times {K}_{2} \times {N}_{2} + n {′}_{2} = \left({n}_{1}\times {K}_{1}+\left⌊\frac{j}{{K}_{2}}\right⌋\right) \times {K}_{2} \times {N}_{2} + \left({n}_{2}+{Y}_{2}\times \left(j {modK}_{2}\right)\right) ;$ and $n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+{Y}_{2}\times \left(j {modK}_{2}\right)\right) .$

g(n'₁, n'₂) represents a function that maps n'₁, n'₂ to n', n'₁ represents port indexes of the N×P antenna ports in the first dimension, n'₂ represents port indexes of the N×P antenna ports in the second dimension, mod represents a remainder obtained by performing a division operation on two numerical expressions, and └ ┘ represents rounding down. Y₂ represents the number of spaced rows in the second dimension after the N antenna ports are extended to the N×P antenna ports, and Y₂ ≥ 2.

### Case 4:

Based on K₁ × K₂ coefficients, in two-dimensional coordinates, each port is extended to K₁ spaced ports in the first dimension (as shown in FIG. 15D), and each port is extended to K₂ adjacent ports in the second dimension (as shown in FIG. 15D), where a spacing in the first dimension is Y₁.

In this case, based on the ports p=3000+n of the plurality of reference signals and the weight coefficient in the j^{th} row, extended ports p'=3000+n' may be obtained, where j = 0, 1, ..., K₁ × K₂ - 1. Two-dimensional port indexes corresponding to the ports n' meet the following relationship: $\left(n{′}_{1}, n{′}_{2}\right) = \left(\left⌊\frac{{n}_{1}}{{N}_{1}}\right⌋\times \left({N}_{1}\times {K}_{1}\right)+\left({n}_{1}-\left⌊\frac{{n}_{1}}{{N}_{1}}\right⌋\times {N}_{1}\right)+{Y}_{1}\times \left⌊\frac{j}{{K}_{2}}\right⌋, {n}_{2}\times {K}_{2}+j {modK}_{2}\right)$ .

It may be understood that, it is assumed herein that the coefficient j first corresponds to the second dimension (the second dimension after extension is K₂ × N₂), and then corresponds to the first dimension (the first dimension after extension is K₁ × N₁).

It may be understood that, in another implementation, the coefficient j may first correspond to the first dimension, and then correspond to the second dimension, and a corresponding manner is correspondingly adjusted to: $\left(n{′}_{1},n{′}_{2}\right) = \left(\left⌊\frac{{n}_{1}}{{N}_{1}}\right⌋\times \left({N}_{1}\times {K}_{1}\right)+\left({n}_{1}-\left⌊\frac{{n}_{1}}{{N}_{1}}\right⌋\times {N}_{1}\right)+{Y}_{1}\times \left(j {modK}_{1}\right),{n}_{2}\times {K}_{2}+\left⌊\frac{j}{{K}_{1}}\right⌋\right)$ *.*

Without loss of generality, it is assumed in the following that the coefficient j first corresponds to the second dimension, and then corresponds to the first dimension.

In this case, n' in the extended ports p'=3000+n' may be: $n ′ = g \left(n{′}_{1},n{′}_{2}\right) = n {′}_{1} \times {K}_{2} \times {N}_{2} + n {′}_{2} = \left(\left⌊\frac{{n}_{1}}{{N}_{1}}\right⌋\times \left({N}_{1}\times {K}_{1}\right)+\left({n}_{1}-\left⌊\frac{{n}_{1}}{{N}_{1}}\right⌋\times {N}_{1}\right)+{Y}_{1}\times \left⌊\frac{j}{{K}_{2}}\right⌋\right) \times {K}_{2} \times {N}_{2} + \left(\begin{matrix}{n}_{2} \times {K}_{2} + \\ j {modK}_{2}\end{matrix}\right) ; and$ $n ′ = \left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+{Y}_{1}\times \left⌊\frac{j}{{K}_{2}}\right⌋\right) \times {K}_{2} \times {N}_{2} + \left(\left(n {modN}_{2}\right)\times {K}_{2}+\left(j {modK}_{2}\right)\right) .$

g(n'₁, n'₂) represents a function that maps n'₁, n'₂ to n', n'₁ represents port indexes of the N×P antenna ports in the first dimension, n'₂ represents port indexes of the N×P antenna ports in the second dimension, mod represents a remainder obtained by performing a division operation on two numerical expressions, and └ ┘ represents rounding down. Y₁ represents the number of spaced columns in the first dimension after the N antenna ports are extended to the N×P antenna ports, and Y₁ ≥ 2.

It may be understood that the number of resources, each resource of N = 2 × N₁ × N₂ ports, ports n₁ that are in the first dimension in two polarization directions and that meet n₁ ∈ [0, N₁ - 1], and ports that are in the second dimension and that meet n₂ ∈ [0, 2N₂ - 1]: $n = \left(n {modN}_{1}\right) + \left⌊\frac{n}{{N}_{1}}\right⌋ \times {N}_{1} = {n}_{1} + {n}_{2} \times {N}_{1} ;$ and $n = f \left({n}_{1}, {n}_{2}\right) , {n}_{2} = \left⌊\frac{n}{{N}_{1}}\right⌋ , {n}_{1} = \left(n {modN}_{1}\right) .$

Specifically, corresponding extension may be performed according to the foregoing case 1 to case 4. Details are not described herein again.

Optionally, in the foregoing cases, N₁ may be an integer multiple of Y₁, for example, N₁ = Y₁ × s, where s is an integer, for example, s=2, 3, 4, or 8.

Optionally, in the foregoing cases, N₂ may be an integer multiple of Y₂, for example, N₂ = Y₂ × s, where s is an integer, for example, s=2, 3, or 4.

For example, it is assumed that the number of transceiver channels (TRX) is 128, single polarization is 64 TRXs. As shown in the arrangement manner in FIG. 15E, a corresponding arrangement manner is 16 in the horizontal direction and 4 in the vertical direction, and the number r of receive antennas is 4.

Channel coefficients corresponding to resources CRI #0, CRI #1, CRI #2, and CRI #3 received by the terminal are [G₀]_{32×4}, [G₁]_{32×4}, [G₂]_{32×4}, and [G₃]_{32×4} respectively. A channel of each resource before dimension reduction is [H]_{128×4}, where 128 is the number of transceiver channels (the number of TRXs), and 4 is the number of receive antennas. A specific form is as follows: ${\left[H\right]}_{128 \times 4} = \left[\begin{matrix}{h}_{0 , 0} & {h}_{0 , 1} & {h}_{0 , 2} & {h}_{0 , 3} \\ {h}_{1 , 0} & {h}_{1 , 1} & {h}_{1 , 1} & {h}_{1 , 1} \\ {h}_{2 , 0} & {h}_{2 , 1} & {h}_{2 , 1} & {h}_{2 , 1} \\ {h}_{3 , 0} & {h}_{3 , 1} & {h}_{3 , 1} & {h}_{3 , 1}\end{matrix}\right] .$

h_{0,0} represents a channel obtained by a receive antenna (r=0) of the terminal from 32 TRXs in 128 TRXs, and is equivalent to a channel obtained by 16 TRXs in 64 TRXs in single polarization.

The port is extended by four times in the vertical direction. Ports on a CRI #0 resource are sent from four groups of TRXs. A first group is TRX [0, 4, 8, 12, 16, 20, 24, 28, 32, 36, 40, 44, 48, 52, 56, 60], and a channel coefficient h_{0,0} is obtained. A second group is TRX [1, 5, 9, 13, 17, 21, 25, 29, 33, 37, 41, 45, 49, 53, 57, 61], and a channel coefficient h_{1,0} is obtained. The rest may be deduced by analogy. The CRI #0, CRI #1, CRI #2, and CRI #3 resources are sent in different time-frequency domains. It should be noted that, an objective herein is to solve a channel [H]_{128×4} before dimension reduction based on channel information [G₀]_{32×4}, [G₁]_{32×4}, [G₂]_{32×4}, and [G₃]_{32×4} corresponding to four resources obtained by the terminal. In this way, 4×32=128 antenna ports can actually be obtained through solving based on 32 antenna ports of each of the original four resources.

In this application, an example in which the number of ports corresponding to each reference signal is the same is used. In practice, the number of ports may be any value, and this does not constitute any limitation.

Based on the foregoing description, the following describes how to deduce a mapping relationship between 32 ports of each of the four resources and 128 antenna ports after port extension.

***φ*₀** = [*φ*_{0,0}*, φ*_{0,1}*, φ*_{0,2}, *φ*_{0,3}], ***φ*₁** = [*φ*_{1,0}, *φ*_{1,1}, *φ*_{1,2}, *φ*_{1,3}], ***φ*₂** = [*φ*_{2,0}, *φ*_{2,1}, *φ*_{2,2}, *φ*_{2,3}] , and ***φ*₃** = [*φ*_{3,0}, *φ*_{3,1}, *φ*_{3,2}, *φ*_{3,3}] represent weight coefficients for sending signals on transceiver channels on the four resources. A channel coefficient of each port n of each resource received by each receive antenna r of the terminal is described as follows. n' = f(n,j) corresponding to a TRX (which may also be understood as a port index after extension, and may correspond to the foregoing four cases) represents a mapping relationship between a port n on the resource, a weight coefficient j, and a port n' after resource extension. For details, refer to the function represented by f(n₁, n₂). Details are not described herein again. Specifically, n' = f(n,j) may be as follows:

A channel coefficient corresponding to the CRI #0 resource received by the terminal is: ***G*₀**[*n, r*] *= φ*_{0,0}***H***[*f*(n, 0), r] + *φ*_{0,1}***H***[*f*(n, 1), *r*]+*φ*_{0,2}***H***[*f*(n, 2), r] + *φ*_{0,3}***H***[*f*(*n,* 3), *r].*

A channel coefficient corresponding to the CRI #1 resource received by the terminal is: ***G*₁**[*n, r*] *= φ*_{1,0}***H***[*f*(*n,* 0), r] *+ φ*_{1,1}***H***[*f*(*n,* 1), *r*]+*φ*_{1,2}***H***[*f*(n, 2), *r*] + *φ*_{1,3}***H***[*f*(*n,* 3), *r].*

A channel coefficient corresponding to the CRI #2 resource received by the terminal is: ***G*₂**[*n, r*] *= φ*_{2,0}***H***[*f*(*n,* 0), *r*] + *φ*_{2,1}***H***[*f*(n, 1), *r*]+*φ*_{2,2}***H***[*f*(*n,* 2), r] + *φ*_{2,3}***H***[*f*(n, 3), *r].*

A channel coefficient corresponding to the CRI #3 resource received by the terminal is: ***G*₃**[*n, r*] *= φ*_{3,0}***H***[*f*(*n,* 0), r] + *φ*_{3,1}***H***[*f*(n, 1), *r*]+*φ*_{3,2}***H***[*f*(n, 2), *r*] + *φ*_{3,3}***H***[*f*(n, 3), *r*].

The foregoing relationship may be further represented as follows: $\left[\begin{matrix}{G}_{0} \left[n, r\right] \\ {G}_{1} \left[n, r\right] \\ {G}_{2} \left[n, r\right] \\ {G}_{3} \left[n, r\right]\end{matrix}\right] = \left[\begin{matrix}{φ}_{0 , 0} , {φ}_{0 , 1} , {φ}_{0 , 2} , {φ}_{0 , 3} \\ {φ}_{1 , 0} , {φ}_{1 , 1} , {φ}_{1 , 2} , {φ}_{1 , 3} \\ {φ}_{2 , 0} , {φ}_{2 , 1} , {φ}_{2 , 2} , {φ}_{2 , 3} \\ {φ}_{3 , 0} , {φ}_{3 , 1} , {φ}_{3 , 2} , {φ}_{3 , 3}\end{matrix}\right] \left[\begin{matrix}H \left[f\left(n, 0\right),r\right] \\ H \left[f\left(n, 1\right),r\right] \\ H \left[f\left(n, 2\right),r\right] \\ H \left[f\left(n, 3\right),r\right]\end{matrix}\right] .$

A meaning represented by $\left[\begin{matrix}{φ}_{0 , 0} , {φ}_{0 , 1} , {φ}_{0 , 2} , {φ}_{0 , 3} \\ {φ}_{1 , 0} , {φ}_{1 , 1} , {φ}_{1 , 2} , {φ}_{1 , 3} \\ {φ}_{2 , 0} , {φ}_{2 , 1} , {φ}_{2 , 2} , {φ}_{2 , 3} \\ {φ}_{3 , 0} , {φ}_{3 , 1} , {φ}_{3 , 2} , {φ}_{3 , 3}\end{matrix}\right]$ is the same as a meaning represented by each weight coefficient in Table 7 described above. For details, refer to descriptions in Table 7. Details are not described herein again. Specifically, *φ*_{0,0}*, φ*_{0,1}, *φ*_{0,2}, *φ*_{0,3} *=* [+1, +1, +1, +1,], *φ*_{1,0}, *φ*_{1,1}*, φ*_{1,2}, *φ*_{1,3} *=* [+1, -1, +1, -1,], ...

Further, the terminal may obtain the following through de-orthogonalization: ${\left[\begin{matrix}{φ}_{0 , 0} , {φ}_{0 , 1} , {φ}_{0 , 2} , {φ}_{0 , 3} \\ {φ}_{1 , 0} , {φ}_{1 , 1} , {φ}_{1 , 2} , {φ}_{1 , 3} \\ {φ}_{2 , 0} , {φ}_{2 , 1} , {φ}_{2 , 2} , {φ}_{2 , 3} \\ {φ}_{3 , 0} , {φ}_{3 , 1} , {φ}_{3 , 2} , {φ}_{3 , 3}\end{matrix}\right]}^{- 1} \left[\begin{matrix}{G}_{0} \left[n, r\right] \\ {G}_{1} \left[n, r\right] \\ {G}_{2} \left[n, r\right] \\ {G}_{3} \left[n, r\right]\end{matrix}\right] = \left[\begin{matrix}H \left[f\left(n, 0\right),r\right] \\ H \left[f\left(n, 1\right),r\right] \\ H \left[f\left(n, 2\right),r\right] \\ H \left[f\left(n, 3\right),r\right]\end{matrix}\right] .$

Because the coefficient matrix $\left[\begin{matrix}{φ}_{0 , 0} , {φ}_{0 , 1} , {φ}_{0 , 2} , {φ}_{0 , 3} \\ {φ}_{1 , 0} , {φ}_{1 , 1} , {φ}_{1 , 2} , {φ}_{1 , 3} \\ {φ}_{2 , 0} , {φ}_{2 , 1} , {φ}_{2 , 2} , {φ}_{2 , 3} \\ {φ}_{3 , 0} , {φ}_{3 , 1} , {φ}_{3 , 2} , {φ}_{3 , 3}\end{matrix}\right]$ is a unitary matrix, that is, ${\left[\begin{matrix}{φ}_{0 , 0} , {φ}_{0 , 1} , {φ}_{0 , 2} , {φ}_{0 , 3} \\ {φ}_{1 , 0} , {φ}_{1 , 1} , {φ}_{1 , 2} , {φ}_{1 , 3} \\ {φ}_{2 , 0} , {φ}_{2 , 1} , {φ}_{2 , 2} , {φ}_{2 , 3} \\ {φ}_{3 , 0} , {φ}_{3 , 1} , {φ}_{3 , 2} , {φ}_{3 , 3}\end{matrix}\right]}^{- 1} = {\left[\begin{matrix}{φ}_{0 , 0} , {φ}_{0 , 1} , {φ}_{0 , 2} , {φ}_{0 , 3} \\ {φ}_{1 , 0} , {φ}_{1 , 1} , {φ}_{1 , 2} , {φ}_{1 , 3} \\ {φ}_{2 , 0} , {φ}_{2 , 1} , {φ}_{2 , 2} , {φ}_{2 , 3} \\ {φ}_{3 , 0} , {φ}_{3 , 1} , {φ}_{3 , 2} , {φ}_{3 , 3}\end{matrix}\right]}^{T}$ , channels of extended ports may be solved, and are specifically represented as follows: $\left[\begin{matrix}H \left[f\left(n, 0\right),r\right] \\ H \left[f\left(n, 1\right),r\right] \\ H \left[f\left(n, 2\right),r\right] \\ H \left[f\left(n, 3\right),r\right]\end{matrix}\right] = \left[\begin{matrix}{φ}_{0 , 0} , {φ}_{1 , 0} , {φ}_{2 , 0} , {φ}_{3 , 0} \\ {φ}_{0 , 1} , {φ}_{1 , 1} , {φ}_{2 , 1} , {φ}_{3 , 1} \\ {φ}_{0 , 2} , {φ}_{1 , 2} , {φ}_{2 , 2} , {φ}_{3 , 2} \\ {φ}_{0 , 3} , {φ}_{1 , 3} , {φ}_{2 , 3} , {φ}_{3 , 3}\end{matrix}\right] \left[\begin{matrix}{G}_{0} \left[n, r\right] \\ {G}_{1} \left[n, r\right] \\ {G}_{2} \left[n, r\right] \\ {G}_{3} \left[n, r\right]\end{matrix}\right]$ $H \left[f\left(n, 0\right),r\right] = {φ}_{0 , 0} {G}_{0} \left[n, r\right] + {φ}_{1 , 0} {G}_{1} \left[n, r\right] + {φ}_{2 , 0} {G}_{2} \left[n, r\right] + {φ}_{3 , 0} {G}_{3} \left[n, r\right]$ $H \left[f\left(n, 1\right),r\right] = {φ}_{0 , 1} {G}_{0} \left[n, r\right] + {φ}_{1 , 1} {G}_{1} \left[n, r\right] + {φ}_{2 , 1} {G}_{2} \left[n, r\right] + {φ}_{3 , 1} {G}_{3} \left[n, r\right]$ $H \left[f\left(n, 2\right),r\right] = {φ}_{0 , 2} {G}_{0} \left[n, r\right] + {φ}_{1 , 2} {G}_{1} \left[n, r\right] + {φ}_{2 , 2} {G}_{2} \left[n, r\right] + {φ}_{3 , 2} {G}_{3} \left[n, r\right]$ $H \left[f\left(n, 3\right),r\right] = {φ}_{0 , 3} {G}_{0} \left[n, r\right] + {φ}_{1 , 3} {G}_{1} \left[n, r\right] + {φ}_{2 , 3} {G}_{2} \left[n, r\right] + {φ}_{3 , 3} {G}_{3} \left[n, r\right] .$

A meaning represented by $\left[\begin{matrix}{φ}_{0 , 0} , {φ}_{1 , 0} , {φ}_{2 , 0} , {φ}_{3 , 0} \\ {φ}_{0 , 1} , {φ}_{1 , 1} , {φ}_{2 , 1} , {φ}_{3 , 1} \\ {φ}_{0 , 2} , {φ}_{1 , 2} , {φ}_{2 , 2} , {φ}_{3 , 3} \\ {φ}_{0 , 3} , {φ}_{1 , 3} , {φ}_{2 , 3} , {φ}_{3 , 3}\end{matrix}\right]$ is the same as a meaning represented by the weight coefficient described in FIG. 15A to FIG. 15F. For details, refer to descriptions of the weight coefficient in FIG. 15A to FIG. 15F. Details are not described herein again. f(n,j) in H[f(n,j), r] represents an index of an extended port. Details are not described herein again.

A corresponding relationship (a mapping relationship between a port on each resource and an extended port) obtained through solving is equivalent to obtaining channel coefficients of 128 ports, and obtaining corresponding measurement information (3I) through measurement.

Therefore, it can be learned that when *φ*_{0,0}, *φ*_{0,1}, *φ*_{0,2}, *φ*_{0,3} = [+1,0,0,0], *φ*_{1,0}, *φ*_{1,1}, *φ*_{1,2}, *φ*_{1,3} = [0, +1,0,0], ...

The extended port may be directly simplified, as shown in the following: H[f(n,0), r] = G₀[n, r] H[f(n,1), r] = G₁[n, r] H[f(n, 2), r] = G₂[n, r] H[f(n, 3), r] = G₃[n, r].

Therefore, it can be learned that, after the port is extended by two times in both the horizontal direction and the vertical direction, it is equivalent to extending the original 32 ports to 128 ports. A specific mapping diagram is shown in FIG. 15F.

The foregoing describes in detail the methods provided in embodiments of this application. The following provides an apparatus for implementing any one of the methods in embodiments of this application. For example, an apparatus including a unit (or means) for implementing steps performed by a device in any one of the foregoing methods is provided.

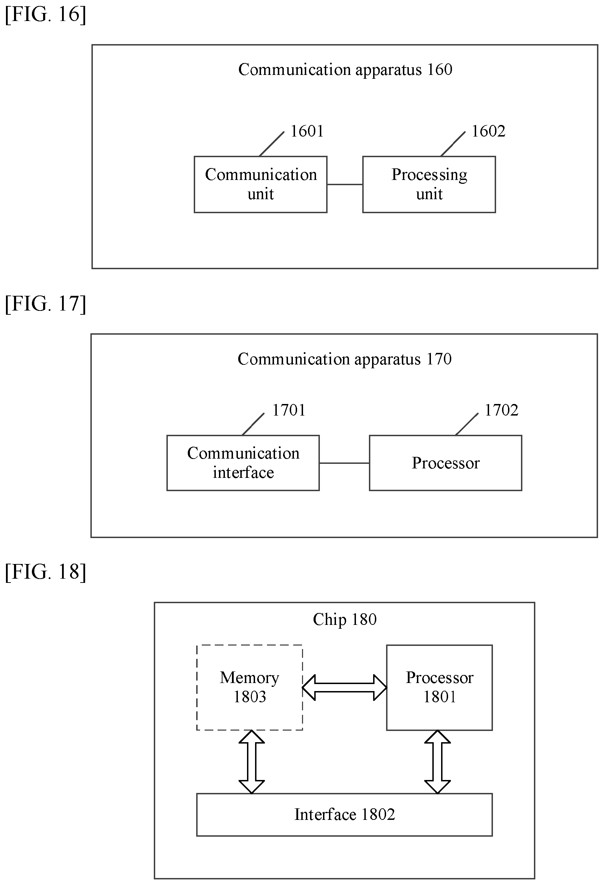

FIG. 16 is a diagram of a structure of a communication apparatus according to an embodiment of this application.

As shown in FIG. 16, a communication apparatus 160 may include a communication unit 1601 and a processing unit 1602. The communication unit 1601 and the processing unit 1602 may be software, hardware, or a combination of software and hardware.

The communication unit 1601 may implement a sending function and/or a receiving function, and the communication unit 1601 may also be described as a transceiver unit. The communication unit 1601 may alternatively be a unit that integrates an obtaining unit and a sending unit. The obtaining unit is configured to implement a receiving function, and the sending unit is configured to implement a sending function. Optionally, the communication unit 1601 may be configured to receive information sent by another apparatus, and may be further configured to send information to the another apparatus.

In a possible design, the communication apparatus 160 may correspond to the network device in the method embodiment in FIG. 5. For example, the communication apparatus 160 may be the network device, or may be a chip in the network device. The communication apparatus 160 may include units configured to perform operations performed by the network device in the foregoing method embodiment shown in FIG. 5. In addition, the units in the communication apparatus 160 are separately configured to implement the operations performed by the network device in the foregoing method embodiment shown in FIG. 5. The units are described as follows:

The communication unit 1601 is configured to send P reference signals to a terminal device, where each of the P reference signals corresponds to N antenna ports, the P reference signals are used to determine first channel information and/or second channel information, P is an integer greater than 1, N is an integer greater than 1, the first channel information corresponds to one or more reference signals in the P reference signals, the second channel information corresponds to N×P antenna ports, and the N×P antenna ports correspond to the P reference signals.

The communication unit 1601 is further configured to receive the first channel information and/or the second channel information from the terminal device.

In a possible implementation, the apparatus further includes:
the processing unit 1602, configured to generate the P reference signals.

For steps performed by the communication unit 1601 and the processing unit 1602 in this design, refer to the implementations corresponding to the network device in the method embodiment shown in FIG. 5.

For technical effect brought by the implementations performed by the communication unit 1601 and the processing unit 1602 in this design, refer to descriptions of technical effect of the method embodiment shown in FIG. 5.

In another possible design, the communication apparatus 160 may correspond to the terminal device in the method embodiment shown in FIG. 5. For example, the communication apparatus 160 may be the terminal device, or may be a chip in the terminal device. The communication apparatus 160 may include units configured to perform operations performed by the terminal device in the foregoing method embodiment shown in FIG. 5. In addition, the units in the communication apparatus 160 are separately configured to implement the operations performed by the terminal device in the foregoing method embodiment shown in FIG. 5. The units are described as follows:

The communication unit 1601 is configured to receive P reference signals from a network device, where each of the P reference signals corresponds to N antenna ports, P is an integer greater than 1, and N is an integer greater than 1.

The processing unit 1602 is configured to measure one or more reference signals in the P reference signals to obtain first channel information and/or second channel information, where the first channel information corresponds to the one or more reference signals in the P reference signals, the second channel information corresponds to N×P antenna ports, and the N×P antenna ports correspond to the P reference signals.

The communication unit 1601 is further configured to send the first channel information and/or the second channel information to the network device.

For steps performed by the communication unit 1601 and the processing unit 1602 in this design, refer to the implementations corresponding to the terminal device in the method embodiment shown in FIG. 5.

For technical effect brought by the implementations performed by the communication unit 1601 and the processing unit 1602 in this design, refer to descriptions of technical effect of the method embodiment shown in FIG. 5.

According to this embodiment of this application, the units in the apparatus shown in FIG. 16 may be separately or all combined into one or more other units, or one unit (or more units) in the apparatus may be further split into a plurality of smaller functional units. In this way, a same operation can be implemented without affecting implementation of technical effect of embodiments of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that, for implementations of the units, refer to corresponding descriptions of the method embodiment shown in FIG. 5.

In the communication apparatus 160 described in FIG. 16, compared with obtaining channel information corresponding to any one or more reference signals in the P reference signals, when the terminal device obtains, after performing dynamic CSI measurement, channel information corresponding to the N×P antenna ports corresponding to the P reference signals, the terminal device can obtain more channel information. This is equivalent to that the terminal device can support CSI measurement performed on CSI-RSs sent in a scenario with a large number of antenna ports, thereby improving CSI measurement performance.

FIG. 17 is a diagram of a structure of a communication apparatus according to an embodiment of this application.

It should be understood that a communication apparatus 170 shown in FIG. 17 is merely an example. The communication apparatus in this embodiment of this application may further include another component, or may include a component with a function similar to that of each component in FIG. 17, or does not necessarily include all components in FIG. 17.

The communication apparatus 170 includes a communication interface 1701 and at least one processor 1702.

The communication apparatus 170 may correspond to any network element or device in a network device or a terminal device. The communication interface 1701 is configured to receive/send a signal, and the at least one processor 1702 executes program instructions, to enable the communication apparatus 170 to implement a corresponding procedure of a method performed by a corresponding device in the method embodiments.

In a possible design, the communication apparatus 170 may correspond to the network device in the method embodiment in FIG. 5. For example, the communication apparatus 170 may be the network device, or may be a chip in the network device. The communication apparatus 170 may include components configured to perform the operations performed by the network device in the method embodiments. In addition, the components in the communication apparatus 170 are separately configured to implement the operations performed by the network device in the method embodiments. Details may be as follows:
sending P reference signals to a terminal device, where each of the P reference signals corresponds to N antenna ports, the P reference signals are used to determine first channel information and/or second channel information, P is an integer greater than 1, N is an integer greater than 1, the first channel information corresponds to one or more reference signals in the P reference signals, the second channel information corresponds to N×P antenna ports, and the N×P antenna ports correspond to the P reference signals; and
receiving the first channel information and/or the second channel information from the terminal device.

In another possible design, the communication apparatus 170 may correspond to the terminal device in the method embodiment shown in FIG. 5. For example, the communication apparatus 170 may be the terminal device, or may be a chip in the terminal device. The communication apparatus 170 may include components configured to perform the operations performed by the terminal device in the method embodiments. In addition, the components in the communication apparatus 170 are separately configured to implement the operations performed by the terminal device in the method embodiments. Details may be as follows:
receiving P reference signals from a network device, where each of the P reference signals corresponds to N antenna ports, P is an integer greater than 1, and N is an integer greater than 1;
measuring one or more reference signals in the P reference signals, to obtain first channel information and/or second channel information, where the first channel information corresponds to the one or more reference signals in the P reference signals, the second channel information corresponds to N×P antenna ports, and the N×P antenna ports correspond to the P reference signals; and
sending the first channel information and/or the second channel information to the network device.

In the communication apparatus 170 described in FIG. 17, compared with obtaining the first channel information corresponding to any one or more reference signals in the P reference signals, when the terminal device obtains, after performing dynamic CSI measurement, the second channel information corresponding to the N×P antenna ports corresponding to the P reference signals, the terminal device can obtain more channel information. This is equivalent to that the terminal device can support CSI measurement performed on CSI-RSs sent in a scenario with a large number of antenna ports, thereby improving CSI measurement performance.

For a case in which the communication apparatus may be a chip or a chip system, refer to a diagram of a structure of a chip shown in FIG. 18.

As shown in FIG. 18, a chip 180 includes a processor 1801 and an interface 1802. There may be one or more processors 1801, and there may be a plurality of interfaces 1802. It should be noted that functions corresponding to the processor 1801 and the interface 1802 may be implemented by using a hardware design, a software design, or a combination of software and hardware. This is not limited herein.

Optionally, the chip 180 may further include a memory 1803, and the memory 1803 is configured to store necessary program instructions and data.

In this application, the processor 1801 may be configured to invoke, from the memory 1803, a program for implementing, on one or more devices or network elements in the network device and the terminal device, the communication method provided in one or more embodiments of this application, and execute instructions included in the program. The interface 1802 may be configured to output an execution result of the processor 1801. In this application, the interface 1802 may be specifically configured to output messages or information of the processor 1801.

For the communication method provided in one or more embodiments of this application, refer to the foregoing embodiment shown in FIG. 5. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM).

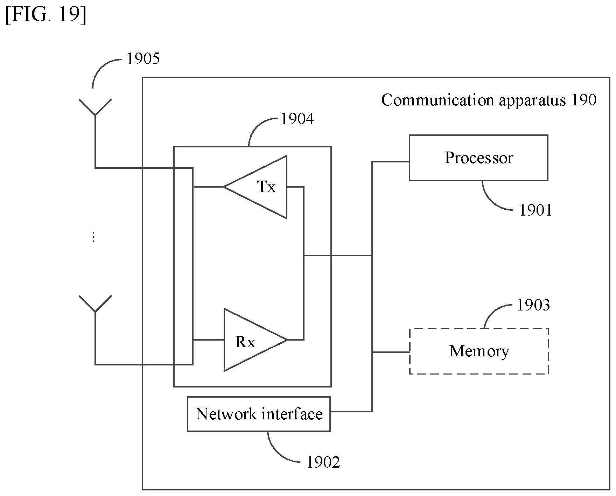

FIG. 19 is a diagram of a structure of a communication apparatus 190 in the foregoing embodiment according to an embodiment of this application. The communication apparatus 190 may be specifically the communication apparatus serving as the network device in the foregoing embodiment. In the example shown in FIG. 19, the network device is implemented as a network device (or a component in a network device). For a structure of the communication apparatus, refer to the structure shown in FIG. 19.

The communication apparatus 190 includes at least one processor 1901 and at least one network interface 1902. Further, optionally, the communication apparatus further includes at least one memory 1903, at least one transceiver 1904, and one or more antennas 1905. The processor 1901, the memory 1903, the transceiver 1904, and the network interface 1902 are connected to each other, for example, through a bus. In this embodiment of this application, a connection may include various types of interfaces, transmission lines, buses, or the like. This is not limited in this embodiment. The antenna 1905 is connected to the transceiver 1904. The network interface 1902 is configured to enable the communication apparatus to communicate with another communication device through a communication link. For example, the network interface 1902 may include a network interface between the communication apparatus and a core network device, for example, an S1 interface. The network interface may include a network interface between the communication apparatus and another communication apparatus (for example, another network device or core network device), for example, an X2 or Xn interface.

The processor 1901 is mainly configured to: process a communication protocol and communication data; and control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1901 in FIG. 19. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and the data. The memory 1903 may exist independently, and is connected to the processor 1901. Optionally, the memory 1903 may be integrated with the processor 1901, for example, integrated into a chip. The memory 1903 can store program code for executing the technical solutions in embodiments of this application, and the processor 1901 controls execution. Various types of executed computer program code may also be considered as a driver of the processor 1901.

FIG. 19 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1904 may be configured to support receiving or sending of a radio frequency signal between the communication apparatus and a terminal. The transceiver 1904 may be connected to the antenna 1905. The transceiver 1904 includes a transmitter Tx and a receiver Rx. Specifically, the one or more antennas 1905 may receive a radio frequency signal. The receiver Rx of the transceiver 1904 is configured to: receive the radio frequency signal from the antennas, convert the radio frequency signal into a digital baseband signal or a digital intermediate frequency signal, and provide the digital baseband signal or the digital intermediate frequency signal to the processor 1901, so that the processor 1901 performs further processing, for example, demodulation and decoding, on the digital baseband signal or the digital intermediate frequency signal. In addition, the transmitter Tx of the transceiver 1904 is further configured to: receive a modulated digital baseband signal or a digital intermediate frequency signal from the processor 1901, convert the modulated digital baseband signal or the digital intermediate frequency signal into a radio frequency signal, and send the radio frequency signal through the one or more antennas 1905. Specifically, the receiver Rx may selectively perform one-level or multi-level down mixing processing and analog-to-digital conversion processing on the radio frequency signal, to obtain the digital baseband signal or the digital intermediate frequency signal. A sequence of down mixing processing and analog-to-digital conversion processing may be adjusted. The transmitter Tx may selectively perform one-level or multi-level up mixing processing and digital-to-analog conversion processing on the modulated digital baseband signal or the digital intermediate frequency signal, to obtain the radio frequency signal. A sequence of up mixing processing and digital-to-analog conversion processing may be adjusted. The digital baseband signal and the digital intermediate frequency signal may be collectively referred to as digital signals.

The transceiver 1904 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver device, an input interface, a receiving circuit, or the like. The sending unit may be referred to as a transmitter device, a transmitter, a transmitting circuit, or the like.

It should be noted that, the communication apparatus 190 shown in FIG. 19 may be specifically configured to implement steps implemented by the network device in the foregoing method embodiments, and achieve technical effect corresponding to the network device. For a specific implementation of the communication apparatus 190 shown in FIG. 19, refer to descriptions in the foregoing method embodiments. Details are not described herein again.

According to the method provided in embodiments of this application, embodiments of this application further provide a computer-readable storage medium. The computer-readable storage medium stores a computer program. When the computer program is run on one or more processors, the method shown in FIG. 5 may be implemented.

According to the method provided in embodiments of this application, embodiments of this application further provide a computer program product. The computer program product includes a computer program. When the computer program is run on a processor, the method shown in FIG. 5 may be implemented.

Embodiments of this application further provide a system. The system includes at least one communication apparatus 160, communication apparatus 170, or chip 180, and is configured to perform steps performed by a corresponding device in any embodiment of FIG. 5.

Embodiments of this application further provide a system. The system includes a network device and a terminal device. The network device is configured to perform steps performed by the network device in any embodiment of FIG. 5, and the terminal device is configured to perform steps performed by the terminal device in any embodiment of FIG. 5.

Embodiments of this application further provide a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip. The processing apparatus may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the systems and methods described in this specification includes but is not limited to these and any memory of another proper type.

All or a part of the foregoing embodiments may be implemented by using software, hardware, firmware, or any combination thereof. When the foregoing embodiments are implemented by using software, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disc (solid state disc, SSD)), or the like.

The units in the foregoing apparatus embodiments completely correspond to the electronic device in the method embodiments, and corresponding modules or units perform corresponding steps. For example, a communication unit (transceiver) performs receiving or sending steps in the method embodiments, and steps other than the sending or receiving steps may be performed by a processing unit (processor). For a function of a specific unit, refer to a corresponding method embodiment. There may be one or more processors.

It may be understood that, in embodiments of this application, the electronic device may perform a part or all of the steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
sending P reference signals to a terminal device, wherein each of the P reference signals corresponds to N antenna ports, the P reference signals are used to determine first channel information and/or second channel information, P is an integer greater than 1, N is an integer greater than 1, the first channel information corresponds to one or more reference signals in the P reference signals, the second channel information corresponds to N×P antenna ports, and the N×P antenna ports correspond to the P reference signals; and
receiving the first channel information and/or the second channel information from the terminal device.

2. A communication method, comprising:
receiving P reference signals from a network device, wherein each of the P reference signals corresponds to N antenna ports, P is an integer greater than 1, and N is an integer greater than 1;
measuring one or more reference signals in the P reference signals to obtain first channel information and/or second channel information, wherein the first channel information corresponds to the one or more reference signals in the P reference signals, the second channel information corresponds to N×P antenna ports, and the N×P antenna ports correspond to the P reference signals; and
sending the first channel information and/or the second channel information to the network device.

3. The method according to claim 1 or 2, wherein there is a mapping relationship between the N×P antenna ports and the P reference signals, and the mapping relationship is determined by P weight coefficients corresponding to the P reference signals or channel state information-reference signal resource indicators CRIs of the P reference signals.

4. The method according to claim 3, wherein indexes of the N×P antenna ports are p'=3000+n', and n' is related to at least one of the following:
a first dimension N₁ of the N antenna ports, a second dimension N₂ of the N antenna ports, port indexes p = 3000 + n of the N antenna ports, a first extension factor K₁ of the N×P antenna ports, a second extension factor K₂ of the N×P antenna ports, a first spacing factor Y₁ of the N×P antenna ports, a second spacing factor Y₂ of the N×P antenna ports, a weight coefficient in a j^{th} row of a weight matrix formed by the P weight coefficients, a j^{th} weight coefficient in the P weight coefficients, or j is associated with the CRI, wherein n = 0, 1, ... , 2 × N₁ × N₂ - 1.

5. The method according to claim 4, wherein n' meets at least one of the following relationships:$n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+{K}_{2}\times j {modK}_{2}\right)$ ; or $\begin{matrix}n ′ = \left(\left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+\left⌊\frac{j}{{K}_{2}}\right⌋\times {Y}_{1}\right)\times {K}_{2}\times {N}_{2}\right) \\ + \left(\left(n {modN}_{2}\right)+\left(j {modK}_{2}\right)\times {Y}_{2}\right)\end{matrix}$ ; or $n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+{Y}_{2}\times \left(j {modK}_{2}\right)\right)$ ; or $n ′ = \left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+{Y}_{1}\times \left⌊\frac{j}{{K}_{2}}\right⌋\right) \times {K}_{2} \times {N}_{2} + \left(\begin{matrix}\left(n {modN}_{2}\right) \times {K}_{2} + \\ \left(j {modK}_{2}\right)\end{matrix}\right) , wherein$ mod represents a remainder obtained by performing a division operation on two numerical expressions, and └ ┘ represents rounding down.

6. The method according to claim 4, wherein n' meets at least one of the following relationships:$n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+\frac{{N}_{2}}{s}\times \left(j {modK}_{2}\right)\right)$ ; or $n ′ = \left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+\frac{{N}_{1}}{s}\times \left⌊\frac{j}{{K}_{2}}\right⌋\right) \times {K}_{2} \times {N}_{2} + \left(\begin{matrix}\left(n {modN}_{2}\right) \times {K}_{2} + \\ \left(j {modK}_{2}\right)\end{matrix}\right) , wherein$ s is an integer, mod represents a remainder obtained by performing a division operation on two numerical expressions, and └ ┘ represents rounding down.

7. The method according to claim 1 or 2, wherein a first dimension of the N antenna ports is N₁, and a second dimension of the N antenna ports is N₂, wherein N=2×N₁×N₂; and
a first dimension of the N×P antenna ports is K₁×N₁, and a second dimension of the N×P antenna ports is K₂×N₂, wherein K₁×K₂=P; or a first dimension of the N×P antenna ports is K₁×N₁, and a second dimension of the N×P antenna ports is N₂, wherein K₁=P; or
a first dimension of the N×P antenna ports is N₁, and a second dimension of the N×P antenna ports is K₂×N₂, wherein K₂=P; and
N₁ is the first dimension of the N antenna ports, N₂ is the second dimension of the N antenna ports, K₁ is a first extension factor of the N×P antenna ports, and K₂ is a second extension factor of the N×P antenna ports.

8. The method according to any one of claim 1, 2, or 7, wherein
K₁=2, and K₂=1; or
K₁=1, and K₂=2; or
K₁=4, and K₂=1; or
K₁=2, and K₂=2; or
K₁=1, and K₂=4; or
K₁=8, and K₂=1; or
K₁=4, and K₂=2; or
K₁=2, and K₂=4; or
K₁=1, and K₂=8, wherein
N₁ is the first dimension of the N antenna ports, N₂ is the second dimension of the N antenna ports, K₁ is the first extension factor of the N×P antenna ports, and K₂ is the second extension factor of the N×P antenna ports.

9. The method according to claim 8, wherein n' meets at least one of the following relationships:$n ′ = \left(\left⌊\frac{n}{{N}_{2}}\right⌋\times {K}_{1}+\left⌊\frac{j}{{K}_{2}}\right⌋\right) \times {K}_{2} \times {N}_{2} + \left(\left(n {modN}_{2}\right)+\frac{{N}_{2}}{s}\times \left(j {modK}_{2}\right)\right)$ ; or $n ′ = \left(\left⌊\frac{n}{{N}_{1} {N}_{2}}\right⌋\times \left({N}_{1}\times {K}_{1}\right)+\left(\left⌊\frac{n}{{N}_{2}}\right⌋-\left⌊\frac{n}{{N}_{1} {N}_{2}}\right⌋\times {N}_{1}\right)+\frac{{N}_{1}}{s}\times \left⌊\frac{j}{{K}_{2}}\right⌋\right) \times {K}_{2} \times {N}_{2} + \left(\begin{matrix}\left(n {modN}_{2}\right) \times {K}_{2} + \\ \left(j {modK}_{2}\right)\end{matrix}\right) , wherein$
s is an integer, mod represents a remainder obtained by performing a division operation on two numerical expressions, and └ ┘ represents rounding down;
K₁=2, and K₂=1; or
K₁=1, and K₂=2; or
K₁=4, and K₂=1; or
K₁=1, and K₂=4.

10. The method according to claim 1 or 2, wherein
when a number of the N×P antenna ports is 48, N₁=6, and N₂=4;
when a number of the N×P antenna ports is 64, N₁=8, and N₂=4; or N₁=16, and N₂=2; or
when a number of the N×P antenna ports is 128, N₁=8, and N₂=8; or N₁=16, and N₂=4, wherein
N₁ is a first dimension of the N×P antenna ports, and N₂ is a second dimension of the N×P antenna ports.

11. The method according to claim 1 or 2, wherein
P=2, K₁=2, and K₂=1; or
P=2, K₁=1, and K₂=2; or
P=4, K₁=4, and K₂=1; or
P=4, K₁=1, and K₂=4, wherein
K₁ is a first extension factor of the N×P antenna ports, and K₂ is a second extension factor of the N×P antenna ports.

12. The method according to any one of claims 4 to 11, wherein the second channel information is determined by using the following parameters: ${u}_{m} = \left\{\begin{matrix}\left[1 {e}^{\frac{j 2 πm}{{N}_{2} {O}_{2} {K}_{2}}} … {e}^{\frac{j 2 π \left({N}_{2}-1\right) m}{{N}_{2} {O}_{2} {K}_{2}}}\right] ; {N}_{2} > 1 ; \\ 1 ; {N}_{2} = 1\end{matrix}\right.$ and ${v}_{l , m} = \left[{u}_{m} {u}_{m}{e}^{\frac{j 2 πl}{{N}_{1} {O}_{1} {K}_{1}}} ⋯ {u}_{m}{e}^{\frac{j 2 π \left({N}_{1}-1\right) l}{{N}_{1} {O}_{1} {K}_{1}}}\right] ,$ wherein
l ∈ [0, N₁O₁K₁ - 1], m ∈ [0, N₂O₂K₂ - 1], uₘ represents a beam weight corresponding to a beam whose second dimension is m, v_{l,m} represents a beam weight corresponding to a beam whose first dimension is l and second dimension is m, O₁ represents an oversampling multiple in the first dimension, O₂ represents an oversampling multiple in the second dimension, and e is a natural constant.

13. The method according to any one of claims 3 to 11, wherein when P=2, a first weight coefficient in the P weight coefficients is (+1, +1), and a second weight coefficient in the P weight coefficients is (+1, -1); or
the first weight coefficient is (1, 0), and the second weight coefficient is (0, 1); or
the first weight coefficient is (1, i), and the second weight coefficient is (1, -i), wherein i is an imaginary unit; or
when P=4, a first weight coefficient in the P weight coefficients is (1, 0, 0, 0), a second weight coefficient in the P weight coefficients is (0, 1, 0, 0), a third weight coefficient in the P weight coefficients is (0, 0, 1, 0), and a fourth weight coefficient in the P weight coefficients is (0, 0, 0, 1).

14. The method according to any one of claims 1 to 13, wherein the first channel information is carried in first information, and the first information further comprises one or more first channel state information-reference signal resource indicators CRIs corresponding to the one or more reference signals in the P reference signals.

15. The method according to claim 14, wherein the second channel information is carried in second information, the second information further comprises a second CRI, and there is a mapping relationship between the second CRI and P first CRIs corresponding to the P reference signals.

16. The method according to any one of claims 4 to 11, wherein the first extension factor K₁ and/or the second extension factor K₂ are/is indicated by using first indication information sent by the network device to the terminal device.

17. The method according to any one of claims 4 to 11, wherein the first extension factor K₁ and/or the second extension factor K₂ are/is determined based on a reference signal measurement result of the terminal device, K₁ is less than or equal to a first value, K₂ is less than or equal to a second value, and the first value and/or the second value are/is indicated by using second indication information sent by the network device to the terminal device.

18. The method according to any one of claims 1 to 17, wherein the indexes of the N×P antenna ports are indicated by using third indication information sent by the network device to the terminal device in an arrangement order of first the second dimension and then the first dimension.

19. A communication apparatus, comprising a unit configured to perform the method according to any one of claims 1 to 18.

20. A communication apparatus, comprising a processor, wherein the processor is configured to perform the method according to any one of claims 1 to 18.

21. A communication apparatus, comprising a logic circuit and an interface, wherein the logic circuit is coupled to the interface; and
the interface is configured to input and/or output information, and the logic circuit is configured to perform the method according to any one of claims 1 to 18.

22. A computer-readable storage medium, wherein the computer-readable storage medium is configured to store a computer program, and when the computer program is executed, the method according to any one of claims 1 to 18 is performed.

23. A communication system, comprising a network device and a terminal device, wherein
the network device is configured to perform the method according to any one of claim 1 and claims 3 to 18, and the terminal device is configured to perform the method according to any one of claims 2 to 18.
